(19) Europäisches Patentamt
European Patent Office
Office européen des brevets

(11) Veröffentlichungsnummer: **0 003 585**
**B1**

(12) **EUROPÄISCHE PATENTSCHRIFT**

(45) Veröffentlichungstag der Patentschrift: **26.08.81**

(21) Anmeldenummer: **79100331.2**

(22) Anmeldetag: **05.02.79**

(51) Int. Cl.³: **C 07 D 471/22,** C 08 G 83/00, C 01 C 3/06, B 01 J 21/00, B 01 J 23/00, B 01 J 31/00, B 01 J 45/00, C 08 K 5/34, C 07 D 251/30, C 08 G 18/16

(54) **Stabilisierte Azulminsäuren, Verfahren zu ihrer Herstellung und ihre Verwendung.**

(30) Priorität: **14.02.78 DE 2806019**

(43) Veröffentlichungstag der Anmeldung: **22.08.79 Patentblatt 79/17**

(45) Bekanntmachung des Hinweises auf die Patenterteilung: **26.08.81 Patentblatt 81/34**

(84) Benannte Vertragsstaaten: **BE CH DE FR GB IT NL SE**

(56) Entgegenhaltungen: **GB - A - 845 363**

(73) Patentinhaber: **BAYER AG**
**Zentralbereich Patente, Marken und Lizenzen**
**D-5090 Leverkusen 1, Bayerwerk (DE)**

(72) Erfinder: **Wagner, Kuno, Dr.**
**Am Kiesberg 8**
**D-5090 Leverkussen 1 (DE)**
Erfinder: **Findeisen, Kurt, Dr.**
**In der Follmühle 10**
**D-5068 Odenthal 2 (DE)**

**EP 0 003 585 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Stabilisierte Azulminsäuren, Verfahren zu ihrer Herstellung und ihre Verwendung

Die vorliegende Erfindung betrifft neue, durch Kondensation mit Carbonylverbindungen stabilisierte Azulminsäuren, mehrere Verfahren zu ihrer Herstellung sowie ihre Verwendung zu verschiedenen Zwecken.

*Stand der Technik*

Polymere Blausäuren, sogenannte Azulminsäuren, sowie mehrere Verfahren zu deren Herstellung sind bereits beschrieben worden (vgl. Houben-Weyl Band 8 (1952), Seite 261; DT—PS 662 338 und DT—PS 949 060. So erhält man polymere Blausäure z.B. dadurch, daß man monomere Blausäure in verdünnter wäßriger Lösung in Gegenwart von basischen Katalysatoren, wie Ammoniak, Natriumcyanid, Natriumcanat, Kaliumcyanat oder Erdalkalien, auf die Reaktionstemperatur erhitzt und nach dem Eintreten der Umsetzung durch Kühlung dafür sorgt, daß eine Reaktionstemperatur von 120°C nicht überschritten wird (vgl. DT—PS 662 338). In einer besonderen Variante dieses Verfahrens wird dem Gemisch aus Lösungsmittel-, Blausäure-Katalysator, in dem die Umsetzung bereits begonnen hat, weitere Blausäure zugeführt (vgl. DT—PS 949 060). Bei diesen bekannten Blausäurepolymerisaten handelt es sich um braunschwarze bis schwarze pulvrige Produkte, die in allen inerten Solventien unlöslich sind, sich aber in 1 n wäßriger Natronlauge bereits in der Kälte unter Zersetzung lösen. Ein Schwerwiegender Nachteil derartiger Blausäurepolymerisate besteht darin, daß sie sowohl bei der trockenen als auch bei der feuchten Lagerung schon bei Raumtemperatur fortlaufend kleine Mengen an Cyanwasserstoff abspalten. Mit steigender Temperatur nimmt auch die Rate der Cyanwasserstoffabspaltung zu. Selbst in noch so Schonend gelagerten, Azulminsäuren enthaltenden Gebinden treten daher Blausäuremengen auf, die weit über dem gesetzlich festgesetzten Blausäure-MAK-Wert von 11 ppm liegen. Daher ist eine praktische Verwendung der bekannten Blausäurepolymerisate für die verschiedensten Zwecke außerordentlich umweltgefährdend und somit kaum möglich.

Nach einem Vorschlag von Th. Völker kommt der braun-schwarzen, in Wasser hergestellten polymeren Blausäure (Azulminsäure) im wesentlichen die folgende Formel zu (vgl. Angew. Chem. *72*, (1960) Seiten 379—384):

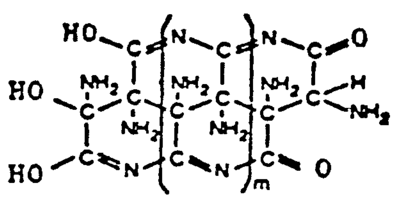

(I)

Aus den Sauerstoffgehalten der bekannten Azulminsäuren wurde ein Polymerisationsgrad (HCN) von $X = 15 - 24$ berechnet, so daß sich für m (Formel I) Werte von 1 bis 4 ergeben. Die maximal erzielten Molekulargewichte der Polymere liegen wenig oberhalb von 700.

*Erfindungsdarlegung*

Gegenstand dieser Erfindung sind gegebenenfalls Zusatzstoffe enthaltende durch Kondensation mit Carbonylverbindungen stabilisierte Azulminsäuren mit einem Gehalt von 0,5 bis 55 Gewichtsprozent an ionischen Gruppen der Formel

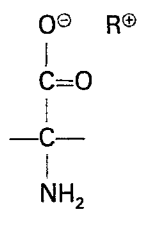

$(F_1)$

in welcher

R für Wasserstoff, Ammonium, ein Äquivalent einer protonisierten oder quaternierten organischen Stickstoffbase, eines Sulfonium-Kations oder für ein Äquivalent eines Metallkations steht,

und mit einem Gehalt von 0,5 bis 15 Gewichtsprozent an durch Decarboxylierungsreaktionen entstandenen Gruppen der Formel

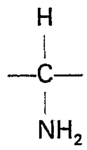

$(F_2)$,

sowie Säureadditions-Salze und Komplex-Verbindungen dieser stabilisierten Azulminsäuren.

Gegenstand der vorliegenden Erfindung sind ferner Verfahren zur Herstellung der obengenannten,

gegebenenfalls Zusatzstoffe enthaltende, durch Kondensation mit Carbonylverbindungen stabilisierten Azulminsäuren, deren Säureadditionsalzen und Komplex-Verbindungen sowie der Mischprodukte dieser stabilisierten Azulminsäuren mit Zusatzstoffen, wobei die Verfahren darin bestehen, daß man
1) gegebenenfalls Zusatzstoffe enthaltende modifizierte Azulminsäuren mit einem Gehalt von 0,5 bis 55 Gewichtsprozent an ionischen Gruppen der Formel

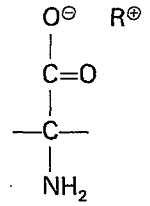

(F1)

in welcher
R die oben angegebene Bedeutung hat,
und mit einem Gehalt von 0,5 bis 15 Gewichtsprozent an Gruppen der Formel

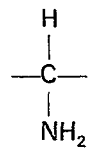

(F2),

in wäßrigem Medium gegebenenfalls in Anwesenheit von Zusatzstoffen mit Carbonylverbindungen kondensiert,
oder daß man
2) gegebenenfalls Zusatzstoffe enthaltende Säureadditionssalze bzw. Komplex-Verbindungen von modifizierten Azulminsäuren mit einem Gehalt von 0,5 bis 55 Gewichtsprozent an ionischen Gruppen der Formel

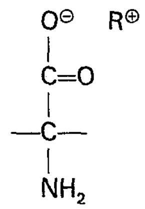

(F1)

in welcher
R die oben angegebene Bedeutung hat,
und mit einem Gehalt von 0,5 bis 15 Gewichtsprozent an Gruppen der Formel

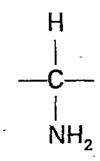

(F2),

in wäßrigem Medium gegebenenfalls in Anwesenheit von Zusatzstoffen mit Carbonylverbindungen kondensiert,
oder daß man
3) nahezu fehlerstellenfreie Azulminsäuren gegebenenfalls in Gegenwart von Zusatzstoffen mit Carbonylverbindungen im wäßrigem Medium kondensiert,
oder daß man
4) Blausäure mit Hilfe basischer Katalysatoren unter hydrolysierenden Bedingungen in wäßrigem Medium gegebenenfalls in Gegenwart von Zusatzstoffen polymerisiert und anschließend ohne vorherige Isolierung der Reaktionsprodukte gegebenenfalls in Gegenwart von Zusatzstoffen mit Carbonylverbindungen in wäßrigem Medium kondensiert,
oder daß man
5) modifizierte Azulminsäuren mit einem Gehalt von 0,5 bis 55 Gewichtsprozent an ionischen Gruppen der Formel

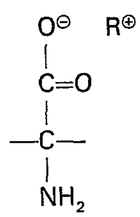

(F1)

in welcher
R die oben angegebene Bedeutung hat,
und mit einem Gehalt von 0,5 bis 15 Gewichtsprozent an Gruppen der Formel

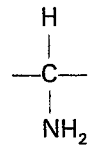

$(F_2)$,

in wäßrigem Medium mit Basen umsetzt, gegebenenfalls das Kation durch Behandlung mit Metallsalzen austauscht und anschließend in wäßrigem Medium gegebenenfalls in Gegenwart von Zusatzstoffen mit Carbonylverbindungen kondensiert,
oder daß man
6) modifizierte Azulminsäuren in wäßrigem Medium mit organischen oder anorganischen Säuren behandelt und anschließend gegebenenfalls in Gegenwart von Zusatzstoffen in wäßrigem Medium mit Carbonylverbindungen kondensiert,
oder daß man
7) nahezu fehlerstellenfreie Azulminsäuren in Anwesenheit von hydrolytisch abbaubaren Naturstoffen sowie in Gegenwart von Säure in wäßrigem Medium mit Carbonylverbindungen kondensiert,
und die nach den genannten Verfahren hergestellten Produkte gegebenenfalls anschließend mit Säure oder Base behandelt.

Gegenstand der Erfindung ist ferner die Verwendung der erfindungsgemäßen stabilisierten Azulminsäuren für verschiedene Zwecke. So eignen sich die Produkte z.B. zur Komplexierung von Metallsalzen als Katalysatorträger oder als Katalysatoren in der Isocyanatchemie. Weiterhin können erfindungsgemäße Produkte zur Herstellung von Dispersionen in mit Isocyanaten verschäumbaren Polyhydroxylverbindungen eingesetzt werden. Ferner finden erfindungsgemäße Produkte Verwendung als reaktive Füllstoffe in den verschiedensten Kunststoffen. Zum Beispiel lassen sich aus erfindungsgemäßen Stoffen und Polycarbodiimid-Pulvern Produkte herstellen, in denen die stabilisierten Azulminsäuren durch Polycarbodiimide umhüllt, mikroverkapselt und im wesentlichen einlaminiert sind. Diejenigen erfindungsgemäßen Stoffe, die einen hohen ionischen Anteil aufweisen und damit Polyelektrolytcharakter besitzen, können als Ionenaustauscher fungieren. Erfindungsgemäße Stoffe, welche Phosphorsäure, phosphorige Säure, Polymethylenharnstoffe und/oder Polymethylenmelamine bzw. andere geeignete Zusatzstoffe wie Tonerde, Aluminiumoxidhydrat enthalten, lassen sich als Flammschutzmittel, Alterungsschutzmittel und als reaktive Füllstoffe für die verschiedensten Polyurethankunststoffe, Polyamidkunststoffe, Kautschuke und Epoxidharze verwenden. Außerdem eignen sich erfindungsgemäße Stoffe als Trägermaterialien für Katalysatoren, wobei interessante Mischkatalysatoren entstehen, die sich in vielfältiger Weise einsetzen lassen. Beispieleweise genannt sei die Verwendung derartiger Mischkatalysatoren zur Formose-Synthese. Überdies können erfindungsgemäße Produkte als Agrarchemikalien dienen.

*Erlauterungen*

Unter modifizierten Azulminsäuren sind im vorliegenden Fall solche Blausäurepolymerisate zu verstehen, die ionische Gruppen der Formeln

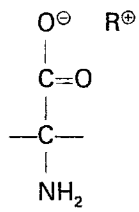

und

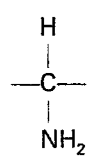

enthalten. Derartige Gruppen haben ihren Ursprung in Nitrilgruppen, die in der Azulminsäure vorhanden sind und als Haltepunkte der cyclisierenden Nitrilpolymerisation aufgefaßt werden können.

In Idealisierter Darstellung kann der Ubergang von einer Nitrilgruppe der Azulminsäure in eine entsprechende Carboxylgruppe formelmäßig wie folgt veranschaulicht werden:

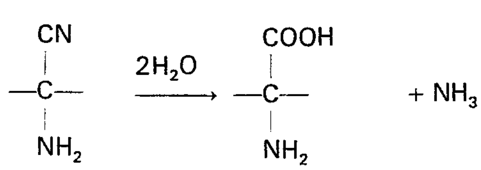

bzw.

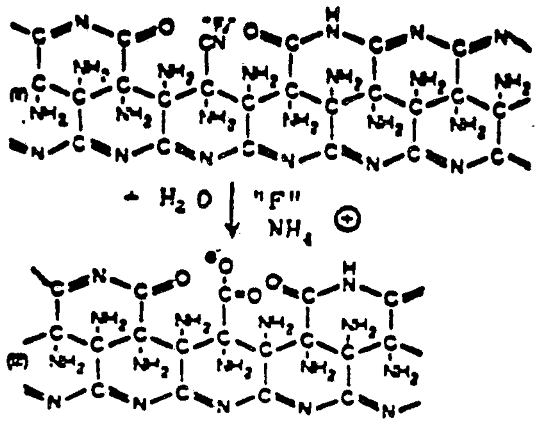


(II)

Selbstverständlich ist auch die Bildung von Amid-, Imid-, Amidin- oder Lactamgruppen aus Nitrilgruppen möglich. So läßt sich z.B. die Bildung von Amidgruppen durch das nachstehende Formelschema wiedergeben.

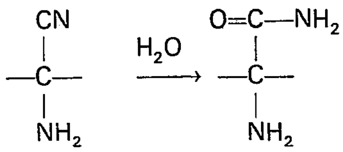


Die Erzeugung ionischer oder nicht-ionischer Gruppen der obigen Formeln erfolgt nicht nur an Nitrilgruppen, die in dem eingesetzten Polymerisat bereits vorhanden sind, sondern auch an solchen Nitrilgruppen, die durch katalytische Entcyclisierungen entstehen. Darüber hinaus sind verschiedene andere Hydrolyse-Reaktionen für die Bildung von Fehlerstellen verantwortlich. z.B. kann eine

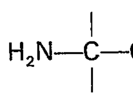-Gruppe,

die im Molekularverband der Azulminsäure als $\alpha$-Aminonitril aufzufassen ist, durch Cyanwasserstoff-Abspaltung und anschließende topochemische Hydrolysereaktion gemäß nachstehendem Formelschema in eine Carbonylgruppe überführt werden:

a)

b)

c)

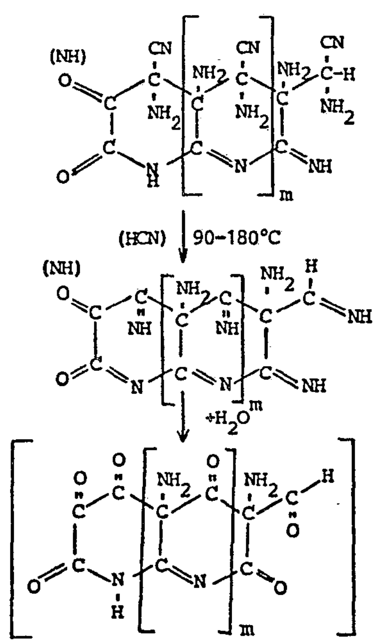

Im folgenden werden die ionischen Gruppen der Formel

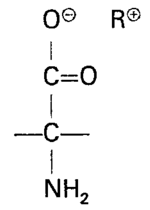

als *$F_1$-Fehlerstellen* und die Gruppen der Formel

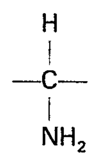

als *$F_2$-Fehlerstellen* bezeichnet.

Die $F_2$-Fehlerstellen entstehen aus den $F_1$-Fehlerstellen, in denen R für Wasserstoff oder ein anderes geeignetes Ion steht, gemäß nachstehendem Formelschema:

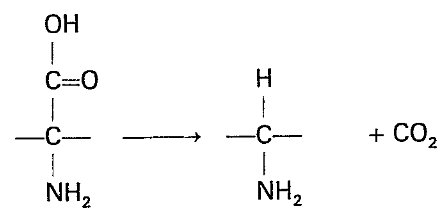


bzw. im Molekularverband der Azulminsäure:

Fehlerstellen durch Decarboxylierungsreaktion

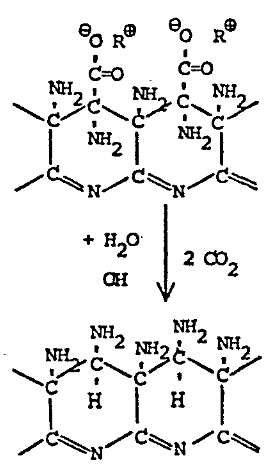


Erhöhung der $NH_2$-Gruppen-Konzentration, Aciditätsverlust, Basizitätsanstieg.

Wie aus der oben angegebenen Formel (II) zu ersehen ist, steht jede erzeugte $F_1$-Fehlerstelle in unmittelbarer Nachbarschaft zu einer $\alpha$-ständigen und zu einer $\beta$-ständigen Aminogruppe. Somit bilden sich an den $F_1$-Fehlerstellen der Konstitution

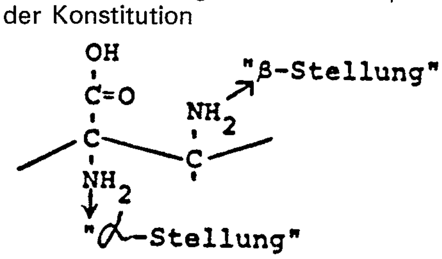

entwedete intramolekulare zwitterionische Salze der Konstitution

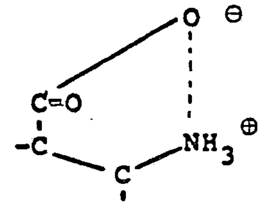

(= 5 gliedrige Ringe)

oder intermolekular vernetzte Salze zwischen mehreren Azulminsäuremolekülen der folgenden idealisierten Darstellung:

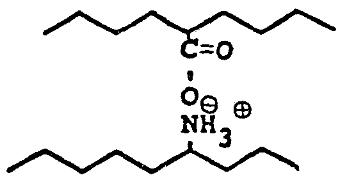

Die Bildung intramolekularer Salze, d.h. 5-gliedriger Ringe, ist bevorzugt.

Da die Entstehung der $F_1$-Fehlerstellen mit der Freisetzung von Ammoniak und die Entstehung der $F_2$-Fehlerstellen mit der Freisetzung von Kohlendioxid gekoppelt ist, stellt die entbundene Menge an Ammoniak und Kohlendioxid ein quantitatives Maß für die Menge der erzeugten Fehlerstellen dar. Der Quotient aus der entbundenen Molmenge an Ammoniak und der entbundenen Molmenge an Kohlendioxid gibt Aufschluß über das Verhältnis von $F_1$- zu $F_2$-Fehlerstellen.

*Bestimmung des Fehlerstellengehaltes*

Der Fehlerstellengehalt der erfindungsgemäßen modifizierten Azulminsäuren in Gewichtsprozent wird im folgenden jeweils in der Weise bestimmt, daß man das Äquivalentgewicht der betreffenden Fehlerstelle (= ionische oder nicht-ionische Gruppierung $F_1$ oder $F_2$) in Relation setzt zu der entsprechenden nicht in eine ionische oder nicht-ionische Gruppierung überführten Gewichtsgröße (100 g). So errechnet sich beispielsweise die Fehlerstellenkonzentration für eine $F_1$-Fehlerstelle, in der R für Wasserstoff steht, aus der jeweils entstandenen molaren Menge an Ammoniak und der Tatsache, daß die zugehörige ionische Gruppierung der Formel

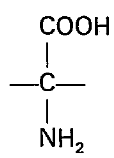

ein Äquivalentgewicht von 73 aufweist.

In analoger Weise errechnet sich der $F_2$-Fehlerstellengehalt aus der jeweils entbundenen molaren Menge an Kohlendioxid und der Tatsache, daß die betreffende Gruppierung der Formel

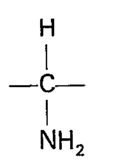

ein Äquivalentgewicht von 29 aufweist.

*Erfindungshöhe und technischer Fortschritt*

Es ist als äußerst überraschend zu bezeichnen, daß die erfindungsgemäßen, gegebenenfalls Zusatzstoffe enthaltenden mit Carbonylverbindungen kondensierten stabilisierten Azulminsäuren sowie deren Säureadditions-Salze, Komplex-Verbindungen im Gegensatz zu den bisher bekannten Azulminsäuren gegenüber einer Abspaltung von Cyanwasserstoff extrem beständig sind. So spalten die erfindungsgemäßen Produkte bei Temperaturen bis zu 130°C, — in manchen Fällen bei Temperaturen bis zu 180°C und in Extremfällen sogar bei Temperaturen zu 200°C —, so gut wie keinen Cyanwasserstoff ab. Die analytisch feststellbaren Mengen an abgespaltenem Cyanwasserstoff sind gleich Null oder liegen auch unter ungünstigsten Bedingungen unter den gesetzlich festgelegten MAK-Werten. Ferner sind die erfindungsgemäßen Produkte auch gegenüber einer hydrolytischen Abspaltung von Cyanwasserstoff sehr stabil. So lassen sich selbst nach dreistündiger Behandlung von erfindungsgemäß stabilisierten Azulminsäuren in wäßrigem Medium bei 100°C keine Cyanidionen oder weniger als

$0{,}2.10^{-6}$ g Cyanidionen pro Gramm Wasser nachweisen. Überraschend ist ferner, daß die erfindungsgemäßen gegebenenfalls Zusatzstoffe enthaltenden durch Kondensation mit Carbonylverbindungen stabilisierten Azulminsäuren sowie deren Säureadditions-Salze, Komplex-Verbindungen aus den bekannten Azulminsäuren in topochemischer Reaktion zugänglich sind, obwohl die als Ausgangsstoffe eingesetzten Polymeren völlig unlöslich sind und wegen der geringen Porosität nur eine relativ kleine Oberfläche aufweisen. Außerdem konnte die Darstellbarkeit der erfindungsgemäßen Produkte insbesondere deshalb nicht erwartet werden, weil die bekannten, nahezu fehlerstellenfreien Azulminsäuren auch nach stundenlangem Kochen mit wasserfreiem Aceton, Cyclohexanon, Methylisobutylketon oder Acetessigester völlig unverändert blieben.

Die erfindungsgemäßen durch Kondensation mit Carbonylverbindungen stabilisierten Azulminsäuren weisen eine wesentlich höhere Quellbarkeit auf als die vorbekannten nahezu fehlerstellenfreien Azulminsäuren und sind deshalb im Gegensatz zu den vorbekannten Azulminsäuren für verschiedenste chemische Reaktionen einsetzbar. Sie zeichnen sich außerdem, — wie bereits erwähnt —, im Unterschied zu den bisher bekannten, nahezu fehlerstellenfreien Azulminsäuren durch eine sehr hohe thermische und hydrolytische Beständigkeit gegenüber Cyanwasserstoff-Abspaltung aus und lassen sich für viele Zwecke verwenden.

Die erfindungsgemäßen Stoffe stellen somit eine wertvolle Bereicherung der Technik dar.

*Genaume Definition der erfindungsgemäßen Produkte*

Als Carbonylverbindungen, die in den erfindungsgemäßen Produkten in kondensierter Form enthalten sind, kommen vorzugsweise Aldehyde, Ketone und Ketoester mit reaktiven Carbonylgruppen in Betracht. Als Aldehyde seien speziell genannt Formaldehyd, Acetaldehyd, Isobutyraldehyd, Chloral, Hydroxyäthylaldehyd, Hydroxypivalinaldehyd, Acrolein, Crotonaldehyd, Glyoxal, Methylglyoxal, Furfurol, Hydroxymethylfurfurol, Glukose, Salicylaldehyd, Hydroxyacetaldehyd, Glycerinaldehyd und andere Aldehyde, die unter den Bedingungen der Formose-Synthese aus Formaldehyd entstehen. Besonders bevorzugt ist Formaldehyd. Als Ketone seien Dihydroxyaceton und Cyclohexanon speziell genannt; als Ketoester sei Acetessigester beispielhaft erwähnt.

Die in den erfindungsgemäßen stabilisierten Azulminsäuren enthaltenden Fehlerstellen sind durch die Formeln ($F_1$) und ($F_2$) definiert. In der Formel ($F_1$) steht R vorzugsweise für Wasserstoff, Ammonium oder ein Äquivalent eines Kations von einem Metall aus der I. bis V. Hauptgruppe bzw. aus der I. bis VIII. Nebengruppe, wobei die Kationen von Lithium, Natrium, Kalium, Beryllium, Magnesium, Calcium, Strontium, Barium, Aluminium, Thallium, Zinn, Blei, Wismut, Kupfer, Silber, Gold, Zink, Cadmium, Quecksilber, Titan, Zirkon, Chrom, Mangen, Eisen, Cobalt, Nickel, Platin und Palladium, Rhodium und Rutenium beispielhaft genannt seien. R steht ferner vorzugsweise für ein Äquivalent eines protonisierten Alkylamins mit 1 bis 6 Kohlenstoffatomen, eines protonisierten Dialkylamins mit 1 bis 6 Kohlenstoffatomen pro Alkylgruppe, eines protonisierten Trialkylamins mit 1 bis 6 Kohlenstoffatomen pro Alkylgruppe, eines protonisierten Hydroxyalkylamins mit 1 bis 6 Kohlenstoffatomen, eines protonisierten Di-(hydroxy-alkyl)-amins mit 1 bis 6 Kohlenstoffatomen pro Hydroxyalkylgruppe, eines protonisierten Cycloalkylamins mit 3 bis 8 Kohlenstoffatomen, eines protonisierten Alkylendiamins mit 2 bis 6 Kohlenstoffatomen, eines protonisierten Guanidins, Melamins oder Dicyandiamids oder einer protonisierten, gesättigten oder ungesättigten heterocyclischen Stickstoffbase mit 5 bis 7 Ringgliedern und 1 bis 3 Stickstoffatomen im heterocyclischen Ring, sowie für diejenigen Kationen, die durch Quaternisierung, wie z.B. Permethylierung, der vorgenannten basischen Stickstoff-Verbindingen entstehen. Besonders bevorzugte Stickstoffbasen sind in diesem Zusammenhang Methylamin, Dimethylamin, Trimethylamin, Äthylamin, Diäthylamin, Triäthylamin, tert.-Butylamin, Äthanolamin, Diäthanolamin, Triäthanolamin, Cyclopropylamin, Cyclopentylamin, Cyclohexylamin, Äthylendiamin, Pyrrolidin, Piperidin, Morpholin, Imidazol, Pyrazol, 1,2,4-Triazol, 1,2,3-Triazol, 2-Äthylimidazol und Aminotriazol. Weiterhin steht R vorzugsweise für Trialkylsulfonium-Kationen, insbesondere für das Triäthylsulfonium-Kation.

Unter erfindungsgemäßen, durch Kondensation mit Carbonylverbindungen stabilisierten Azulminsäure- Säure-Additions-Salzen sind solche Salze zu verstehen, die sich durch Addition eines Protons einer anorganischen oder organischen Säure an eine Aminogruppe oder eine andere geeignete Gruppe in einer stabilisierten Azulminsäure bilden. Als anorganische Säuren kommen hierbei vorzugsweise in Frage Halogenwasserstoffsäuren, wie Fluorwasserstoffsäure, Chlorwasserstoffsäure und Bromwasserstoffsäure, weiterhin Säuren des Phosphors, wie Phosphorsäure, phosphorige Säure, Dialkylphosphorsäure, z.B. Dibutylphosphorsäure, Polyphosphorsäure mit Molekulargewichten von 6000 bis 40 000 und Phospholinoxid-phosphonsäuren, z.B. solchen der Formeln

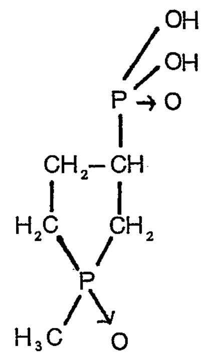

und

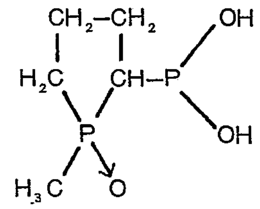

,

ferner Salpetersäure und vom Schwefel abgeleitete Säuren, wie Schwefelsäure und Sulfonsäuren, wobei Äthylsulfonsäure, p-Toluolsulfonsäure und Naphthalin-1,5-disulfonsäure beispielhaft genannt seien. Als organische Säuren kommen vorzugsweise in Betracht gesättigte oder ungesättigte Carbonsäuren, wie Ameisensäure, Essigsäure, Propionsäure, 2-Äthylcapronsäure, Acrylsäure, Methacrylsäure, Ölsäure und Ricinolsäure, weiterhin Halogencarbonsäuren, wie Chloressigsäure, Dichloressigsäure und Trichloressigsäure, ferner Dicarbonsäuren, wie Maleinsäure, Fumarsäure und Bernsteinsäure und davon abgeleitete Halbester, und außerdem Hydroxycarbonsäuren, wie Hydroxyessigsäure, Weinsäure, Zitronensäure und Salicylsäure.

Unter erfindungsgemäßen, durch Kondensation mit Carbonylverbindungen stabilisierten Azulminsäure-Komplex-Verbindungen sind vorzugsweise Komplexe aus stabilisierten Azulminsäuren und Metallverbindungen oder Ammoniumsalzen zu verstehen. Als Metallverbindungen kommen hierbei insbesondere Salze, Säuren, Hydroxide bzw. Oxide von Metallen der II. bis V. Hauptgruppe bzw. der I. bis VIII. Nebengruppe in Betracht. Beispielhaft genannt seien Calcium-chlorid, -acetat, -nitrat und -hydroxid, bzw. -oxid, Strontiumnitrat, Bariumchlorid und -acetat, Borate, Aluminium-acetat und -formiat, Thalliumsulfat, Thalliumnitrat, Silizium-tetrachlorid, Natrium bzw. Kaliumsilikat, Zinn-II-chlorid, Blei-II-chlorid, -II-acetat und -II-hydroxid, Wismut-III-hydroxid und Wismut-III-nitrat, Kupfer-sulfat, -nitrat und -acetat, Silbernitrat, Tetrachlorogoldsäure, Zink-chlorid und -acetat, Cadmiumchlorid, Quecksilber-II-chlorid, Titantetrachlorid und -tetrabutylat, Zirkonsulfat, Vanadate, Chrom-III-chlorid, Molybdate, Wolframate und deren Heteropolysäuren, Mangan-II-sulfat und -II-acetat, Eisen-II-sulfat, -II-acetat und -III-chlorid, Cobaltchlorid, Nickelchlorid, Hexachloroplatinsäure und Palladium-II-chlorid. — Als Ammoniumsalze kommen indbesondere Ammoniumnitrat und Ammoniumacetat in Frage.

Als Zusatzstoffe können in den erfindungsgemäßen Produkten organische Naturstoffe und daraus gewonnene Produkte, anorganische Naturstoffe und daraus gewonnene Produkte, synthetische organische Produkte, synthetische anorganische Produkte und/oder Mischprodukte aus organischen und anorganischen Produkten enthalten sein.

Vorzugsweise in Frage kommende organische Naturstoffe und daraus gewonnene Produkte sind hierbei Holzpulver, Ligninpulver, Ligninsulfonsäuren, ammonifizierte Ligninsulfonsäuren, Humus, Huminsäuren, ammonifizierte Huminsäuren, Torf, Proteine und der Abbauprodukte, z.B. Hydrolyseprodukte von Hefen, Algenmaterial (Alginate), Polypeptiden, wie Wolle und Gelatine, Fischmehl und Knochenmehl, ferner Aminosäuren, Oligopolypeptide, Pektine, Monosaccharide, wie Glucose und Fructose, Disaccharide, wie Saccharose, Oligosaccharide, Polysaccharide, wie Stärke und Cellulose, weiterhin Hemicellulosen, homogenisierte Materialien pflanzlichen und tierischen Ursprungs, Aktivkohlen sowie Aschen, die durch Partialoxidation, vollständige Oxidation oder Verbrennung organischer, durch Photosynthese gebildeter Stoffe oder üblicher Brennstoffe erhältlich sind, wobei Tannenasche, Ginsterasche, Asche von serbischen Fichten, Eichenasche, Birkenasche, Buchenasche, Weidenasche und Tabakblätter-Asche speziell genannt seien.

Als anorganische Naturstoffe und daraus gewonnene Produkte kommen vorzugsweise in Betracht Silikate, wie Aluminiumsilikate, Calciumsilikate, Magnesiumsilikate und Alkalisilikate, ferner Seesand und andere natürlich vorkommende Siliziumdioxide, Kieselsäuren, insbesondere disperse Kieselsäuren, Kieselgele, weiterhin Tonmineralien, Glimmer, Carbonate wie Calciumcarbonat, Phosphorit und Phosphate wie Calciumphosphat und Ammoniummagnesiumphosphat, Sulfate wie Calciumsulfat und Bariumsulfat, außerdem Oxide wie Zirkondioxid, Nickeloxid, Palladiumoxid, Bariumoxid, disperse Antimonoxide und Aluminiumoxide, wie Bauxit, Aluminiumoxidhydrat, darüber hinaus Flugaschen und Ruß-Sorten verschiedenster Art.

Als synthetische organische Produkte kommen vorzugsweise in Frage Aminoplastkondensate, insbesondere solche aus Harnstoff, Dicyandiamid, Melamin oder Oxamid und Aldehyden, wie Formaldehyd, Acetaldehyd, Isobutyraldehyd, Hydroxypivalinaldehyd, Crotonaldehyd, Hydroxyacetaldehyd, Furfurol, Hydroxymethylfurfurol, Glyoxal und Glucose, wobei speziell genannt seien Kondensationsprodukte aus Harnstoff und Formaldehyd, Harnstoff und Glyoxal, Harnstoff und Acetaldehyd, Harnstoff und Isobutyraldehyd, Harnstoff und Crontonaldehyd, Harnstoff und Hydroxypivalinaldehyd sowie das 2-Oxo-4-methyl-6-ureido-hexahydropyrimidin, welches ein bekanntes Kondensationsprodukt aus 1 Mol Crotonaldehyd und 2 Mol Harnstoff ist, das aus intermediär anfallendem Crotonyliden-diharnstoff unter Absättigung der Doppelbindung entsteht und dem die Konstitution

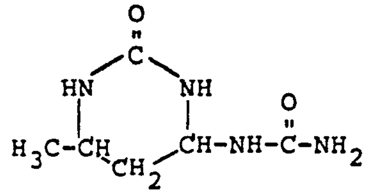

zukommt. Weiterhin kommen als synthetische organische Produkte vorzugsweise in Betracht Kunststoffe, wie Polyamidpulver, Polyurethanpulver und Polycarbodiimide, ferner polymere Chinone, Additions- bzw. Kondensationsprodukte aus Chinonen, insbesondere Benzochinon, mit Aminen oder Ammoniak, außerdem mit Aldehyden, insbesondere Formaldehyd, vernetzte Gelatine, synthetische Bodenverbesserungsmittel, wie z.B. das als Hygromull bekannte Produkte (=Harnstoff-Formaldehyd-Harzflocken), darüber hinaus synthetische Zucker, wie z.B. aus Formaldehyd hergestellte Formose-Zuckergemische, ferner schwerlösliche Rohrzucker-Komplexe, wie der Saccharose-Calciumoxid-Komplex der Zusammensetzung 1 Mol Saccharose . 3 Mol Calciumoxid, und schließlich organische Ammoniumsalze, wie Ammoniumcarbaminat, und andere organische Stickstoffverbindungen wie Hexamethylentetramin und Hexahydrotriazine.

Als synthetische anorganische Produkte, die vorzugsweise in Frage kommen, seien genannt Düngemittel, wie Superphosphat, Thomasschlacke, Rhenaniaphosphat, Phosphorit, Kalkstickstoff, Kalkammonsalpeter, Leunasalpeter, Kaliumphosphate, Kaliumnitrat und Ammoniumnitrat, ferner Pigmente, wie Eisenoxide und Titandioxide, außerdem Metalloxide und Metallhydroxide, wie Calciumoxid, Calciumhydroxid, Bleihydroxid, Wismuthydroxid, Manganhydroxid und Magnesiumhydroxid, wobei in situ hergestellte Hydroxide besonders bevorzugt sind, weiterhin synthetische Kieselsäuren, insbesondere in situ hergestellte Kieselsäure und deren Salze, außerdem Wasserglas, Salze wie Cobaltmolybdat, Ammoniumcarbonat und Calciumcarbonat, und darüber hinaus Katalysatoren, insbesondere Schwermetallkatalysatoren, der verschiedensten Art.

Als Mischprodukte aus anorganischen und organischen Produkten kommen vorzugsweise neutrale, basische oder saure Böden, natürliche Bodenverbesserungsmittel, biologisch aktive Gartenerde und Klärschlämme in Betracht.

Die Zusatzstoffe können in den erfindungsgemäßen Produkten in physikalischer und/oder chemischer Bindung in einer Menge von 1 bis 95 Gewichtsprozent, vorzugsweise von 5 bis 90 Gewichtsprozent enthalten sein. In manchen Fällen können Produkte vorliegen, in denen die stabilisierten Azulminsäuren von den Zusatzstoffen umhüllt sind. Als Beispiel für derartige Produkte seien mit Polycarbodiimiden umhüllte, z.B. mikroverkapselte stabilisierte Azulminsäuren genannt.

*Herstellung der erfindungsgemäßen Produkte*

Gemeinsames Merkmal der erfindungsgemäßen Verfahren (1) bis (7) ist die Kondensation von Amino-, Amid-, Amidin- und Lactam-Gruppen, die in den eingesetzten Azulminsäuren vorhanden sind, mit Carbonylgruppen. — Verwendet man als Carbonylkomponente z.B. Formaldehyd, so läßt sich dessen Kondensation mit einer Aminogruppe einer Azulminsäure beispielsweise durch das folgende Formelschema veranschaulichen:

$$H-\overset{|}{\underset{|}{C}}-NH_2 + HCHO \longrightarrow H-\overset{|}{\underset{|}{C}}-N{=}CH_2 + H_2O$$

Außer der formelmäßig dargestellten Bildung von Azomethin-Gruppen können Reaktionen ablaufen, die zu Methylol-Verbindungen, N,N-Methylenverbindungen oder Verbindungen mit Methylenäther-Verknüpfungen ($>N-CH_2-O-CH_2N<$) führen. Azomethin-Gruppen ($-N{=}CH_2$) vernetzen leicht zu Hexahydrotriazin-Strukturen, wobei auch die partielle Bildung von Hexahydropyrimidin-Derivaten durch intramolekulare Kondensation cis-ständiger, in $\gamma$-Stellung befindlicher Amino-Gruppen möglich ist.

*Erfindungsgemäßen Herstellungsverfahren (1)*

Nach dem erfindungsgemäßen Verfahren (1) werden gegebenenfalls Zusatzstoffe enthaltende modifizierte Azulminsäuren mit einem Gehalt von 0,5 bis 55 Gewichtsprozent an ionischen Gruppen der Formel

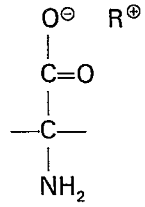

$(F_1)$

und mit einem Gehalt von 0,5 bis 15 Gewichtsprozent an Gruppen der Formel

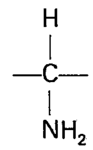

$(F_2)$

in wäßrigem Medium gegebenenfalls in Anwesenheit von Zusatzstoffen mit Carbonylverbindungen kondensiert.

In der Formel $(F_1)$ steht R vorzugsweise für diejenigen Substituenten, die bereits im Zusammenhang mit der Beschreibung der erfindungsgemäßen Stoffe vorzugsweise für R genannt wurden.

Die bei dem erfindungsgemäßen Verfahren (1) als Ausgangsstoffe zu verwendenden modifizierten Azulminsäuren (= fehlerstellenhaltige Azulminsäuren) können 1 bis 95 Gewichtsprozent, vorzugsweise 5 bis 90 Gewichtsprozent an Zusatzstoffen enthalten. Als Zusatzstoffe kommen dabei diejenigen Materialien in Betracht, die bereits im Zusammenhang mit der Beschreibung der erfindungsgemäßen Produkte als Zusatzstoffe genannt wurden.

Die als Ausgangsstoffe benötigten, gegebenenfalls Zusatzstoffe enthaltenden modifizierten Azulminsäuren sind nur teilweise bekannt. Sie lassen sich nach verschiedenen Verfahren in einfacher Weise herstellen. So erhält man die betreffenden Produkte, die teilweise Gegenstand eines gesonderten Schutzbegehrens sind, dadurch, daß man

A) nahezu fehlerstellenfreie bekannte Azulminsäure in wäßrigem Medium,

a) gegebenenfalls in Anwesenheit von Zusatzstoffen mit organischen oder anorganischen Säuren behandelt, oder

b) gegebenenfalls in Anwesenheit von Zusatzstoffen mit Basen oder basischen Salzen behandelt, oder

c) mit Wasser im Neutralbereich behandelt, oder

d)mit pflanzlichen Aschen, katalytisch wirksamen Naturstoffen und/oder Düngemitteln behandelt, oder

e) gegebenenfalls in Anwesenheit von Oxidationsmitteln sowie gegebenenfalls in Anwesenheit von organischen Säuren mit Metallsalzen behandelt, oder

f) mit Metallsalz-Komplexen stabilisierter Azulminsäuren behandelt, oder

g) mit Oxidationsmitteln behandelt,

oder daß man

B) Blausäure mit Hilfe basischer Katalysatoren unter hydrolysierenden Bedingungen in wäßrigem Medium gegebenenfalls in Gegenwart von Zusatzstoffen polymerisiert,

und die nach den genannten Verfahren hergestellten Produkte gegebenenfalls anschließend mit Säure oder Base bahandelt.

Bei der Herstellung der gegebenenfalls Zusatzstoffe enthaltenden modifizierten Azulminsäuren nach dem Verfahren (A), Varianten (a) bis (g) dienen nahezu fehlerstellenfreie Blausäurepolymerisate, sogenannte Azulminsäuren, Als Ausgangsstoffe. Derartige nahezu fehlerstellenfreie Azulminsäuren sind bereits bakannt (vgl. Houben-Weyl, Band 8 (1952), Seite 261; DT—PS 662 338 und DT—OS 949 660).

Nach der Variante (a) des Verfahrens (A) werden die nahezu fehlerstellenfreien Azulminsäuren gegebenenfalls in Anwesenheit von Zusatzstoffen mit anorganischen oder organischen Säuren behandelt. Hierzu kommen als anorganische oder organische Säuren vorzugsweise alle diejenigen in Frage, die bereits im Zusammenhang mit der Beschreibung der erfindungsgemäßen stabilisierten Azulminsäure-Säureadditionsprodukte vorzugsweise aufgezählt wurden. Als Zusatzstoffe kommen alle diejenigen Materialien in Betracht, die bereits im Zusammenhang mit der Beschreibung der erfindungsgemäßen Produkte als Zusatzstoffe genannt wurden.

Bei der Durchführung der Variante (a) des Verfahrens (A) arbeitet man in wäßrigem Medium, vorzugsweise in Wasser. Es ist jedoch auch möglich, das Wasser partiell durch andere Verfünnungsmittel, wie Schwefelwasserstoff oder Alkohole zu ersetzen, wobei Methanol und Äthanol speziell genannt seien.

Die Reaktionstemperaturen können im Falle der Variante (a) des Verfahrens (A) innerhalb eines größeren Bereiches variiert werden. Im allgemeinen arbeitet man zwischen 0°C und 200°C, vorzugsweise zwischen 20°C und 120°C.

Die Umsetzung nach Variante (a) des Verfahrens (A) wird im allgemeinen unter Normaldruck ausgeführt. Es ist jedoch auch möglich, unter erhöhtem Druck zu arbeiten.

Bei der Durchführung der Variante (a) des Verfahrens (A) setzt man auf 1 Mol (bezogen auf die Moleküleinheit

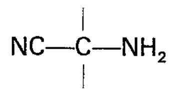

mit dem Äquivalentgewicht 54) nahezu fehlerstellenfreier Azulminsäure eine katalytische Menge oder 1 bis 4 Mol einer anorganischen oder organischen Säure sowie gegebenenfalls eine solche Menge an Zusatzstoffen ein, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden. Im allgemeinen verfährt man in der Weise, daß man das Reaktionsgemisch nach beendeter Umsetzung filtriert und das erhaltene Festprodukt gegebenenfalls wäscht und trocknet.

Verwendet man bei der Durchführung der Variante (a) des Verfahrens (A) Salpetersäure zur Fehlerstellenerzeugung und hält dabei die Reaktionstemperatur relativ niedrig, vorzugsweise zwischen 20 und 30°C, so werden Spuren abgespaltener Blausäure oxidiert, während gleichzeitig außerordentlich leicht Additionen von Salpetersäure an die Aminogruppen der modifizierten Azulminsäuren stattfinden und man in einfacher topochemischer Reaktion modifizierte Azulminsäurentypen erhält, die an ihren Aminogruppen ionische Gruppen der Konstitution

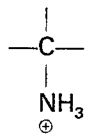 $NO_3^{\ominus}$ enthalten.

Auf diese Weise werden pro 100 Gewichtsteile an modifizierter Azulminsäure etwa 0,5 Mol an Salpetersäure gebunden. Je nach Verfahrensart und Einwirkungsdauer der verdünnten Salpetersäure auf die modifizierten Azulminsäuren sind etwa 30 bis 50% der vorhandenen Aminogruppen der Salzbildung zugänglich. Spuren freier Salpetersäure können vorteilhaft durch Begasung der Produkte mit gasförmigem Ammoniak in Ammoniumnitrat umgewandelt werden, wobei die Reaktion vorteilhafterweise in fester Phase im Wirbelbett ausgeführt wird.

Verwendet man bei der Durchführung der Variante (a) des Verfahrens (A) Phosphorsäure oder phosphorige Säure zur Fehlerstellenerzeugung und hält dabei die Reaktionstemperaturen relativ niedrig, vorzugsweise zwischen 20°C und 55°C, so werden Decarboxylierungsreaktionen und die damit verbundene Erzeugung von $F_2$-Fehlerstellen weitgehend zurückgedrängt. Die Säuren werden gleichzeitig in heterogener Reaktion außerordentlich leicht von den Aminogruppen der modifizierten Azulminsäuren gebunden. Auf diese Weise werden von 100 Gewichtsteilen modifizierter Azulminsäure innerhalb von fünf Minuten bereits etwa 0,2 Mol Phosphorsäure bzw. etwa 0,5 Mol phosphorige Säure gebunden. Die entstehenden Salze sind nahezu wasserunlöslich. In den Produkten enthaltene kleine Mengen an freier Phosphorsäure bzw. phosphorige Säure können vorteilhaft durch Behandlung der Produkte mit gasförmigem Ammoniak zu den entsprechenden Ammoniumsalzen umgesetzt werden, wobei die Reaktion vorteilhafterweise in fester Phase im Wirbelbett ausgeführt wird.

In einer besonderen Ausführungsform der Variante (a) des Verfahrens (A) setzt man die Azulminsäure in Gegenwart von hydrolytisch abbaubaren Naturstoffen, wie z.B. Cellulosen, Hemicellulosen, Zukkern, Lignin, polymeren Chinonen, Holzpulver, pflanzlichem Material, Polypeptiden wie Gelatine und Wolle, ferner Hefeproteinen, Algenmassen und Torfmassen, mit 0,2 bis 80%iger Phosphorsäure bzw. phosphoriger Säure um. Hierbei erfolgt die Fehlerstellenerzeugung unter gleichzeitigem hydrolytischen Abbau der jeweiligen eingesetzten Naturstoffe. Im Falle der Verwendung von Polypeptiden werden diese in Aminosäuregemische gespalten. Die Azulminsäure bindet infolge ihrer zahlreichen Aminogruppen etwa 0,3 bis 0,4 Mol an Phosphorsäure bzw. phosphoriger Säure, während die phosphorsauren Salze der Aminosäuren oder die der Oligopolypeptide, bzw. die anderen niedermolekularen Spaltprodukte der eingesetzten Naturstoffe, auch wenn sie wasserlöslich sind, oft in großer Menge von der Azulminsäure-Matrix fixiert werden. Überschüssige Säure, z.B. Phosphorsäure, kann durch Zugabe von Calciumhydroxid als Calciumphosphat auf der Azulminsäure-Matrix gefällt werden. Sind hierbei hydrolysierte Zucker und Oligosaccharide vorhanden, so werden diese in Form ihrer meist schwer löslichen Calcium-Komplexe auf der Azulminsäure aufgezogen. Die nach dieser Variante des Verfahrens (A) erhaltenen Verfahrensprodukte können über längere Zeit gelagert werden, ohne daß eine unangenehme Geruchsbildung eintritt, wie es ansonsten der Fall ist, wenn Naturstoffe wie Oligopeptide, Peptid-Zuckergemische usw. durch biologische Prozesse abgebaut werden.

Eine weitere besondere Ausführungsform der Variante (a) des Verfahrens (A) besteht darin, daß man zur Erzeugung der Fehlerstellen 1 bis 4 Mol an 1 molarer Phosphorsäure-Lösung einsetzt und die überschüssige Phosphorsäure anschließend durch Zugabe von Calciumchlorid als Calciumphosphat, durch Zugabe von Magnesiumchlorid als Magnesiumphosphat oder durch Zugabe von Ammoniak

und Magnesiumsalzen als Ammonium-magnesium-phosphat fällt. Hierbei können gleichzeitig Zusatzstoffe der verschiedensten Art mitverwendet werden. Besonders bevorzugte Zusatzstoffe sind in diesem Fall pflanzliche Aschen, unlösliche Polychinone, Additions- bzw. Kondensationsprodukte des Benzochinons mit Aminen, insbesondere mit Ammoniak, ferner Lignin, Ligninsulfonsäuren, Huminsäuren, diverse Flugaschen, Bauxit, Aluminiumoxid, Cobaltmolybdat, Siliciumdioxid, Aktivkohle, Zirkondioxid, Nickeloxid, Palladiumoxid und Bariumoxid. Weiterhin kommen als bevorzugte Zusatzstoffe auch Zucker, wie Rohrzucker und andere keine freien Aldehydgruppen aufweisenden Zucker, oder auch aus Formaldehyd hergestellte Formose-Zuckergemische in Frage. Diese verschiedensten Zuckerarten können in Kanälen und Poren der starren Azulminsäurekörper fixiert werden. Darüber hinaus können die verschiedenen Zucker auch in Form ihrer meist schwer löslichen Calcium-Komplexe auf den Azulminsäuren aufziehen.

Nach der Variante (b) des Verfahrens (A) werden die nahezu fehlerstellenfreien Azulminsäuren gegebenenfalls in Anwesenheit von Zusatzstoffen mit Basen oder baischen Salzen behandelt. Hierbei kommen als Basen sowohl organische als auch anorganische Basen in Frage. Vorzugsweise verwendbare organische Basen sind Ammoniak, Alkylamine mit 1 bis 6 Kohlenstoffatomen, Dialkylamine mit 1 bis 6 Kohlenstoffatomen pro Alkylgruppe, Trialkylamine mit 1 bis 6 Kohlenstoffatomen pro Alkylgruppe, Hydroxyalkylamine mit 1 bis 6 Kohlenstoffatomen, Di-(hydroxyalkyl)-amine mit 1 bis 6 Kohlenstoffatomen pro Hydroxyalkylgruppe, Tri-(hydroxyalkyl)-amine mit 1 bis 6 Kohlenstoffatomen pro Hydroxyalkylgruppe, Alkyl-hydroxyalkyl-amine mit 1 bis 6 Kohlenstoffatomen in der Alkyl- bzw. in der Hydroxyalkyl-gruppe. Cycloalkylamine mit 3 bis 8 Kohlenstoffatomen, Alkylendiamine mit 2 bis 6 Kohlenstoffatomen, Guanidin, Melamin, Dicyandiamid, gesättigte oder ungesättigte heterocyclische Stickstoffbasen mit 5 bis 7 Ringgliedern und 1 bis 3 Stickstoffatomen in heterocyclischen Ring, sowie diejenigen Basen, die sich von den durch Quaternisierung, z.B. Permethylierung, der vorgenannten Stickstoffverbindungen entstehenden Verbindungen ableiten, und weiterhin diejenigen Basen, die sich von Trialkylsulfonium-Verbindungen ableiten. Besonders bevorzugte Stickstoffbasen sind in diesem Zusammenhang Ammoniak, Methylamin, Methyläthanolamin, Dimethylamin, Trimethylamin, Äthylamin, Diäthylamin, Triäthylamin, tert.-Butylamin, Äthanolamin, Diäthanolamin, Triäthanolamin, Cyclopropylamin, Cyclopentylamin, Cyclohexylamin, Athylendiamin, Pyrrolidin, Piperidin, Morpholin, Imidazol, Pyrazol, 1,2,4-Triazol, 1,2,3-Triazol, 2-Äthyl-imidazol, Aminotriazol und Triäthylsulfoniumhydroxid.

Vorzugsweise verwendbare anorganische Basen sind Alkali- und Erdalkalimetall-hydroxide. Speziell genannt seien Lithiumhydroxid, Natriumhydroxid, Kaliumhydroxid, Magnesiumhydroxid, Calciumhydroxid, Strontiumhydroxid und Bariumhydroxid.

Als basische Salze kommen bei der Durchführung der Variante (b) des Verfahrens (A) vorzugsweise Alkalisulfide, wie Natriumsulfid, Natriumhydrogensulfid und Kaliumhydrogensulfid, ferner Natriumthiosulfat, Ammoniumthiosulfat, Ammoniumpolysulfide, Calciumhydrogensulfid, Calciumthiosulfat und Calciumcyanamid, weiterhin Kaliumcarbonat, Kaliumhydrogencarbonat, Kaliumcyanat und Wasserglas (Natrium- oder Kaliumwasserglas) in Betracht. — Besonders geeignet zur Fehlerstellenerzeugung nach dieser Methode sind auch Gemische von Ammoniak und Natriumthiosulfat, Ammoniumthiosulfat, Natriumhydrogensulfid, Natriumsulfid und/oder Ammoniumpolysulfiden.

Als Zusatzstoffe können bei der Durchführung der Variante (b) des Verfahrens (A) alle diejenigen Materialien verwendet werden, die bereits im Zusammenhang mit der Beschreibung der erfindungsgemäßen Produkte als zusatzstoffe genannt wurden.

Bei der Durchführung der Variante (b) des Verfahrens (A) arbeitet man in wäßrigem Medium oder in wäßrig-alkoholischem Medium. Vorzugsweise kommt Wasser oder ein Gemisch aus Wasser und Alkohol, wie Methanol oder Äthanol, als Reaktionsmedium in Betracht. Es ist jedoch auch möglich, Wasser partiell durch Schwefelwasserstoff zu ersetzen. — Arbeitet man in Anwesenheit von Schwefelwasserstoff oder in Anwesenheit von Reagenzien, die unter den Reaktionsbedingungen Schwefelwasserstoff abgeben, und hält die Reaktionstemperatur zwischen 70°C und 100°C, so werden geringe Mengen an abgespaltener Blausäure bei gleichzeitiger Fehlerstellenerzeugung in Kohlenoxysulfid und Ammoniak überführt.

Die Reaktionstemperaturen können im Falle der Variante (b) des Verfahrens (A) innerhalb eines größeren Bereiches variiert werden. Im allgemeinen arbeitet man bei Temperaturen zwischen 0°C und 200°C, vorzugsweise zwischen 20°C und 150°C.

Die Umsetzung nach Variante (b) des Verfahrens (A) wird im allgemeinen unter Normaldruck ausgeführt. Es ist jedoch auch möglich, unter erhöhtem Druck zu arbeiten. Letzteres empfiehlt sich insbesondere dann, wenn gasförmiges Ammoniak zur Fehlerstellenerzeugung verwendet wird.

Bei der Durchführung der Variante (b) des Verfahrens (A) setzt man auf 1 Mol (bezogen auf die Moleküleinheit

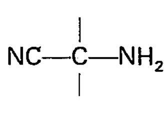

mit dem Äquivalentgewicht 54) nahezu fehlerstellenfreier Azulminsäure eine katalytische Menge oder 1 bis 4 Mol, vorzugsweise 1 bis 2 Mol an Base bzw. basischem Salz sowie gegebenenfalls eine solche Menge an Zusatzstoffen ein, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden. Im allgemeinen verfährt man in der Weise, daß man das Reaktionsgemisch nach beendeter Umsetzung filtriert und das erhaltene Festprodukt gegebenenfalls wäscht und trocknet. Vorteilhafterweise kann auch die im Endprodukt noch enthaltene Base durch Zugabe einer entsprechenden Menge an Säure, wie z.B. Phosphorsäure, neutralisiert werden, so daß die entstehenden Produkte dann auch die jeweiligen Salze enthalten.

Verwendet man bei dieser Neutralisation einen Überschuß an Säure, so entstehen Säureadditions-Salze der jeweiligen modifizierten Azulminsäuren.

Verwendet man bei der Durchführung der Variante (b) des Verfahrens (A) starke Basen zur Fehlerstellenerzeugung, so lassen sich nach längeren Reaktionszeiten Azulminsäuren mit besonders hohen Fehlerstellengehalten herstellen.- Die entstehenden Produkte besitzen Polyelektrolytcharakter. Der Ablauf einer derartigen Umsetzung läßt sich für den Fall, daß Kaliumhydroxid als Base eingesetzt wird, idealisiert durch das folgende Formelschema veranschaulichen.

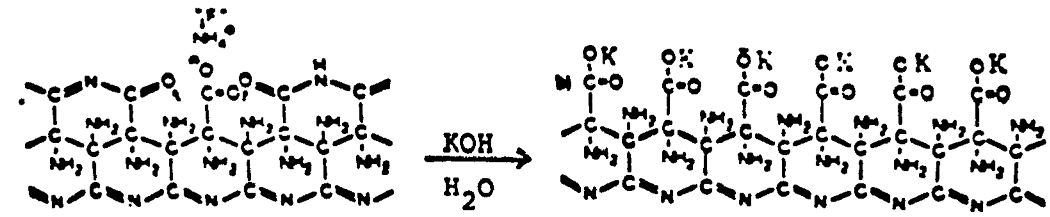


Verwendet man bei dieser Variante (b) des Verfahrens (A) einen Überschuß an konzentrierter (25%iger) Ammoniak-Lösung und arbeitet man bei Raumtemperatur, so erhält man nach etwa 6 bis 20-stündiger Reaktionsdauer stark fehlerstellenhaltige modifizierte Azulminsäuren, deren Carboxylgruppen teilweise in Form von Ammoniumcarboxylat-Gruppen vorliegen. Es ist jedoch auch möglich, modifizierte Azulminsäuren, in denen freie Carboxylgruppen vorhanden sind, durch Begasung mit Ammoniak im Wirbelbett in die entsprechenden Ammoniumsalz enthaltenden Produkte zu überführen.

In einer besonderen Ausführungsform der Variante (b) des Verfahrens (A) setzt man die Azulminsäure in wäßrige-alkoholischem Medium bei Temperaturen zwischen 120°C und 140°C mit gasförmigem Ammoniak unter Druck um. Hierbei entstehen modifizierte Azulminsäuren, die einen hohen Gehalt an Ammoniumcarboxylat-gruppen besitzen. Die in diesen Produkten enthaltenen freien Aminogruppen sind in der Lage, zusätzlich noch Säuren, wie z.B. Phosphorsäure, zu binden, so daß die Endprodukte bebeneinander Ammoniumionen und Säurereste enthalten.

In einer weiteren besonderen Ausführungsform der Variante (b) des Verfahrens (A) setzt man die Azulminsäure in topochemischer Reaktion mit katalytischen oder auch mit größeren Mengen Wasserglas, — etwa 1 bis 4 Mol Wasserglas auf 100 g Azulminsäure —, um. Hierbei entstehen mit Kalium- bzw. Natriumionen beladene modifizierte Azulminsäuren, deren verseifbare Nitrilgruppen als latente Säuren wirken und Kieselsäuren ausfällen. Letztere ziehen in feiner Verteilung auf den Reaktionsprodukten auf. Eventuell vorhandenes überschüssiges Natrium- bzw. Kaliumsilikat kann durch einfaches Begasen der jeweiligen Dispersionen mit Kohlendioxid gefällt werden, oder in besonders vorteilhafter Weise durch Zugabe von Phosphorsäure oder Calciumchlorid in Mischung mit Kalium- bzw. Natriumphosphaten oder Calciumsilikaten ausgefällt werden.

Nach der Variante (c) des Verfahrens (A) werden die nahezu fehlerstellenfreien Azulminsäuren 4 bis 60 Stunden mit destilliertem Wasser im Neutralbereich, vorzugsweise bei pH-Werten zwischen 6 und 6,5, behandelt. Die Reaktionstemperaturen können hierbei innerhalb eines größeren Bereiches variiert werden. Im allgemeinen arbeitet man bei Temperaturen zwischen 60°C und 150°C, vorzugsweise zwischen 80°C und 120°C. Die Umsetzung wird im allgemeinen unter Normaldruck ausgeführt. Es ist jedoch auch möglich, unter erhöhtem Druck zu arbeiten. Die Isolierung der Reaktionsprodukte erfolgt auch bei dieser Variante des Verfahrens (A) nach üblichen Methoden.

Nach der Variante (d) des Verfahrens (A) werden die nahezu fehlerstellenfreien Azulminsäuren mit pflanzlichen Aschen, katalytisch wirksamen Naturstoffen und/oder Düngemitteln behandelt.

Als pflanzliche Aschen kommen hierbei die Verbrennungsprodukte von verschiedensten durch Photosynthese gebildeten Stoffen in Betracht. Vorzugsweise genannt seien die Aschen von Tannen, Ginster, serbischen Fichten, Eidnen, Stroh, Birken, Buchen, Weiden, Tabakblättern, Tabakstengeln, ferner von Getreide, wie Roggen oder Gerste, weiterhin von Pilzen, z.B. Steinpilzen, Apfeln, Möhrenwurzeln, Kartoffelknollen und Weißkrautblättern. Besonders vorteilhaft ist die Verwndung von kaliumreichen Aschesorten. Unter Aschen sind hierbei auch Gemische von verschiedenen pflanzlichen Aschen zu verstehen.

Als katalytisch wirksame Naturstoffe kommen vorzugsweise biologisch aktive Gartenerde sowie basische oder saure Böden der verschiedensten Art in Frage.

Als Düngemittel können bei der Fehlerstellenerzeugung nach der Variante (d) des Verfahrens (A) alle handelsüblichen Düngemittel verwendet werden. Vorzugsweise genannt seien mit Pflanzennährstoffen beladene Torfsorten, Superphosphat, Thomasschlacke, Rhenaniaphosphat, Phosphorit, Kalkstickstoff, Kalkammonsalpeter, Leunasalpeter, Kaliumphosphate, Kaliumnitrat und Ammoniumnitrat.

Bei der Durchführung der Variante (d) des Verfahrens (A) arbeitet man in wäßrigem Medium, vorzugsweise in Wasser. Es ist jedoch auch möglich, das Wasser partiell durch andere Verdünnungsmittel, wie Schwefelwasserstoff oder Alkohole zu ersetzen, wobei Methanol und Athanol spezielle genannt seien.

Die Reaktionstemperaturen können im Falle der Variante (d) des Verfahrens (A) innerhalb eines größeren Bereiches variiert werden. Im allgemeinen arbeitet man zwischen 50°C und 150°C, vorzugsweise zwischen 80°C und 120°C.

Die Umsetzungen nach Variante (d) des Verfahrens (A) werden im allgemeinen unter Normaldruck ausgeführt. Es ist jedoch auch möglich, unter erhöhtem Druck zu arbeiten.

Bei der Durchführung der Variante (d) des Verfahrens (A) setzt man die Azulminsäure mit katalytischen oder auch mit größeren Mengen an pflanzlichen Aschen, katalytisch wirksamen Naturstoffen und/oder Düngemitteln um. Verwendet man die pflanzlichen Aschen, katalytisch wirksame Naturstoffe und/oder Düngemittel in größerer Menge, so dienen diese Stoffe nicht nur zu Fehlerstellenerzeugung, sondern sie sind in den entstehenden Produkten gleichzeitig auch als Zusatzstoffe enthalten. Die Aufarbeitung erfolgt nach üblichen Methoden.

Nach der Variante (e) des Verfahrens (A) werden die nahezu fehlerstellenfreien Azulminsäuren gegebenenfalls in Anwesenheit von Oxidationsmitteln sowie gegebenenfalls in Anwesenheit von organischen Säuren mit Metallverbindungen behandelt.

Als Metallverbindungen kommen hierbei vorzugsweise Salze von Metallen der II. bis V. Hauptgruppe bzw. der I, bis VIII. Nebengruppe in Betracht. Beispielhaft genannt seien Calciumchlorid, -acetat und -nitrat, Strontium-nitrat, Bariumchlorid und -acetat, Aluminiumacetat und -formiat, Thalliumsulfat und -nitrat, Siliziumtetrachlorid, Natrium- bzw. Kaliumsilikat, Zinn-II-chlorid, Blei-II-chlorid, -II-acetat und -II-nitrat, Wismut-III-nitat, Kupfersulfat, -nitrat und -acetat, Silbernitrat, Tetrachlorogoldsäure, Zinkchlorid und -acetat, Cadmiumchlorid, Quecksilber-II-chlorid, Titan-tetrachlorid und -tetrabutylat, Zirkonsulfat, Chrom-III-chlorid, Mangan-II-sulfat und -acetat, Eisen-II-sulfat, -II-acetat und -III-chlorid, Cobaltchlorid, Nickelchlorid, Hexachloroplatinsäure und Palladium-II-chlorid. Weiterhin bevorzugt verwendbare Metallverbindungen sind die Säuren des Vanadins, Molybdäns und des Wolframs, sowie deren Heteropolysäuren.

Als Oxidationsmittel, die bei der Durchführung der Variante (e) des Verfahrens (A) anwesend sein können, kommen alle üblichen sauerstoffabgebenden Mittel in Frage. Vorzugsweise verwendbar sind Luft und Salpetersäure, unterchlorige Säure, Perchlorsäure, Calciumhypochlorit, Wasserstoffperoxid.

Als organische Säuren, die bei der Durchführung der Variante (e) des Verfahrens (A) anwesend sein können, kommen vorzugsweise gesättigte und ungesättigte gegebenenfalls substituierte Carbonsäuren in Betracht. Speziell genannt seien Ameisensäure, Essigsäure, Propionsäure, 2-Äthylcapronsäure, Acrylsäure, Methacrylsäure, Ölsäure, Ricinolsäure, Chloressigsäure, Dichloressigsäure, Trichloressigsäure und Hydroxyessigsäure.

Bei der Durchführung der Variante (e) des Verfahrens (A) arbeitet man im allgemeinen in wäßrigem Medium, vorzugsweise in Wasser. Es ist jedoch auch möglich, das Wasser partiell durch andere Verdünnungsmittel, wie Säuren oder organische Kohlenwasserstoffe zu ersetzen, wobei Ameisensäure und Xylol speziell genannt seien.

Die Reaktionstemperaturen können im Falle der Variante (e) des Verfahrens (A) innerhalb eines größeren Bereiches variiert werden. Im allgemeinen arbeitet man zwischen 0°C und 150°C, vorzugsweise zwischen 20°C und 120°C.

Die Umsetzung nach Variante (e) des Verfahrens (A) wird im allgemeinen unter Normaldruck ausgeführt. Es ist jedoch auch möglich, unter erhöhtem Druck zu arbeiten.

Bei der Durchfuhrung der Variante (e) des Verfahrens (A) setzt man auf 1 Mol (bezogen auf die Moleküleinheit

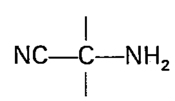

mit dem Äquivalentgewicht 54) Azulminsäure eine katalytische Menge oder auch eine größere Menge, — etwa 1 bis 2 Mol —, an Metallverbindung sowie gegebenenfalls eine katalytische oder auch größere Menge an Oxydationsmittel und gegebenenfalls eine katalytische oder auch größere Menge an organischer Säure ein. Die Aufarbeitung erfolgt nach üblichen Methoden.

In den anfallenden Produkten eventuell vorhandene überschüssige Metallverbindungen lassen sich je nach der Metallverbindung durch Zugabe von Basen, wie Ammoniak, Natriumhydroxid oder Kaliumhydroxid, oder durch Zugabe von Säuren, wie Phosphorsäure, in Form von fein verteilten oft schwer löslichen Niederschlägen fällen.

Nach der Variante (f) des Verfahrens (A) werden die nahezu fehlerstellenfreien Azulminsäuren mit Metallsalz-Komplexen von mit Carbonylverbindungen stabilisierten Azulminsäuren behandelt.

Die Herstellung der als Ausgangsstoffe benötigten Metallsalz-Komplexe von mit Carbonylverbindungen stabilisierten Azulminsäuren wird im Zusammenhang mit der Herstellung der erfindungsgemäßen Stoffe beschrieben (vgl. Seite 51).

Vorzugsweise verwendbare Metallsalz-Komplexe sind hierbei solche, die sich von denjenigen

Metallverbindungen ableiten, die bereits im Zusammenhang mit der Variante (e) des Verfahrens (A) vorzugsweise genannt wurden.

Bei der Durchführung der Variante (f) des Verfahrens (a) arbeitet man in wäßrigem Medium, vorzugsweise in Wasser. Es ist jedoch auch möglich, das Wasser partiell durch andere Verdünnungsmittel, wie Alkohole, zu ersetzen.

Die Reaktionstemperaturen können im Falle der Variante (f) des Verfahrens (A) innerhalb eines größeren Bereiches variiert werden. Im allgemeinen arbeitet man zwischen 0°C und 150°C, vorzugsweise zwischen 20°C und 120°C.

Die Umsetzung nach Variante (f) des Verfahrens (A) wird im allgemeinen unter Normaldruck ausgeführt. Es ist jedoch auch möglich, unter erhöhtem Druck zu arbeiten.

Bei der Durchführung der Variante (f) des Verfahrens (A) setzt man auf 1 Mol (bezogen auf die Moleküleinheit

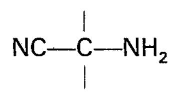

mit dem Äquivalentgewicht 54) nahezu fehlerstellenfreier Azulminsäure vorzugsweise 0,5 bis 1 Mol an Metallsalz-Komplex stabilisierter Azulminsäure ein. Die Aufarbeitung erfolgt nach üblichen Methoden.

In den nach der Variante (f) des Verfahrens (A) herstellbaren Produkten eventuell vorhandene überschüssige Metallverbindungen lassen sich je nach Metallverbinding durch Zugabe von Basen, wie Ammoniak, Natriumhydroxid oder Kaliumhydroxid, oder durch Zugabe von Säuren, wie Phosphorsäure, in Form von fein verteilten, oft schwer löslichen Niederschlägen fällen.

Nach der Variante (g) des Verfahrens (A) werden die nahezu fehlerstellenfreien Azulminsäuren mit Oxydationsmitteln behandelt. Hierbei kommen als Oxydationsmittel alle üblichen oxidierend wirkenden Reagenzien in Frage. Vorzugsweise verwendbar sind Luft, Sauerstoff, Kaliumpermanganat, Wasserstoffperoxid, Chromsäure und Chlorkalk.

Bei der Durchführung der Variante (g) des Verfahrens (A) arbeitet man in wäßrigem Medium, vorzugsweise in Wasser. Es ist jedoch auch möglich, das Wasser partiell durch andere Verdünnungsmittel wie organische Carbonsäuren zu ersetzen, wobei Ameisensäure und Essigsäure speziell genannt seien.

Die Reationstemperaturen können im Falle der Variante (g) des Verfahrens (A) innerhalb eines größeren Bereiches variiert werden. Im allgemeinen arbeitet man zwischen 0°C und 150°C, vorzugsweise zwischen 20°C und 120°C.

Die Umsetzung nach Variante (g) des Verfahrens (A) wird im allgemeinen unter Normaldruck durchgeführt. Es ist jedoch auch möglich, unter erhöhtem Druck zu arbeiten.

Bei der Durchführung der Variante (g) des Verfahrens (A) setzt man auf 1 Mol (bezogen auf die Moleküleinheit

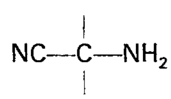

mit dem Äquivalentgewicht 54) nahezu fehlerstellenfreier Azulminsäure eine katalytische Menge oder auch eine größere, gegebenenfalls äquimolare Menge an Oxydationsmittel ein. Die Aufarbeitung erfolgt nach üblichen Methoden.

Nach dem Verfahren (B) wird monomere wäßrige Blausäure gegebenenfalls in Anwesenheit von Zusatzstoffen mit Hilfe basischer Katalysatoren unter hydrolysierenden Bedingungen polymerisiert. Man geht hierbei von verdünnten wäßrigen Blausäure-Lösungen aus. Im allgemeinen verwendet man Lösungen, deren Blausäure-Konzentration zwischen 10 und 30%, vorzugsweise zwischen 15 und 25% liegt.

Als basische Katalysatoren kommen bei dem Verfahren (B) organische und anorganische Basen sowie basische Salze der verschiedensten Art in Betracht. Vorzugsweise verwendbar sind Alkalicyanide und Alkalicyanate, wie Natriumcyanid, Kaliumcyanid, Natriumcyanat und Kaliumcyanat, ferner Amine und Ammoniak. Vorteilhafterweise können auch Gemische verschiedenster Basen bzw. basischer Salze eingesetzt werden; beispielsweise genannt sei ein Gemisch aus Natriumcyanat und wäßriger Ammoniak-Lösung.

Als Zusatzstoffe können bei der Durchführung des Verfahrens (B) alle diejenigen Materialien verwendet werden, die bereits im Zusammenhang mit der Beschreibung der erfindungsgemäßen Produkte als Zusatzstoffe genannt wurden.

Bei der Durchführung des Verfahrens (B) arbeitet man in wäßrigem Medium, vorzugsweise in Wasser. Es ist jedoch auch möglich, das Wasser partiell durch andere Verdünnungsmittel, wie Schwefelwasserstoff oder Alkohole zu ersetzen, wobei Methanol und Äthanol speziell genannt seien.

Die Reaktionstemperaturen können im Falle des Verfahrens (B) innerhalb eines bestimmten Bereiches variiert werden, wobei die Temperaturführung jedoch der jeweiligen Reaktionsphase angepaßt sein muß. Im allgemeinen arbeitet man so, daß man zunächst 1 bis 4 Stunden bei Temperaturen zwischen 30°C und 70°C, vorzugsweise zwischen 40°C und 60°C polymerisiert, so daß ein etwa 60%iger Umsatz der monomeren Blausäure erreicht wird. Danach wird weitere 4 bis 10 Stunden bei

Temperaturen zwischen 70°C und 95°C, vorzugsweise zwischen 80°C und 90°C polymerisiert, wodurch ein Umsatz von etwa 90 bis 95% erzielt wird. Anschließend kann man zur Vervollständigung der Umsetzung sowie zur Entfernung von noch vorhandener Blausäure und gegebenenfalls vorhandenen flüchtigen Aminen oder Ammoniak mehrere Stunden auf Temperaturen um etwa 100°C erhitzen.

Die Umsetzung nach dem Verfahren (B) wird im allgemeinen unter Normaldruck ausgeführt. Es ist jedoch auch möglich, unter erhöhtem Druck bei Temperaturen zwischen 120°C und 150°C zu arbeiten. Hierbei lassen sich in gezielter Weise relativ große Mengen an Fehlerstellen in den Verfahrensprodukten erzeugen.

Bei der Durchführung des Verfahrens (B) setzt man den basischen Katalysator in einer solchen Menge ein, daß sein Anteil 1 bis 15%, vorzugsweise 2 bis 10% der eingesetzten monomeren Blausäure beträgt.

Die Zusazstoffe werden dem Reaktionsgemisch gegebenenfalls in einer solchen Menge zugesetzt, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden. Im allgemeinen verfährt man in der Weise, daß man nach der Entfernung von überschüssiger Blausäure und gegebenenfalls vorhandener flüchtiger Amine bzw. Ammoniak das Reaktionsgemisch filtriert und das dabei erhaltene Festprodukt gegebenenfalls wäscht und trocknet.

Bei dem erfindungsgemäßen Verfahren (1) werden als Ausgangsverbindungen weiterhin Carbonylverbindungen eingesetzt. Als solche kommen hierbei alle Verbindungen mit reaktiven Carbonylgruppen in Betracht. Hierzu gehören vorzugsweise Aldehyde, Ketone und Ketoester.

Besonders bevorzugt verwendbare Aldehyde sind Formaldehyd, Acetaldehyd, Hydroxyacetaldehyd, Isobutyraldehyd, Chloral, Hydroxyläthylaldehyd, Hyroxypivalinaldehyd, Acrolein, Crotonaldehyd, Glyoxal, Methylglyoxal, Furfurol, Hydroxymethylfurfurol, Glukose, Salicylaldehyd und Glycerinaldehyd.

Weiterhin können auch insbesondere solche Verbindungen verwendet werden, die unter den Reaktionsbedingungen Aldehyde, wie z.B. Formaldehyd, freisetzen. Hierzu gehören vorzugsweise Paraformaldehyd, Trioxan, Trithian, Chloralhydrat und Halbacetale des Formaldehyds, z.B. solche, die sich von Äthylenglykol, Diäthylenglykol, Glyzerin, Methanol, Äthanol und Propanol ableiten.

Ferner sind auch insbesondere solche Aldehyde oder Aldehyd-Derivate verwendbar, die unter den Bedingungen der Formose-Zuckergemisch-Synthese in situ aus Formaldehyd erzeugt werden. Im vorliegenden Fall verfährt man so, daß man modifizierte Azulminsäuren, die mit Calciumhydroxid, Bleihydroxid oder mit anderen geeigneten Katalysatoren beladen sind oder die katalytisch wirkenden Substanzen in komplexer Bindung enthalten, auf Formaldehyd einwirken läßt. Hierbei wird Formaldehyd in rascher Reaktion in $C_2$-, $C_3$-, $C_4$-, $C_5$- und $C_6$-Aldehyde, wie Hydroxyacetalaldehyd, Glyzerinaldehyd und höherfunktionelle Hydroxylgruppenhaltige Aldehyde bzw. Polyhydroxyketone umgewandelt, welche in situ mit Aminogruppen der Azulminsäuren stabilisierende Kondensationsreaktionen eingehen.

Als bevorzugt verwendbare Ketone seien Dihydroxyaceton und Cyclohexanon speziell genannt, als bevozugt verwendbare Ketoester sei Acetessigester beispielhaft erwähnt.

Als Zusatzstoffe können bei der Durchführung des erfindungsgemäßen Verfahrens (1) alle diejenigen Materialien verwendet werden, die bereits im Zusammenhang mit der Beschreibung der erfindungsgemäßen Produkte als Zusatzstoffe genannt wurden.

Bei der Durchführung des erfindungsgemäßen Verfahrens (1) setzt man auf 1 Mol (bezogen auf die Moleküleinheit

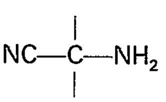

mit dem Äquivalentgewicht 54) gegebenenfalls Zusatzstoffe enthaltende modifizierte Azulminsäure 0,05 bis 6 Mol, vorzugsweise 0,2 bis 3 Mol an Carbonylverbindung, eine katalytische oder auch eine größere Menge an Säure oder Base (etwa 1 Mol Säure bzw. Base auf 100 Gewichtsteile Azulminsäure) sowie gegebenenfalls eine solche Menge an Zusatzstoffen ein, daß deren Anteil im Endprodukt zwischen 1 und 95 Gewichtsprozent liegt. Die Aufarbeitung erfolgt nach üblichen Methoden. Im allgemeinen verfährt man in der Weise, daß man das Reaktionsgemisch nach beendeter Umsetzung filtriert und das erhaltene Festprodukt gegebenenfalls wäscht und trocknet.

Verwendet man bei der erfindungsgemäßen Kondensation Carbonylverbindungen wie Crotonaldehyd, Cyclohexanon oder Acetessigester, so ist der erreichbare Umsetzungsgrad bei diesen topochemischen Reaktionen infolge des ziemlich großen molekularen Querschnitts dieser Agentien langsamer zu erzielen als beim Einsatz von Verbindungen mit kleinerem molekularen Querschnitt. In diesen Fällen sind daher relativ lange Reaktionszeiten (mehr als 30 Stunden) und verhältnismäßig hohe Reaktionstemperaturen erforderlich, um eine ausreichende Stabilisierung zu erzielen.

*Erfindungsgemäßes Herstellungsverfahren (2)*

Nach dem erfindungsgemäßen Verfahren (2) werden gegebenenfalls Zusatzstoffe enthaltende

Säureadditionssalze bzw. Komplex-Verbindungen von modifizierten Azulminsäuren mit einem Gehalt von 0,5 bis 55 Gewichtsprozent an ionischen Gruppen der Formel

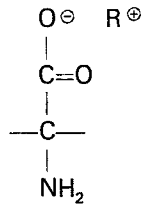

$(F_1)$

und mit einem Gehalt von 0,5 bis 15 Gewichtsprozent an Gruppen der Formel

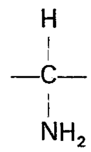

$(F_2)$,

in wäßrigem Medium gegebenenfalls in Anwesenheit von Zusatzstoffen mit Carbonylverbindungen kondensiert.

In der Formel $(F_1)$ steht R vorzugsweise für diejenigen Substituenten, die bereits im Zusammenhang mit der Beschreibung der erfindungsgemäßen Stoffe vorzugsweise für R genannt wurden.

Bei dem erfindungsgemäßen Verfahren (2) als Ausgangsstoffe zu verwendende Säureadditionssalze bzw. Komplex-Verbindungen von modifizierten Azulminsäuren (= fehlerstellenhaltige Azulminsäuren) können 1 bis 95 Gewichtsprozent, vorzugsweise 5 bis 90 Gewichtsprozent an Zusatzstoffen enthalten. Als Zusatzstoffe kommen dabe alle diejenigen Materialien in Betracht, die bereits im Zusammenhang mit der Beschreibung der erfindungsgemäßen Produkte als Zusatzstoffe genannt wurden.

Als Säuren, die in den als Ausgangstoffen benötigten Säureadditions-Salzen modifizierter Azulminsäuren enthalten sein können, kommen vorzugsweise alle diejenigen Säuren in Frage, die bereits im Zusammenhang mit der Beschreibung der erfindungsgemäßen Stoffe erwähnt wurden. Speziell genannt seien Ameisensäure, Salpetersäure, Phosphorsäure, phosphorige Säure, Chloressigsäure, Dichloressigsäure, Trichloressigsäure und Flußsäure.

Als Salze, die in den als Ausgangsstoffen benötigten Komplex-Verbindungen modifizierter Azulminsäuren in komplexer Bindung enthalten sein können, kommen vorzugsweise alle diejenigen Ammoniumsalze und Metallverbindungen in Frage, die bereits im Zusammenhang mit der Beschreibung der erfindungsgemäßen Stoffe vorzugsweise erwähnt wurden. Speziell genannt seien Eisen-II-acetat, Eisen-II-sulfat, Eisen-III-sulfat, Kupferacetat, Zinkacetat, Mangan-II-acetat, Cobaltchlorid, Zinkchlorid und Zinn-II-chlorid.

Die als Ausgangsstoffe verwendbaren Säureadditionssalze modifizierter Azulminsäuren sind bisher nur teilweise bekannt. Sie lassen sich herstellen, indem man die nach den Verfahren (A) bzw. (B) zugänglichen, gegebenenfalls Zusatzstoffe enthaltenden modifizierten Azulminsäuren in wäßrigem Medium bei Raumtemperatur oder auch bei erhöhter Temperatur mit der jeweiligen Säure verrührt. Die Reaktionsprodukte werden durch Filtration isoliert. — Die Herstellung einiger Säureadditionssalze modifizierter Azulminsäuren wurde bereits im Zusammenhang mit der Beschreibung der Herstellung modifizierter Azulminsäuren in allgemeiner Form offenbart.

Die weiterhin bei dem erfindungsgemäßen Verfahren (2) als Ausgangsstoffe verwendbaren Komplex-Verbindungen modifizierter Azulminsäuren sind bisher nur teilweise bakannt. Sie lassen sich herstellen, indem man die nach den Verfahren (A) bzw. (B) zugänglichen, gegebenenfalls Zusatzstoffe enthaltenden modifizierten Azulminsäuren in wäßigem Medium bei Temperaturen zwischen 20°C und 120°C, vorzugsweise 50°C bis 110°C, verrührt. Die Aufarbeitung erfolgt nach üblichen Methoden. Im allgemeinen isoliert man die Reaktionsprodukte durch Filtration. — Die Herstellung einiger Komplex-Verbindungen modifizierter Azulminsäuren wurde bereits im Zusammenhang mit der Beschreibung der Herstellung modifizierter Azulminsäuren in allgemeiner Form offenbart.

Als Carbonylverbindungen kommen bei der Durchführung des erfindungsgemäßen Verfahrens (2) bevorzugt alle diejenigen Aldehyde, Aldehyd abgebenden Substanzen, Ketone und Ketoester in Frage, die bereits im Zusammenhang mit der Beschreibung des erfindungsgemäßen Verfahrens (1) speziell genannt wurden.

Als Zusatzstoffe können bei oder Durchführung des erfindungsgemäßen Verfahrens (2) alle diejenigen Materialien verwendet werden, die bereits im Zusammenhang mit der Beschreibung der erfindungsgemäßen Produkte als Zusatzstoffe genannt wurden.

Bei der Durchführung des erfindungsgemäßen Verfahrens (2) setzt man auf 1 Mol (bezogen auf die Moleküleinheit

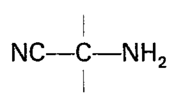

mit dem Äquivalentgewicht 54) gegebenenfalls Zusatzstoffe enthaltende Säureadditionssalze bzw. Komplex-Verbindungen modifizierter Azulminsäure 0,05 bis 6 Mol, vorzugsweise 0,2 bis 3 Mol an Carbonylverbindung, eine katalytische oder auch eine größere Menge an Säure oder Base (etwa 1 Mol Säure bzw. Base auf 100 Gewichtsteile Azulminsäure) sowie gegebenenfalls eine solche Menge an Zusatzstoffen ein, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden.

*Erfindungsgemäßes Herstellungsverfahren (3)*

Nach dem erfindungsgemäßen Verfahren (3) werden nahezu fehlerstellenfreie Azulminsäuren gegebenenfalls in Gegenwart von Zusatzstoffen in wäßrigem Medium mit Carbonylverbindungen kondensiert.

Die als Ausgangsstoffe benötigten nahezu fehlerstellenfreien Azulminsäuren sind bekannt (vgl. Houben-Weyl, Band 8 (1952), Seite 261; DT—PS 662 338 und DT—PS 949 060).

Als Carbonylverbindungen kommen bei der Durchführung des erfindungsgemäßen Verfahrens (3) wiederum alle üblichen Verbindungen mit reaktiven Carbonylgruppen in Frage. Hierzu gehören vorzugsweise alle diejenigen Aldehyde, Aldehyd abgebenden Substanzen, Ketone und Ketoester, die bereits im Zusammenhang mit der Beschreibung des erfindungsgemäßen Verfahrens (1) speziell genannt wurden.

Als Zusatzstoffe können bei der Durchführung der erfindungsgemäßen Verfahrens (3) alle diejenigen Materialien verwendet werden, die bereits im Zusammenhang mit der Beschreibung der erfindungsgemäßen Produkte als Zusatzstoffe genannt wurden.

Bei der Durchführung des erfindungsgemäßen Verfahrens (3) setzt man auf 1 Mol (bezogen auf die Moleküleinheit

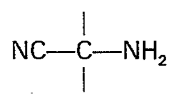

mit dem Äquivalentgewicht 54) nahezu fehlerstellenfreier Azulminsäure 0,05 bis 6 Mol, vorzugsweise 0,2 bis 3 Mol an Carbonylverbindung, gegebenenfalls eine katalytische Menge oder auch eine größere Menge an Säure oder Base sowie gegebenenfalls eine solche Menge an Zusatzstoffen ein, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden.

Bei der Durchführung der erfindungsgemäßen Verfahren (1), (2) und (3) arbeitet man in wäßigem Medium oder in wäßrig-alkoholischem Medium. Vorzugsweise kommt Wasser oder ein Gemisch aus Wasser und Alkohol, wie Methanol oder Äthanol, als Reaktionsmedium in Betracht.

Die Kondensation nach den erfindungsgemäßen Verfahren (1), (2) und (3) wird unter sauren, neutralen oder basischen Bedingungen vorgenommen.

Die Reaktionstemperaturen können im Falle der erfindungsgemäßen Verfahren (1), (2) und (3) innerhalb eines größeren Bereiches variiert werden. Im allgemeinen arbeitet man bei Temperaturen zwischen 10°C und 250°C, vorzugsweise zwischen 50°C und 150°C.

Die Umsetzung nach den erfindungsgemäßen Verfahren (1), (2) und (3) wird im allgemeinen unter Normaldruck ausgeführt. Es ist jedoch auch möglich, unter erhöhtem Druck zu arbeiten.

Bei der Durchführung der erfindungsgemäßen Verfahren (1), (2) und (3) genügt häufig eine geringe Menge an Carbonylverbindungen (0,05 bis 0,2 Mol), um Stoffe zu erhalten, die eine hohe thermische und hydrolytische Stabilität gegen Cyanwasserstoff-Abspaltung besitzen.

*Erfindungsgemäßes Herstellungsverfahren (4)*

Nach dem erfindungsgemäßen Verfahren (4) wird Blausäure mit Hilfe basischer Katalysatoren unter hydrolysierenden Bedingungen in wäßrigem Medium gegebenenfalls in Gegenwart von Zusatzstoffen polymerisiert und anschließend ohne vorherige Isolierung der Reaktionsprodukte gegebenenfalls in Gegenwart von Zusatzstoffen mit Carbonylverbindungen in wäßrigem Medium kondensiert.

Man geht hierbei von verdünnten wäßrigen Blausäure-Lösungen aus, denen man gegebenenfalls Zusatzstoffe beimischt. Im allgemeinen verwendet man Lösungen, deren Blausäure-Konzentration zwischen 10 und 30%, vorzugsweise zwischen 15 und 25% liegt.

Als basische Katalysatoren kommen bei dem erfindungsgemäßen Verfahren (4) organische und anorganische Basen sowie basische Salze der verschiedensten Art in Betracht. Vorzugsweise verwendbar sind hierbei alle diejenigen Basen bzw. Salze, die bereits im Zusammenhang mit der Beschreibung des Verfahrens (B) vorzugsweise genannt wurden. Vorteilhafterweise können auch Gemische verschiedenster Basen bzw. basischer Salze eingesetzt werden; speziell genannt sei ein Gemisch aus Natriumcyanat und wäßriger Ammoniak-Lösung.

Als Zusatzstoffe, die dem Reaktionsgemisch vor und/oder nach der Blausäure-Polymerisation zugefügt werden können, alle diejenigen Materialen in Betracht, die bereits im Zusammenhang mit der Beschreibung der erfindungsgemäßen Produkte als Zusatzstoffe genannt wurden.

Polymerisation zugefügt werden, kommen wiederum alle üblichen Verbindungen mit reaktiven Carbonylgruppen in Frage. Hierzu gehören vorzugsweise alle diejenigen Aldehyde, Aldehyd abgebenden

Substanzen, Ketone und Ketoester, die bereits im Zusammenhang mit der Beschreibung des erfindungsgemäßen Verfahrens (1) speziell genannt wurden.

Bei der Durchführung des erfindungsgemäßen Verfahrens (4) arbeitet man in wäßrigem Medium, vorzugsweise in Wasser. Es ist jedoch auch möglich, das Wasser partiell durch andere Verdünnungsmittel, wie Schwefelwasserstoff oder Alkohole zu ersetzen, wobei Methanol und Äthanol speziell genannt seien.

Die Reaktionstemperaturen können im Falle des erfindungsgemäßen Verfahrens (4) innerhalb eines bestimmten Bereiches variiert werden, wobei die Temperaturführung jedoch der jeweiligen Reaktionsphase angepaßt sein muß. Im allgemeinen arbeitet man so, daß man zunächst 1 bis 4 Stunden bei Temperaturen zwischen 30°C und 70°C, vorzugsweise zwischen 40°C und 60°C polymerisiert, so daß ein etwa 60%iger Umsatz der monomeren Blausäure erreicht wird. Danach wird weitere 4 bis 10 Stunden bei Temperaturen zwischen 70°C und 95°C, vorzugsweise zwischen 80°C und 90°C polymerisiert, wodurch ein Umsatz von etwa 90 bis 95% erzielt wird. Anschließend kann man zur Vervollständigung der Umsetzung sowie zur Entfernung von noch vorhandener Blausäure und gegebenenfalls vorhandenen flüchtigen Aminen oder Ammoniak mehrere Stunden auf Temperaturen um etwa 100°C erhitzen. Danach wird die Kondensation mit Carbonylverbindungen bei den dazu üblichen Temperaturen vorgenommen. Im allgemeinen arbeitet man bei Temperaturen zwischen 10°C und 250°C, vorzugsweise zwischen 50°C und 150°C.

Die Umsetzung nach dem erfindungsgemäßen Verfahren (4) wird im allgemeinen unter Normaldruck ausgeführt. Es ist jedoch auch möglich, unter erhöhtem Druck bei Temperaturen zwischen 120°C und 150°C zu arbeiten. Hierbei lassen sich in gezielter Weise relativ große Mengen an Fehlerstellen in den Verfahrensprodukten erzeugen.

Bei der Durchführung des erfindungsgemäßen Verfahrens (4) setzt man den basischen Katalysator in einer solchen Menge ein, daß sein Anteil 1 bis 15%, vorzugsweise 2 bis 10% der eingesetzten monomeren Blausäure beträgt. — Die Menge an Carbonylverbindungen wird so bemessen, daß pro Mol (bezogen auf die Moleküleinheit

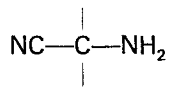

mit dem Äquivalentgewicht 54) an entstehender Azulminsäure 0,05 bis 6 Mol, vorzugsweise 0,2 bis 3 Mol an Carbonylverbindung vorhanden sind. Die Zusatzstoffe werden dem Reaktionsgemisch gegebenenfalls in einer solchen Menge zugesetzt, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden. Im allgemeinen verfährt man in der Weise, daß man nach der Entfernung von überschüssiger Blausäure und gegebenenfalls vorhandener flüchtiger Amine bzw. Ammoniak das Reaktionsgemisch filtriert und das dabei erhaltene Festprodukt gegebenenfalls wäscht und trocknet.

*Erfindungsgemäßes Herstellungsverfahren (5)*

Nach dem erfindungsgemäßen Verfahren (5) werden modifizierte Azulminsäuren zunächst in wäßrigem Medium mit Basen umgesetzt, dann gegebenenfalls mit Metallsalzen behandelt und anschließend gegebenenfalls in Gegenwart von Zusatzstoffen mit Carbonylverbindungen kondensiert.

Als modifizierte Azulminsäuren kommen hierbei alle diejenigen fehlerstellenhaltigen Azulminsäuren in Frage, die auch bei der Durchführung des erfindungsgemäßen Verfahrens (1) als Ausgangsstoffe eingesetzt werden können.

Als Basen oder basische Salze kommen bei der Durchführung des erfindungsgemäßen Verfahrens (5) die verschiedensten anorganischen oder organischen Basen sowie basische Salze in Betracht. Vorzugsweise verwendbar sind Alkalimetallhydroxide, wie Lithiumhydroxid, Natriumhydroxid und Kaliumhydroxid, Alkalimetallcarbonate, wie Natriumcarbonat, Kaliumcarbonat und Kaliumhydrogencarbonat, Alkalimetallsulfide, wie Natriumsulfid, Kaliumsulfid und Kaliumhydrogensulfid, Alkalimetallthiosulfate, wie Natriumthiosulfat, Alkylamine, ferner Ammoniumhydroxid und Ammoniumsalze, wie Ammoniumpolysulfide.

Als Metallsalze kommen bei der Durchführung des erfindungsgemäßen Verfahrens (5) vorzugsweise alle diejenigen Metallsalze in Frage, die bereits im Zusammenhang mit der Beschreibung der Variante (e) des Verfahrens (A) vorzugsweise erwähnt wurden. Speziell genannt seien Eisen-II-acetat, Eisen-II-sulfat, Eisen-III-sulfat, Kupferacetat, Zinkacetat, Mangan-II-acetat, Cobaltchlorid, Zinkchlorid und Zinn-II-chlorid.

Als Zusatzstoffe kommen alle diejenigen Materialien in Betracht, die bereits im Zusammenhang mit der Beschreibung der erfindungsgemaßen Produkte als Zusatzstoffe genannt wurden.

Als Carbonylverbindungen kommen im Falle des erfindungsgemäßen Verfahrens (5) niederum alle üblichen Verbindungen mit reaktiven Carbonylgruppen in Frage. Hierzu gehören vorzugsweise alle diejenigen Aldehyde, Aldehyd abgebenden Substanzen, Ketone und Ketoester, die bereits im Zusammenhang mit der Beschreibung des erfinungsgemäßen Verfahrens (1) speziell genannt wurden.

Bei der Durchführung des erfindungsgemäßen Verfahrens (5) arbeitet man in wäßrigem Medium,

vorzugweise in Wasser. Es ist jedoch auch möglich, das Wasser partiell durch andere Verdünnungsmittel, wie Schwefelwasserstoff oder Alkohole zu ersetzen, wobei Methanol und Äthanol speziell genannt seien.

Die Reaktionstemperaturen können im Falle des erfindungsgemäßen Verfahrens (5) innerhalb eines größeren Bereiches variiert werden. Im allgemeinen arbeitet man zunächst zwischen 50°C und 120°C, vorzugsweise zwischen 60°C und 110°C. Danach wird die Kondensation mit Carbonylverbindungen bei den dazu üblichen Temperaturen vorgenommen. Im allgemeinen arbeitet man bei Temperaturen zwischen 10°C und 250°C, vorzugsweise zwischen 50°C und 150°C.

Die Umsetzung nach dem erfindungsgemäßen Verfahren (5) wird im allgemeinen unter Normaldruck ausgeführt. Es ist jedoch auch möglich, unter erhöhtem Druck zu arbeiten. Letzteres empfiehlt sich insbesondere dann, wenn Ammoniumhydroxid oder flüchtige Amine als Basen eingesetzt wurden.

Bei der Durchführung des erfindungsgemäßen Verfahrens (5) setzt man auf 1 Mol (bezogen auf die Moleküleinheit

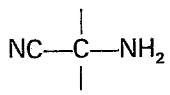

mit dem Äquivalentgewicht 54) an modifiezierter Azulminsäure vorzugsweise 0,5 Bis 4 Mol an Base oder basischem Salze, gegebenenfalls 1 bis 2 Mol an Metallsalz, 0,05 bis 6 Mol, vorzugsweise 0,2 bis 3 Mol an Carbonylverbindung sowie gegebenenfalls eine solche Menge an Zusatzstoffen ein, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden. Im allgemeinen verfährt man in der Weise, daß man das Reaktionsgemisch nach beendeter Umsetzung filtiert und das erhaltene Festprodukt gegebenenfalls wäscht und trocknet. Es ist jedoch auch möglich, die erhaltene Dispersion zunächst einzuengen, dann mit Alkohol, wie Methanol, zu versetzen, erneut unter vermindertem Druck einzuengen und nach mehrmaligem Wiederholen dieses Vorgangs das dabei anfallende Festprodukt absufiltrieren, zu waschen und gegebenenfalls zu trocknen.

*Erfindungsgemäßes Herstellungsverfahren (6)*

Nach dem erfindungsgemäßen Verfahren (6) werden modifizierte Azulminsäuren in wäßrigem Medium zunächst mit organischen oder anorganischen Säuren behandelt und anschließend gegebenenfalls in Gegenwart von Zusatzstoffen mit Carbonylverbindungen kondensiert.

Als modifizierte Azulminsäuren kommen hierbei alle diejenigen fehlerstellenhaltigen Azulminsäuren in Frage, die auch bei der Durchführung des erfindungsgemäßen Verfahrens (1) als Ausgangsstoffe eingesetzt werden können.

Als anorganische oder organische Säuren kommen vorzugsweise alle diejenigen Säuren in Frage, die bereits im Zusammenhang mit der Beschreibung der erfindungsgemäßen Produkte vorzugsweise aufgezählt wurden.

Als Carbonylverbindungen kommen bei der Durchführung des erfindungsgemäßen Verfahrens (6) wiederum alle üblichen Verbindungen mit reaktiven Carbonylgruppen in Frage. Hierzu gehören vorzugsweise alle diejenigen Aldehyde, Aldehyd abgebenden Substanzen, Ketone und Ketoester, die bereits im Zusammenhang mit der Beschreibung des erfindungsgemäßen Verfahrens (1) speziell genannt wurden.

Als Zusatzstoffe können bei der Durchführung des erfindungsgemäßen Verfahrens (6) alle diejenigen Materialien verwendet werden, die bereits im Zusammenhang mit der Beschreibung der erfindungsgemäßen Produkte als Zusatzstoffe genannt wurden.

Bei der Durchführung des erfindungsgemäßen Verfahrens (6) arbeitet man in wäßrigem Medium, vorzugsweise in Wasser. Es ist jedoch auch möglich, das Wasser partiell durch andere Verdünnungsmittel, wie Alkohole zu ersetzen, wobei Methanol und Äthanol speziell genannt seien.

Die Reaktionstemperaturen können im Falle des erfindungsgemäßen Verfahrens (6) innerhalb eines größeren Bereiches variiert werden. Im allgemeinen führt man die Behandlung der Azulminsäuren mit Säuren bei Temperaturen zwischen 0°C und 200°C, vorzugsweise zwischen 20°C und 120°C durch. Danach wird die Kondensation mit Carbonylverbindungen bei den dazu üblichen Temperaturen vorgenommen. Im allgemeinen arbeitet man bei Temperaturen zwischen 10°C und 250°C, vorzugsweise zwischen 50°C und 150°C.

Die Umsetzung nach dem erfindungsgemäßen Verfahren (6) wird im allgemeinen unter Normaldruck ausgeführt. Es ist jedoch auch möglich, unter erhöhtem Druck zu arbeiten.

Bei der Durchführung des erfindungsgemäßen Verfahrens (6) setzt man auf 1 Mol (bezogen auf die Moleküleinheit

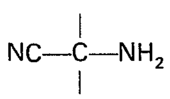

mit dem Äquivalentgewicht 54) an modifizierter Azulminsäure eine katalytische oder auch eine größere Menge, — vorzugsweise 1 bis 4 Mol —, an anorganischer oder organischer Säure, 0,05 bis 6 Mol, vorzugsweise 0,2 bis 3 Mol an Carbonylverbindung sowie gegebenenfalls eine solche Menge an Zusatzstoffen ein, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden. Im allgemeinen verfährt man in der Weise, daß man das Reaktionsgemisch nach beendeter Umsetzung filtriert und das erhaltene Festprodukt gegebenenfalls wäscht und trocknet. In den so entstehenden Produkten gegebenenfalls noch vorhandene überschüssige Säure kann durch Begasung mit Ammoniak in das entsprechende Ammoniumsalze überführt werden, wobei die Umsetzung vorteilhafterweise in fester Phase im Wirbelbett ausgeführt wird.

*Erfindungsgemäßes Herstellungsverfahren (7)*

Nach dem erfindungsgemäßen Verfahren (7) werden nahezu fehlerstellenfreie Azulminsäuren in Anwesenheit von hydrolytisch abbaubaren Naturstoffen sowie in Gegenwart von Säure in wäßrigem Medium mit Carbonylverbindungen kondensiert.

Als hydrolytisch abbaubare Naturstoffe kommen hierbei alle diejenigen Naturstoffe in Frage, die unter dem Einfluß von Säure ganz oder partiell abgebaut werden.

Hierzu gehören vorzugsweise Cellulosen, Hemicellulosen, Zucker, Lignin, polymere Chinone, Holzpulver, pflanzliches Material, Polypeptide wie Gelatine und Wolle, ferner Hefeproteine, Algenmassen und Torfmassen.

Als Säuren kommen alle ausreichend starken organischen oder anorganischen Säuren in Betracht. Vorzugsweise verwendbar sind Phosphorsäure und phosphorige Säure.

Als Carbonylverbindungen kommen bei der Durchführung des erfindungsgemäßen Verfahrens (7) wiederum alle überlichen Verbindungen mit reaktiven Carbonylgruppen in Frage. Hierzu gehören vorzugsweise alle diejenigen Aldehyde, Aldehyd abgebenden Substanzen, Ketone und Ketoester, die bereits im Zusammenhang mit der Beschreibung des erfindungsgemäßen Verfahrens (1) speziell genannt wurden.

Bei der Durchführung des erfindungsgemäßen Verfahrens (7) arbeitet man in wäßrigem Medium, vorzugsweise in Wasser. Es ist jedoch auch möglich, das Wasser partiell durch andere Verdünnungsmittel, wie Alkohole zu ersetzen, wobei Methanol und Äthanol speziell genannt seien.

Die Reaktionstemperaturen können bei der Durchführung des erfindungsgemäßen Verfahrens (7) innerhalb eines größeren Bereiches variiert werden. Im allgemeinen arbeitet man bei Temperaturen zwischen 10°C und 250°C, vorzugsweise zwischen 50°C und 150°C.

Die Umsetzung nach dem erfindungsgemäßen Verfahren (7) wird im allgemeinen unter Normaldruck ausgeführt. Es ist jedoch auch möglich, unter erhöhtem Druck zu arbeiten.

Bei der Durchführung des erfindungsgemäßen Verfahrens (7) setzt man auf 1 Mol (bezogen auf die Moleküleinheit

$$NC-\overset{|}{\underset{|}{C}}-NH_2$$

mit dem Äquivalentgewicht 54) an Azulminsäure eine katalytische oder auch eine größere Menge, — vorzugsweise 1 bis 4 Mol —, an anorganischer oder organischer Säure, 0,05 bis 6 Mol, vorzugsweise 0,2 bis 3 Mol an Carbonylverbindung sowie eine solche Menge an hydrolytisch abbaubaren Naturstoffen, daß deren Anteil im Endprodukt zwischen 1 und 95 Gewichtsprozent, vorzugsweise zwischen 5 und 90 Gewichtsprozent liegt. Hierbei erfolgt die Fehlerstellenerzeugung unter gleichzeitigem hydrolytischen Abbau der jeweiligen eingesetzten Naturstoffe und unter gleichzeitiger Stabilisierung der Azulminsäuren durch Kondensation mit Carbonylverbindungen. Im Falle der Verwendung von 0,2 bis 80%iger Phosphorsäure bzw. phosphoriger Säure und Polypeptiden werden letztere in Aminosäuregemische gespalten.

Die Azulminsäure bindet infolge ihrer zahlreichen Aminogruppen etwa 0,3 bis 0,4 Mol an Säure, z.B. Phosphorsäure bzw. phosphoriger Säure, während die phosphorsauren Salze der Aminosäuren oder die der Oligopolypeptide, bzw. die anderen niedermolekularen Spaltprodukte der eingesetzten Naturstoffe, auch wenn sie wasserlöslich sind, oft in großer Menge von der Azulminsäure-Matrix fixiert werden. Überschüssige Säure, z.B. Phosphorsäure, kann durch Zugabe von Calciumhydroxid als Calciumphosphat auf der Azulminsäure-Matrix gefällt werden. Sind hierbei hydrolysierte Zucker und Oligosaccharide vorhanden, so werden diese in Form ihrer meist schwer löslichen Calcium-Komplexe auf der Azulminsäure fixiert. Die nach diesem Verfahren erhaltenen Verfahrensprodukte können über längere Zeit gelagert werden, ohne daß eine unangenehme Geruchsbildung eintritt, wie es ansonsten der Fall ist, wenn Naturstoffe wie Oligopeptide, Peptid-Zuckergemische usw. durch biologische Prozesse abgebaut werden.

Die Isolierung der Verfahrensprodukte erfolgt nach üblichen Methoden, im allgemeinen durch Filtration.

*Nachbehandlung erfindungsgemäßen Produkte*

Sind in den nach den erfindungsgemäßen Verfahren (1) bis (7) hergestellten Produkten noch freie Aminogruppen vorhanden, so lassen sich diese Produkte durch Behandlung mit anorganischen oder

organischen Säuren in die entsprechenden Säure-Additions-Salze überführen. Hierbei verfährt man in der Weise, daß man die Produkte in wäßrigem Medium gegebenenfalls bei erhohter Temperatur mit der jeweiligen Säure verrührt. Die Reaktionsprodukte werden durch Filtration isoliert.

Sind in den nach den erfindungsgemäßen Verfahren (1) bis (7) hergestellten Produkten noch freie Carboxylgruppen vorhanden, so lassen sich diese Produkt durch Behandlung mit Basen in die entsprechenden Salze überführen. Hierbei verfährt man in der Weise, daß man die Produkte in wäßrigem Medium gegebenenfalls bei erhöhter Temperatur mit der jeweiligen Base verrührt. Die Reaktionsprodukte werden durch Filtration isoliert.

Darüber hinaus können erfindungsgemäße Produkte auch in Komplex-Verbindungen überführt werden. Hierbei verfährt man in der Weise, daß man die Produkte in wäßrigem Medium gegebenenfalls bei erhöhter Temperatur mit einem Metallsalz verrührt. Die Reaktionsprodukte werden durch Filtration isoliert.

*Spezielle Varianten erfindungsgemäßen Verfahren*

Die erfindungsgemäßen Verfahren können nach einer Reihe von speziellen Varianten durchgeführt werden. So besteht eine vorzugsweise Ausführung des erfindungsgemäßen Verfahrens (2) darin, daß man die Fehlerstellenerzeugung in nahezu fehlerstellenfreier Azulminsäure nach der Variante (a) des Verfahrens (A) mit Salpetersäure vornimmt, die Reaktionstemperatur dabei relativ niedrig hält, vorzugsweise zwischen 20°C und 30°C, und die dabei in topochemischer Reaktion entstehenden modifizierten Azulminsäuren, in denen 30 bis 50% der vorhandenen Aminogruppen in Form ionischer Gruppen der Konstitution

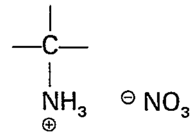

vorliegen, gegebenenfalls nach vorheriger Begasung mit Ammoniak mit Carbonylverbindungen im wäßrigen Medium kondensiert. Man führt die Begasung mit Ammoniak, bei der Spuren an freier Salpetersäure in Ammoniumnitrat umgewandelt werden, zweckmäßigerweise in fester Phase im Wirbelbett aus.

Eine weitere bevorzugte Ausführungsform des erfindungsgemäßen Verfahrens (2) besteht darin, daß man die Fehlerstellenerzeugung in nahezu fehlerstellenfreier Azulminsäure nach Variante (a) des Verfahrens (A) mit Phosphorsäure oder phosphoriger Säure vornimmt, die Reaktionstemperatur dabei relativ niedrig hält, vorzugsweise zwischen 20°C und 55°C, und die dabei in topochemischer Reaktion entstehenden, nur wenig $F_2$-Fehlerstellen aufweisenden modifizierten Azulminsäuren, die Phosphorsäure bzw. phosphorige Säure salzartig gebunden enthalten, gegebenenfalls nach vorheriger Begasung mit Ammoniak mit Carbonylverbindungen kondensiert. Die Begasung mit Ammoniak wird wiederum zweckmäßigerweise in fester Phase im Wirbelbett vorgenommen.

Eine bevorzugte Ausführungsform des erfindungsgemäßen Verfahrens (1) besteht darin, daß man die Fehlerstellenerzeugung in nahezu fehlerstellenfreier Azulminsäure mit 1 bis 4 Mol an 1 molarer Phosphorsäure vornimmt, die überschüssige Phosphorsäure anschließend durch Zugabe von Calciumchlorid als Calciumphosphat, durch Zugabe von Magnesiumchlorid als Magnesiumphosphat oder durch Zugabe von Ammoniak und Magnesiumsalzen als Ammonium-magnesium-phosphat fällt und danach gegebenenfalls in Anwesenheit von Zusatzstoffen mit Carbonylverbindungen kondensiert. Besonders bevorzugte Zusatzstoffe sind in diesem Fall pflanzliche Aschen, unlösliche Polychinone, Additions- bzw. Kondensationsprodukte des Benzochinons mit Aminen, insbesondere mit Ammoniak, ferner Lignin, Ligninsulfonsäure, Huminsäuren, diverse Flugaschen, Bauxit, Aluminiumoxid, Cobaltmolybdat, Siliciumdioxid, Aktivkohle, Zirkondioxid, Nikkeloxid, Palladiumoxid und Bariumoxid. Weiterhin kommen als bevorzugte Zusatzstoffe auch Zucker, wie Rohrzucker und andere keine freien Aldehydgruppen aufweisenden Zukker, oder auch aus Formaldehyd hergestellte Formose-Zukkergemische in Frage. Diese verschiedensten Zuckerarten können in Kanälen und Poren der starren Azulminsäurekörper fixiert werden. Darüber hinaus können die verschiedenen Zucker auch in Form ihrer meist schwer löslichen Calcium-Komplexe auf den Azulminsäuren aufziehen.

Eine weitere Ausführung des erfindungsgemäßen Verfahrens (1) besteht darin, daß man die Fehlerstellenerzeugung in nahezu fehlerstellenfreien Azulminsäuren nach Variante (b) des Verfahrens (A) mit Hilfe starker Basen, wie z.B. Kaliumhydroxid, unter Einhaltung relativ langer Reaktionszeiten vornimmt und die dabei in topochemischer Reaktion entstehenden, Polyelektrolytcharakter besitzenden modifizierten Azulminsäuren gegebenenfalls in Anwesenheit von Zusatzstoffen mit Carbonylverbindungen kondensiert.

Eine andere bevorzugte Ausführung des erfindungsgemäßen Verfahrens (1) besteht darin daß man die Fehlerstellenerzeugung in nahezu fehlerstellenfreien Azulminsäuren nach Variante (b) des Verfahrens (A) in wäßrig-alkoholischem Medium bei Temperaturen zwischen 120°C und 140°C mit gasförmigem Ammoniak unter Druck vornimmt und die dabei in topochemischer Reaktion entstehenden modifizierten Azulminsäuren, die einen hohen Gehalt an Ammoniumcarboxylat-Gruppen aufweisen, gegebenenfalls in Anwesenheit von Zusatzstoffen mit Carbonylverbindungen kondensiert.

Schließlich besteht eine bevorzugte Ausführung des erfindungsgemäßen Verfahrens (1) darin, daß man die Fehlerstellenerzeugung in nahezu fehlerstellenfreien Azulminsäuren nach Variante (b) des Verfahrens (A) mit Wasserglas vornimmt und die dabei in topochemischer Reaktion entstehenden, mit Kalium- bzw. Natriumionen beladenen modifizierten Azulminsäuren, — deren verseifbare Nitrilgruppen als latente Säuren wirken und Kieselsäuren fällen —, gegebenenfalls in Gegenwart von Zusatzstoffen mit Carbonylverbindungen kondensiert. Die ausgefällten Kieselsäuren ziehen in feiner Verteilung auf den Reaktionsprodukten auf. Eventuell vorhandenes überschüssiges Natrium- bzw. Kaliumsilikat kann durch einfaches Begasen der jeweiligen Dispersionen mit Kohlendioxid gefällt werden, oder in besonders vorteilhafter Weise durch Zugabe von Phosphorsäure oder Calciumchlorid in Mischung mit Kalium-bzw. Natriumphosphaten oder Calciumsilikaten ausgefällt werden.

Ferner besteht eine bevorzugte Ausführung des erfindungsgemäßen Verfahrens (1) darin, daß man die Fehlerstellenerzeugung in nahezu fehlerstellenfreien Azulminsäuren nach Variante (b) des Verfahrens (A) mit 25%iger wäßriger Ammoniak-Lösung bei Raumtemperatur im Verlauf von 6 bis 20 Stunden durchführt und die dabei in topochemischer Reaktion entstehenden, Ammoniumsalz-haltigen modifizierten Azulminsäuren gegebenenfalls in Gegenwart von Zusatzstoffen mit Carbonylverbindungen kondensiert.

Zweckmäßig ist häufig auch die Behandlung von mit Carbonylverbindungen stabiliserten, gegebenenfalls Zusatzstoffe enthaltenden feuchten Azulminsäuren unter Erzeugung von Fehlerstellen mit Ammoniak-Gas unter gleichzeitiger Begasung mit Kohlendioxid. Dabei dringen Ammoniak und Kohlendioxid als kleine Moleküle in beträchtlichem Maße in das Azulminsäuregerüst ein. Man erhält z.B. bei der Begasung mit Ammoniak im Wirbelbett die instabilen Ammoniumcarbaminate, Ammoniumbicarbonate und, — sofern Ammoniak und Kohlendioxid in Abwesenheit von Wasser eingeleitet werden —, carbaminsaures Ammonium der Formel

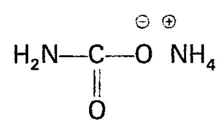

in den Kanälen der Azulminsäure fixiert. Das carbaminsaure Ammonium weist in dieser Form bei Raumtemperatur eine verminderte Zersetzlichkeit auf.

Eine weitere wichtige Ausführung des erfindungsgemäßen Verfahrens (2) besteht darin, daß man mit Calciumhydroxid komplexierte Azulminsäure mit Saccharose, Zuckern, Glukose oder Formose-Präparaten, die durch Formeldehyd-Kondensation mit Calciumhydroxid hergestellt werden, umsetzt. Hierbei bilden sich zum Beispiel bei der Verwendung von Saccharose Azulminsäuren, die mit Saccharose-Calciumoxid-Komplexen der Zusammensetzung $3\ CaO \cdot C_{12}H_{22}O_{11}$ beladen sind.

Werden bei den erfindungsgemäßen Verfahren modifierte Azulminsäuren als Ausgangsstoffe eingesetzt, so ist es nicht unbedingt erforderlich, letztere nach ihrer Herstellung zu isolieren. Es ist vielmehr durchaus möglich, zunächst die modifizierten Azulminsäuren zu synthetisieren und diese dann ohne vorherige Isolierung direkt mit Carbonylverbindungen zu kondensieren.

Im Falle der erfindungsgemäßen Verfahren kann die Fehlerstellenerzeugung und die gleichzeitige oder anschließende Kondensation mit Carbonylverbindungen nicht nur in Wasser, sondern auch in solchen hydrolysierenden Medien vorgenommen werden, in denen das Wasser partiell durch Schwefelwasserstoff ersetzt wurde, oder in denen das Wasser Natriumsulfide, Ammoniumpolysulfide oder Kaliumhydrogensulfid enthält. Arbeitet man in solchen Fällen bei Temperaturen zwischen 70°C und 100°C, so werden kleine Mengen an abgespaltener Blausäure bei gleichzeitiger Fehlerstellenerzeugung in Kohlenoxysulfid und Ammoniak umgewandelt.

In den erfindungsgemäßen Produkten kann die Zahl der Fehlerstellen gegebenenfalls nach denjenigen Methoden erhöht werden, die bereits im Zusammenhang mit der Herstellung der modifizierten Azulminsäuren beschrieben wurden.

Häufig ist es von Vorteil, die erfindungsgemäßen Produkte nach ihrer Herstellung mit Basen zu behandeln, um zum Beispiel enthaltene Metallsalze in Metallhydroxide bzw. Oxide zu überführen, oder um zum Beispiel noch enthaltene Aldehyde abreagieren zu lassen. Zu diesem Zweck werden erfindungsgemäße Produkte vorzugsweise mit Ammoniak, primären oder sekundären Aminen behandelt bzw. begast oder mit Hydrazinhydrat, wäßrigen Cyanamid-Lösungen oder wäßriger Ammoniak-Lösung umgesetzt. Bei der Einwirkung von Ammoniak werden zum Beispiel in den mit Formaldehyd kondensierten Produkten noch enthaltene kleine Mengen an Formaldehyd in Hexamethylentetramin bzw. Hexahydrotriazine überführt. Oft empfiehlt es sich, eine Nachbehandlung mit 25%iger wäßriger Amminiak-Lösung vorzunehmen.

*Eigenschaften und Verwendung erfindungsgemäßen Produkte*

Wie bereits erwähnt, genügt bei den erfindungsgemäßen Umsetzungen häufig schon eine relativ kleine Menge an Carbonylverbindung, um Produkte zu erhalten, die sowohl gegen eine thermische als auch hydrolytische Abspaltung von Blausäure verhältnismäßig stabil sind. — Verwendet man Formaldehyd zur Stabilisierung, so kann dabei abgespaltene Blausäure besonders leicht durch Bildung von wasserlöslichen Cyanhydrinen aus Blausäure und Formaldehyd abgefangen werden.

Wird bei den erfindungsgemäßen Umsetzungen eine ausreichende Menge an Carbonylverbindungen zur Stabilisierung verwendet, so entstehen erfindungsgemäße Produkte, die weder in trockenem noch in feuchtem Zustand bei Raumtemperatur oder auch bei höheren Temperaturen Cyanwasserstoff abspalten. Dies zeigt sich unter anderem darin, daß sich die erfinudngsgemäßen Produkte im Gegensatz zu nicht stabilisierten Azulminsäuren gegenüber standardisierten Trockenhefe-Präparaten völlig indifferent verhalten und die Aktivität der Hefe bei der alkoholischen Vergärung von Rohrzucker unter schonenden Bedingungen in keiner Weise vermindern. So wird die Rohrzuckervergärung mit standardisierter Trockenluft in gepufferter wäßriger Lösung bei 35°C durch gleichzeitig anwesende, mit Formaldehyd kondensierte Azulminsäure nicht beeinträchtigt, während bei der Durchführung des gleichen Tests in Gegenwart von nicht stabilisierten Azulminsäuren ein wesentlich verlangsamter Rohrzuckerumsatz festgestellt wird. Im letzten Fall werden also die Hefeenzyme durch die im Reaktionsgemisch enthaltenen Cyanidionen so stark desaktiviert, daß die alkoholische Gärung drastische gehemmt wird.

Die erfindungsgemäßen Produkte sind nicht nur sehr beständig gegen Cyanwasserstoffabspaltung, sondern weisen auch eine wesentlich höhere Quellbarkeit auf als die vorbekannten nahezu fehlerstellenfreien Azulminsäuren. Sie gehen deshalb im Unterschied zu den vorbekannten Azulminsäuren leicht verschiedenste chemische Reaktionen ein und sind deshalb vielseitig verwendbar.

So eignen sich die erfindungsgemäßen Produkte hervorragend als Komplexbildner für eine außerordentlich große Zahl von Metallsalzen. — vor allem von Schwermetallsalzen —, und sonstigen Metall-Verbindungen. Beispielsweise genannt sei die Fixierung von Borat-Ionen, Eisen-Ionen, Quecksilber-Ionen, Blei-Ionen, Cadmium-Ionen, Vanadat-Ionen, Wolframat-Ionen, Molybdat-Ionen oder von Anionen entsprechender Heteropolysäuren sowie von Pyrophosphaten und höhermolekularen, schwerlöslichen, im Handel befindlichen Polyphosphaten, die sich von Polyphosphorsäuren der Konstitution

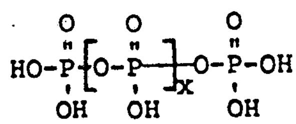

ableiten und Molekulargewichte zwischen 6000 und 40000 aufweisen, an den Ankergruppen der stabilisierten Azulminsäuren. Die betreffenden Produkte können als unlösliche Katalysatoren und als Flammschutzmittel verwendet werden. Ferner ist die Bindung von unerwünschten Schwermetall-Salzen, — wie Salzen des Quecksilbers —, im Boden von Bedeutung.

Diejenigen erfindungsgemäßen stabilisierten Azulminsäuren, die einen Gehalt von 2 bis 30 Gewichtsprozent an Kalium-, Natrium-, Lithium-, Mangan-, Blei-, Quecksilber-, Cobalt-, Zinn-, Kupfer-, Zink-, Eisen-II-, Eisen-III-, Wismut-, Nickel- und/oder Magnesium-Verbindungen enthalten, können als völlig unlösliche Katalysatoren in der Isocyanatchemie eingesetzt werden. Der Verlauf einer derartig katalysierten Isocyanat-Trimerisation kann durch das nachstehende Formelschema veranschaulicht werden.

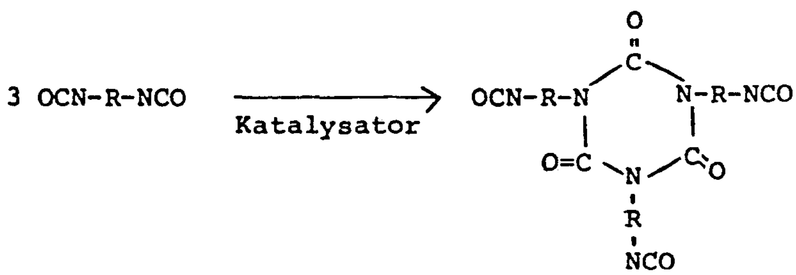


R=bivalenter aliphatischer oder aromatischer Rest

Katalysator=mit Formaldehyd stabiliserte Azulminsäure, beladen mit Lithium-, Natrium-, Kalium- und Magnesium-Ionen.

Der Verlauf einer durch Metallsalze stabilisierter Azulminsäuren katalysierten Uretdionbildung kann durch das nachstehende idealisierte Formelschema veranschaulicht werden.

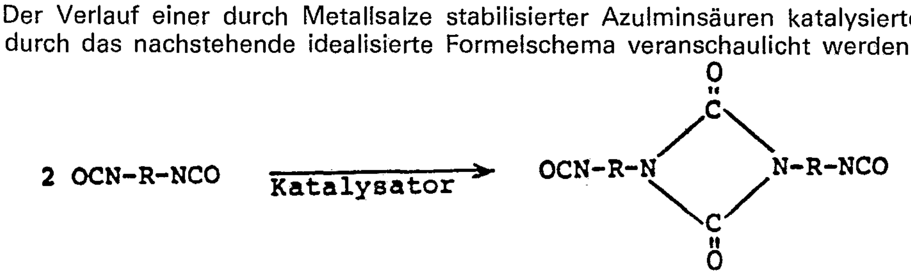

R=bivalenter aliphatischer oder aromatischer Rest

Katalysator=mit Formaldehyd stabiliserte Azulminsäure, beladen mit Zink-, Zinn- und Quecksilber-Ionen.

Besonders vorteilhaft an diesen Heterogenkatalysen mit Metallsalz-haltigen stabilisierten Azulminsäuren ist, daß die Dimerisation, Polymerisation oder Carbodiimidbildung durch einfaches Abfiltrieren der Ansätze gestoppt werden kann und die Lösungen der Isocyanatgruppen-besitzenden Polymeren in monomeren Polyisocyanaten nicht desaktiviert werden müssen. Die entstehenden als modifizierte Isocyanate bezeichneten Produkte besitzen eine überragende Lagerstabilität.

Weiterhin können erfindungsgemäße Produkte zur Herstellung von Dispersionen in mit Isocyanaten verschäumbaren Polyhydroxylverbindungen eingesetzt werden. Als Polyhydroxylverbindungen kommen hierbei in Frage Polyäther, Polycarbonate, Polyester, Polythioäther oder Polyacetale, die Molekulargewichte von 62 bis etwa 10 000 aufweisen und Hydroxylgruppen enthalten. Derartige Dispersionen lassen sich auch in technisch interessanten, bevorzugt bei Raumtemperatur flüssigen Polyisocyanaten, — z.B. Toluylendiisocyanaten oder flüssigen Polyisocyanaten, die durch Phosgenierung von Anilin-Formaldehyd-Kondensaten erhalten werden —, zur Herstellung von Polyurethanschasumstoffen verwenden.

Außberdem finden erfindungsgemäße Produkte Verwendung als Mehrkomponentenfüllstoffe mit reaktiven Gruppen in Kunststoffen verschiedenster Art. Zum Beispiel lassen sich aus den erfindungsgemäßen Stoffen und Polycarbodiimid-Pulvern Produkte herstellen, in denen die stabilisierten Azulminsäuren durch Polycarbodiimide umhüllt, mikroverkapselt und im wesentlichen einlaminiert sind.

Diejenigen erfindungsgemäßen Stoffe, die einen hohen ionischen Anteil aufweisen und damit Polyelectrolytcharakter besitzen, können als Ionenaustauscher oder auch als Katalysatoren und Katalysatorträger dienen. Beispielsweise genannt seien in diesem Zusammenhang durch Formaldehyd stabilisierte Azulminsäure-Kalium-Salze.

Zahlreiche erfindungsgemäße Stoffe lassen sich als Flammschutzmittel bzw. Alterungsschutzmittel zur Verhinderung des oxidativen Abbaus in den verschiedensten Polyurethankunststoffen, Vinylpolymerisaten, Polamidkunststoffen, Kautschuken und Epoxidharzen verwenden. Insbesondere eignen sich hierzu diejenigen erfingungsgemäßen Stoffe, die Phosphorsäure, phosphorige Säure, Polymethylenharnstoffe, Polymethylenmelamine, Calciumphosphate, Aluminiumphosphate, Aluminiumsilikate, Aluminiumoxidhydrat, Wasserglas, Melaminphosphat, Bariumphosphate, Ammoniummagnesiumphosphate und/oder Harnstoffoxalat enthalten.

Außerdem eignen sich Addukte von stabilisierten Azulminsäuren mit Verbindungen, wie zum Beispiel Phospholinoxidphosphonsäuren der Konstitution

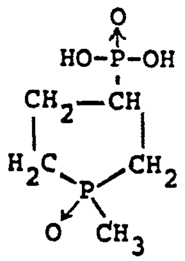

bzw.

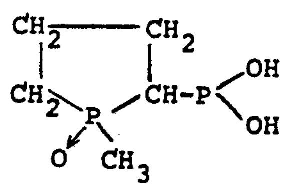

,

als Katalysatoren für die Heterogenkatalyse von Isocyanaten und Polyisocyanaten zu Polycarbodiimiden sowie ihren weiteren Addukten mit Isocyanaten, den Uretoniminpolyisocyanaten.

Darüber hinaus können erfindungsgemäße Stoffe als Träger-materialien für zahlreiche Katalysatoren eingesetzt werden, wobei Mischkatalysatoren entstehen, die sich vielseitig verwenden lassen. So besitzen zum Beispiel mit Carbonylverbindungen, — insbesondere Formaldehyd —, stabilisierte Azulminsäuren, die Calciumhydroxid, Bleiacetat, Bleihydroxid oder Wismuthydroxid enthalten, eine bisher unbekannt hohe Aktivität bei der Formose-Zuckergemisch-Synthese. Diese Mischkatalysatoren ermöglichen es, hochprozentige Formalin-Lösungen unter Erreichung sehr hoher Ausbeuten und unter weitgehender Vermeidung von Cannizarro-Reaktionen in Zuckergemische umzuwandeln.

Besonders geeignet zur Formose-Synthese sind solche Azulminsäuren, die partiell (nur etwa jede vierte Aminogruppe in statistischer Verteilung) mit Carbonylverbindungen, speziell Formaldehyd, kondensiert wurden und 10 bis 90 Gewichtsprozent, bevorzugt 40 bis 60 Gewichtsprozent an Calciumhydroxid enthalten. Derartige Stoffe bewirken, daß aus monomerem Formaldehyd sehr rasch in situ Glykolaldehyd ($C_2$-Aldehyd), Glyzerinaldehyd ($C_3$-Aldehyd) und weitere $C_4$—$C_7$-Hydroxyaldehyde bzw. Hydroxyketone entstehen, diemit verbleibenden Aminogruppen der Azulminsäuren unter Kondendensationsreaktionen reagieren können und ebenfalls zu einer partiellen Stabilisierung der erfindungsgemäßen Stoffe führen können. Aufgrund der Klebrigkeit der anfallenden beigemengten höhermolekularen karamelisierten Zucker können diese Produkte völlig formaldehydfrei sprühgetrocknet werden. Sie stellen braunschwarze, humusartige Stoffe mit krümliger Struktur dar, die einerseits als Bodenverbesserungsmittel, andererseits als Pflanzennährstoffe von Interesse sind. Die hierbei auf der

Matrix aufziehenden Zuckergemische können mit relativ großen Mengen an Calciumhydroxid oder Magnesiumhydroxid komplexiert werden, wobei Zuckerkomplexe entstehen, wie sie z.B. von der Saccharose bekannt sind, wobei pro Mol Saccharose 3 Mol Calciumoxid gebunden werden. Die geringe Löslichkeit derartiger Komplexe erschwert in günstiger Weise die rasche Auswaschung der Zucker im Falle der Verwendung der erfindungsgemäßen Azulminsäure-Formose-Calciumhydroxid-enthaltenden Stoffe bei ihrer Anwendung auf dem Agrarsektor.

Im übrigen können erfindungsgemäße Stoffe in vielfältiger Weise als Agrarchemikalien, wie Bodenverbesserungsmittel oder Düngemittel, eingesetzt werden.

Die Herstellung der erfindungsgemäße Stoffe und ihre Eigenschaften werden in den nachfolgenden Beispielen erläutert.

*Herstellungsbeispiele*

Beispiel 1

Vergleichsversuch: Polymerisation monomerer Blausäure in Gegenwart von Kaliumcyanat (vgl. Angew. Chem. *72,* (1960) Siete 380, Beispiel 4).

200 Gewichsteile einer 30%igen wäßrigen Blausäure-Lösung werden in Gegenwart von 1,08 Gewichtsteilen Kaliumcyanat 5 Stunden auf 40 bis 50°C erwärmt. Das gebildete Produkt wird abfiltriert, nacheinander mit destilliertem Wasser und Äthanol gewaschen und anschließend bei 80°C getrocknet. Man erhalt Azulminsäure in Form eines schwarzen Pulvers in einer Ausbeute von 95% der Theorie.

Elementaranalyse:
41,4% C; 4,0% H; 43,2% N; 11,4% O

Aufgrund der angeführten Sauerstoffwerte kommt dieser Azulminsäure, deren Konstitution in etwa durch die auf Seite 2 dieser Anmeldung angegebenen Formel (I) charakterisiert wird, die Summenformel $C_{24}H_{28}O_5N_{22}$ zu (vgl. Angew. Chem. *72* (1960) Seite 383).

Dieses Polymerisat spaltet, auch nach sorgfältiger Langzeit-Trocknung bei Raumtemperatur oder bei 80°C, fortlaufend kleine Mengen an monomerer Blausäure ab. Nachträgliches intensives Waschen und erneutes Trocknen selbst im Hochvakuum bringt die Blausäurerückspaltung nicht zum Stillstand.

Die Cyanwasserstoff-Bestimmung erfolgt nach üblichen Methoden.

Lagert man 2000 g der Azulminsäure, die nach der oben angegebenen Methode hergestellt wurde, bei 50°C in einem Behälter mit einem Luftvolumen von 12 Litern, so wird nach 2 Stunden eine Cyanwasserstoff-Konzentration von 0,066 g Cyanwasserstoff pro 12 Liter Luft gemessen. Danach errechnet sich ein Cyanwasserstoff-MAK-Wert (MAK=maximale Arbeitsplatz-Konzentration) von 4583 ppm, also ein MAK-Wert, der 416-mal größer ist als der gesetzlich festgelegte MAK-Wert von 11 ppm. Demnach ist eine derartige Azulminsäure für eine praktische Anwendung völlig unbrauchbar.

Behaldelt man 10 Gewichtsteile der nach dem obigen Verfahren hergestellten Azulminsäure 3 Stunden lang bei 100°C mit 100 Gewichtsteilen destilliertem Wasser und bestimmt dann im Filtrat die Cyanidionenkonzentration, so findet man eine Cyanidionenkonzentration, die einem Blausäure-Gehalt von 26 bis über 28 mg pro Liter Wasser entspricht. Derartige Cyanidionenkonzentrationen bewirken bereits Abtötungen und Desaktivierungen wichtiger im Boden vorkommender Bakterien und ihrer Enzymsysteme.

Beispiel 2

Vergleichsversuch: Polymerisation monomerer Blausäure nach dem "Zulaufverfahren" in Gegenwart von Ammoniak (vgl. DT—PS 949 060).

Ein Gemisch aus 5600 g Wasser, 1400 g Blausäure und 88 g Ammoniak wird genau nach den im Beispiel 1 der DT—PS 949 060 enthaltenen Angaben polymerisiert. Nach etwa fünfstündiger Polymerisationszeit bei 50°C steigt die Innentemperatur nach dem Abstellen der Kühlung auf 90°C, hält sich für etwa eine Stunde auf dieser Höhe und fällt dann ab. Die entstandene Azulminsäure wird isoliert, mit Wasser gewaschen und bei 80°C getrocknet. Ausbeute 98% der Theorie.

Thermische Stabilität:
Zweistündige Lagerung von 2000 g der Azulminsäure bei 50°C (vgl. Beispiel 1): MAK-Wert über 5000 ppm.

Hydrolytische Stabilitat:
Dreistündige Behandlung von 10 Gewichtsteilen der Azulminsäure mit 100 Gewichtsteilen destilliertem Wasser bei 100°C (vgl. Beispiel 1): Blausäurekonzentration von 30 bis 36 pro Liter Wasser.

Beispiel 3

Vergleichsversuch: Behandlung von Azulminsäure gemäß Beispiel 1 mit Ketonen in Abwesenheit von Wasser.

Jeweils 108 g der gemäß Beispiel 1 hergestellten Azulminsäure (von den Endgruppen abgesehen entspricht diese Menge im Mittel 2 Grundmol an polymerisierten Aminocyancarben-Einheiten der Struktur

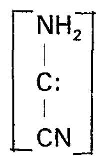

, Äquivalentgewicht=54)

werden je 30 Stunden lang bei 120°C mit 4 Mol eines der nachfolgend genannten wasserfreien Ketone sowie mit 4 Mol Xylol, das als Schleppmittel für Wasser fungiert, behandelt:

a) Cyclohexanon
b) Methyläthylketon
c) Diäthylketon
d) Methylisobutylketon

Neben geringfügiger Blausäureabspaltung unter Bildung von Cyanhydrinen (etwa 0,5 Gewichtsprozent) findet in allen Fällen keine mit einer

Wasserabspaltung verbundene Polyketimin-Bildung zwischen den Ketonen und den Aminogruppen der Azulminsäure statt. Kleine Mengen an Blausäure werden also Cyanhydrine abgefangen. Nach beendeter Behandlung isoliert man jeweils etwa 107 g an Azulminsäure, die gemäß Elementaranalyse eine praktisch unveränderte Zusammensetzung aufweist. Diese mit Ketonen behandelten Azulminsäure-Produkte sind nicht stabilisert, sondern spalten bei Raumtemperatur wie auch bei 50°C nach wie vor kleine Mengen an Blausäure ab. Auch stundenlanges Kochen der Azulminsäure mit Aceton unter fortlaufender Entfernung des Acetons führt nicht zu Polyketiminen oder zu substituierten, Aminalgruppen enthaltenden vernetzten Kondensationsprodukten.

Beispiel 4

108 g (=2 Grundmol) der nach der im Beispiel 1 beschriebenen Methode hergestellten Azulminsäure werden in 1000 g (=10 Mol) 30%ige wäßrige Formalin-Lösung eingerührt und 8 Stunden bei 100°C gehalten. Obwohl die Azulminsäure im Reaktionsmedium vollständig unlöslich ist, wird bei der Filtration von filtrierten Proben, die im Abstand von jeweils einer Stunde dem Reaktionsmedium entnommen werden, eine laufende Formaldehydabnahme festgestellt. Insgesamt werden etwa 1,8 Mol an Formaldehyd auf 2 Grundmol an Aminocyancarben-Einheiten verbraucht. Pro Mol Amino-Gruppen entspricht dies einer Menge von etwa 0,9 Mol Formaldehyd, was bedeutet, daß trotz topochemischer, heterogener Reaktion nahezu jede Aminogruppe in der Azulminsäure zur Reaktion gelangt. Die Aufarbeitung erfolgt in der Weise, daß man das Reaktionsprodukt abfiltriert, mit Wasser wäscht und anschließend mit Methanol von Feuchtigkeit und Spuren an Formaldehyd befreit.

Elementaranalyse:
44,1% C; 4,4% H; 30,5% N; 21,4% O

Das Reaktionsprodukt ist gegenüber einer thermischen Abspaltung von Cyanwasserstoff extrem stabil. Wie Cyanwasserstoff-Bestimmungen zeigen, spaltet es weder bei Raumtemperatur noch bei 50°C auch nur Spuren von Cyanwasserstoff ab. Selbst bei 160°C ist Blausäure nicht nachweisbar.

Der im Beispiel 1 beschriebene Hydrolysetest fällt hier ebenfalls negativ aus.

Auch in der Mutterlauge des Reaktionsproduktes ist weder monomere Blausäure selbst noch deren Umsetzungsprodukt mit Formaldehyd, — also Hydroxyacetonitril —, nachweisbar.

Bei 100°C weist die mit Formaldehyd stabiliserte Azulminsäure unter den verschiedensten Bedingungen jeweils einen Cyanwasserstoff-Abspaltungswert von 0 ppm auf.

Während sich die gemäß Beispiel 1 und 2 hergestellten Azulminsäuren in 1 n wäßriger Natronlauge schon in der Kälte unter Cyanwasserstoff-Abspaltung mit tiefschwarzer Färbung lösen, ist die erfindungsgemäß durch Umsetzung mit Formaldehyd stabilisierte Azulminsäure in 1 n wäßriger Natronlauge völlig beständig und unlöslich.

Beispiel 5

108 g (=2 Grundmol) der gemäß Beispiel 1 hergestellten Azulminsäure werden in eine Mischung aus 970 ml Wasser und 25 g einer 30%igen Formalin-Lösung (=0,25 Mol Formaldehyd) eingerührt und 8 Stunden bei 100°C gehalten. Obwohl hierbei nur eine partielle Umsetzung (Aminalbildung, Methylolierung und Vernetzungsreaktion) der Aminogruppen der Azulminsäure mit Formaldehyd erfolgt,

wird nach beendeter Reaktion ein Festprodukt isoliert, das bei Raumtemperatur gegenüber Cyanwasserstoff-Rückspaltung völlig beständig ist. Auch bei 50°C läßt sich kein Cyanwasserstoff nachweisen. Somit resultiert für das Reaktionsprodukt ein MAK-Wert von Null.

Beispiel 6

Jeweils 100 g der gemäß Beispiel 4 bis 5 hergestellten stabilisierten Azulminsäuren werden bei Raumtemperatur 2 Stunden lang mit

a) 0,33 Mol Phosphorsäure
b) 0,48 Mol Salpetersäure

gerührt. Anschließend arbeitet man auf, indem man das jeweils vorhandene schwarze Festprodukt abfiltriert und trocknet. Man erhält auf diese Weise Phosphorsäure- bzw. Salpetersäure-Additions-Salze der eingesetzten, mit Formaldehyd stabiliserten Azulminsäuren, also Verbindungen, in denen die jeweilige Säure über die noch freien Aminogruppen (=Ankergruppen) der stabilisierten Azulminsäuren an die polymere Matrix gebunden ist.

Beispiel 7

a) 108 g (2 Grundmol) einer gemäß Beispiel 2 hergestellten Azulminsäure werden nach vorherigem Trocknen bei 80°C in einer verchlossenen Rührapparatur mit 1000 g destiliertem Wasser und 98 g (1 Mol) Phosphorsäure versetzt und auf 100°C erhitzt. Man hält das Reaktionsgemisch 16 Stunden bei dieser Temperatur und leitet während dieser Zeit, in der an der Azulminsäure eine heterogene Hydrolyse bzw. eine partielle Entcyclisierung stattfindet, einen als Treibgas dienenden Stickstoffstrom mit einer Geschwindigkeit von etwa 50 ml pro Minute durch das Reaktionsgemisch. Der austretende Stickstoffstrom wird durch zwei nacheinandergeschaltete Waschflaschen geleitet, wobei die erste zur Bindung des im Stickstoffstrom enthaltenen Ammoniaks mit 200 ml 1 n wäßriger Salzsäure gefüllt ist, und die zweite Waschflasche zur Bindung des im Stickstoffstrom vorhandenen Kohlendioxids mit 200 ml 1 n wäßriger Natronlauge beschickt ist. Im Abstand von 1 bis 3 Stunden werden die aus der Azulminsäure entbundenen Mengen an Ammoniak und Kohlendioxid titrimetrisch bestimmt. Nach 16-stündiger Reaktionsdauer beträgt die Gesamtmenge an Ammoniak, die durch hydrolytische Erzeugung von $F_1$-Fehlerstellen der Formel

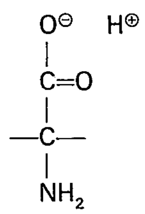

(Äquivalentgewicht 73)

entstanden ist, 6,4 g (≈ 0,38 Mol). Die Gesamtmenge an Kohlendioxid, die durch Decarboxylierung von $F_1$-Fehlerstellen zu $F_2$-Fehlerstellen der Formel

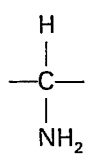

(Äquivalentgewicht 29)

entstanden ist, beträgt 4,3 g (≈ 0,1 Mol) (nach der Bariumcarbonat-Methode titrimetrisch ermittelt). Aus diesen Zahlen errechnet sich ein molarer $NH_3/CO_2$-Quotient von aufgerundet etwa 3,8. Dieser Zahlenwert besagt, daß von etwa 4 durch Entcyclisierung und Verseifung von Nitrilgruppen der Azulminsäure erzeugten Carboxylgruppen ($F_1$-Fehlerstellen) etwa eine decarboxyliert wird und damit zu einer $F_2$-Fehlerstelle führt.

Die Aufarbeitung geschieht in der Weise, daß man das feste Reaktionsprodukt abfiltriert, wäscht und trocknet. Man erhält 109 g einer $F_1$- und $F_2$-Fehlerstellen enthaltenden (modifizierten) Azulminsäure.

Aufgrund dieser Ausbeuteangabe und des ermittelten molaten $NH_3/CO_2$-Quotienten von 3,8 sowie aufgrund der Tatsache, daß die $F_2$-Fehlerstellen aus den $F_1$-Fehlerstellen entstanden sind (0,38 Mol — 0,1 Mol=0,28 Mol), läßt sich errechnen, daß 100 Gewichtsteile des Verfahrensproduktes etwa 18,6 Gewichtsprozent an $F_1$-Fehlerstellen und etwa 2,67 Gewichtsprozent an $F_2$-Fehlerstellen enthalten. Die Summe an $F_1$- und $F_2$-Fehlerstellen beträgt 21,3 Gewichtsprozent.

Wie sich aus der Elementaranalyse ergibt, enthält die modifizierte Azulminsäure etwa 9,3 Gewichtsprozent an Phosphorsäure. Diese Phosphorsäure ist über die freien Amino-Gruppen (Ankergruppen) der modifzierten Azulminsäure an die polymere Matrix gebunden.

b) Ein Gemisch aus 100 g der nach der unter (a) beschriebenen Methode hergestellten modifizierten Azulminsäre, 2 Mol Formaldehyd und 600 ml Wasser wird 6 Stunden auf 100°C erhitzt. Danach arbeitet man auf, indem man das feste Produkt abfiltriert, wäscht und trocknet. Man gewinnt auf diese Weise 118 g einer $F_1$- und $F_2$-Fehlerstellen enthaltenden, mit Formaldehyd stabilisierten Azulminsäure, die gegenüber thermischer und hydrolytischer Cyanwasserstoff-Abspaltung extrem stabil ist. Der Cyanwasserstoff-Abspaltungswert beträgt auch dann, wenn er unter sehr ungünstigen Bedingungen (kleines Luftvolumen) gemessen wird, praktisch 0 ppm.

Wie durch eine $NH_2$-Gruppen-Bestimmung nach van Slyke (vgl. Angew. Chem. *72* (1960), Seite 382) ermittelt wurde, enthält die bei der obigen Umsetzung als Ausgangsprodukt verwendete modifizierte Azulminsäure pro 100 Gewichtsteile etwa 21 Gewichtsprozent an reaktiven $NH_2$-Gruppen (=etwa 1,25 $NH_2$-Äquivalente). Demnach sollten bei der Azomethinbildung ($-N=CH_2$) und Vernetzung der Azomethingruppen durch Polyerisation etwa 37,5 Gewichtsteile Formaldehyd (=etwa 1,25 Äquivalente) verbraucht werden. Die analytische Formaldehyd-Bilanzierung nach Peroxidmethode von Blank und Finkenbeiner (vgl. Gattermann-Wieland "Die Praxis des organischen Chemikers", De Gruyter & Co., Berlin 1962, Seite 180 sowie Berichte *31*, 2979 (1898)) zeigt jedoch, daß nur etwa 0,8 Mol an Formaldehyd reagiert haben. Es liegen also in der gemäß obigem Verfahren aus einer modifizierten Azulminsäure und Formaldehyd hergestellten stabilisierten Azulminsäure entweder noch 0,45 Äquivalente an freien Aminogruppen vor, oder diese 0,45 Aminogruppen-Äquivalente haben nach folgendem Formelschema inter- oder intramolekular unter Aminalbildung reagiert.

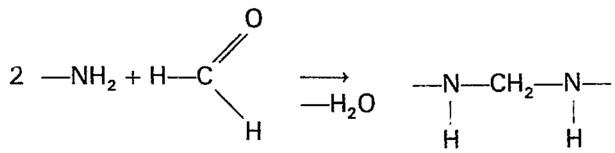


Im letzteren Falle wäre eine quantitative Kondensation aller Aminogruppen erreicht worden. Nach dem gegenwärtigen Stand der Analytischen Methoden kann nicht entschieden werden, welcher Anteil an Aminogruppen mit Formaldehyd im Äquivalenzverhältnis 1:1 reagiert hat und welcher Anteil an Aminogruppen mit Formaldehyd im Äquivalenzverhältnis 2:1 umgesetzt wurde.

Beispiel 8

Jeweils 100 g einer gemäß Beispiel 7 b hergestellten, mit Formaldehyd stabilisierten Azulminsäure werden in 250 g Wasser dispergiert und bei Raumtemperatur 2 Stunden lang mit

a) 10,78 g (=0,11 Mol) Phopshorsäure
b) 30,2 g (=0,48 Mol) Salpetersäure

gerührt. Man erhält auf diese Weise Phosphorsäure- bzw. Salpetersäure-Salze der eingesetzten, mit Formaldehyd stabilisierten Azulminsäure. Die anorganischen Säuren sind hierbei über die noch freien Aminogruppen und/oder über Aminalgruppen der Konstitution

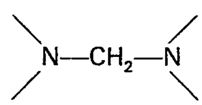

an der polymeren Matrix fixiert.

Beispiel 9

a) 108 g (2 Grundmol) einer gemäß Beispiel 2 hergestellten Azulminsäure werden nach vorherigem Trocknen bei 80°C in einer verschlossenen Rührapparatur mit 1000 g destilliertem Wasser und 0,5 Mol Calciumsulfit-dihydrat versetzt und auf 100°C erhitzt. Man hält das Reaktionsgemisch 8 Stunden auf dieser Temperatur und lietet während dieser Zeit einen Stickstoffstrom mit einer Geschwindigkeit von etwa 50 ml pro Minute durch. In dem austretenden Stickstoffstrom wird der Gehalt an Ammoniak und Kohlendioxid in der im Beispiel 7 angegebenen Weise bestimmt. Es wird eine modifizierte Azulminsäure erhalten, deren molarer $NH_3/CO_2$-Quotient 2,68 ist.

b) Ein Gemisch aus 100 g der nach der unter (a) beschriebenen Methode hergestellten modifizierten Azulminsäure, 20 g einer 30%igen wäßrigen Formalin-Lösung (=0,2 Mol Formaldehyd) und 400 g Wasser wird 8 Stunden auf 100°C erhitzt. Danach arbeitet man auf, indem man das feste Produkt abfiltriert, wäscht und trocknet. Man gewinnt auf diese Weise eine $F_1$- und $F_2$-Fehlerstellen enthaltende, mit Formaldehyd stabilsierte Azulminsäure, die nach vorherigem Trocknen bei 30—50°C bei der anschließenden Lagerung bei Raumtemperatur keinen Cyanwasserstoff abspaltet. Das Reaktionsprodukt ist in 1 n wäßriger Natronlauge löslich.

Beispiel 10

Jeweils 100 g der gemäß Beispiel 9 hergestellten stabilisierten Azulminsäure werden bei Raumtemperatur 2 Stunden lang mit

a) einem Überschuß 1 molarer Phosphorsäure
b) einem Überschuß 1 molarer Salpetersäure

gerührt. Danach wird das Festprodukt abfiltriert und getrocknet. Man erhält auf diese Weise Phosphorsäure-bzw. Salpetersäure-Salze der eingesetzten, mit Formaldehyd stabilisierten Azulminsäure, wobei an 100 Gewichtsteile an stabiler Azulminsäure 0,12 Mol Phosphorsäure bzw. 0,51 Mol Salpetersäure gebunden sind.

Beispiel 11

a) 108 g (2 Grundmol) einer gemäß Beispiel 2 hergestellten Azulminsäure werden nach vorherigem Trocknen bei 80°C in einer verschlossenen Rührapparatur mit 1000 g entionisiertem Wasser versetzt und auf 100°C erhitzt. Man hält das Reaktionsgemisch, in dem der pH-Wert 6,2 beträgt, 8 Stunden lang auf dieser Temperatur und leitet während dieser Zeit einen Stickstoffstrom mit einer Geschwindigkeit von 50 ml pro Minute durch. In dem austretenden Stickstoffstrom wird der Gehalt an Ammoniak und Kohlendioxid in der im Beispiel 7 angegebenen Weise bestimmt. Die Gesamtmenge an entbundenem Ammoniak beträgt 0,059 Mol.

Die Gesamtmenge an entbundenem Kohlendioxid beträgt 0,023 Mol.

Daraus ergibt sich ein molarer $NH_3/CO_2$-Quotient von 2,57.

Aus den entbundenen Mengen an Ammoniak und Kohlendioxid errechnet sich durch Differenzbildung (0,059—0,023=0,036) daß etwa 0,036 Äquivalente an $F_1$-Fehlerstellen und etwa 0,023 Äquivalente an $F_2$-Fehlerstellen entstanden sind.

Ausbeute an modifizierter Azulminsäure: 107 g

Aus dieser Ausbeuteangabe, dem molaren $NH_3/CO_2$-Quotienten und der Differenz der entbundenen Molmengen an Ammoniak und Kollendioxid (0,059—0,023=0,036) errechnet sich, daß 100 Gewichsteile des Verfahrensproduktes etwa 2,57 Gewichtsprozent an $F_1$-Fehlerstellen und etwa 0,7 Gewichtsprozent an $F_2$-Fehlerstellen enthalten.

b) Ein Gemisch aus 100 g der nach der unter (a) beschriebenen Methode hergestellten modifizierten Azulminsäure, 20 g einer 30%igen wäßrigen Formalin-Lösung (=0,2 Mol Formaldehyd) und 400 g Wasser wird 8 Stunden auf 100°C erhitzt. Danach arbeitet man auf, indem man das feste Produkt abfiltriert, wäscht und trocknet. Man gewinnt auf diese Weise eine $F_1$- und $F_2$-Fehlerstellen enthaltende, mit Formaldehyd stabilisierte Azulminsäure, die nach vorherigem Trocknen bei 30—50°C bei der anschließenden Lagerung bei Raumtemperatur keinen Cyanwasserstoff abspaltet. Das Reaktionsprodukt ist in 1 n wäßriger Natronlauge löslich.

Beispiel 12

Jeweils 100 g der gemäß Beispiel 11 b hergestellten stabilisierten Azulminsäure werden bei Raumtemperatur 2 Stunden lang mit

a) einem Überschuß 1 molarer Phosphorsäure
b) einem Überschuß 1 molarer Salpetersäure

gerührt. Danach wird das Festprodukt abfiltriert und getrocknet. Man erhält auf diese Weise Phosphorsäure-bzw. Salpetersäure-Salze der eingesetzten, mit Formaldehyd stabilisierten Azulminsäure, wobei an 100 Gewichtsteile an stabilisierter Azulminsäure 0,16 Mol Phosphorsäure bzw. 0,54 Mol Salpetersäure gebunden sind.

Beispiel 13

a) Zu 7 Litern 20%iger wäßriger Blausäure (=1400 g (52 Mol) Cyanwasserstoff) werden unter intensivem Rühren 350 g etwa 25-gewichtsprozentiger wäßriger Ammoniak-Lösung (=87,5 g (etwa 5,15 Mol) Ammoniak) zugegeben, die 70 g (1,1 Mol) Natriumcyanat enthält. Diese Mischung wird auf 40°C erwärmt. Danach steigt die Temperatur durch die freiwerdende Polymerisationswärme auf 70°C an. Man erhitzt noch 4 Stunden auf 90°C und arbeitet dann auf, indem man das braunschwarz anfallende Polymerisat, das in Wasser keine kolloiden Lösungen bildet, abfiltriert, nacheinander mit Wasser und Äthanol wäscht und anschließend bei 50—80°C unter vermindertem Druck trocknet.

Ausbeute: 94,9% der Theorie.

Elementaranalyse:
40,6% C; 4,1% H; 42,4% Ni; 12,8% O

In der Mutterlauge des Polymerisationsansatzes wird der Carbonat-Anteil ineiner solchen Konzentration nachgewiesen, wie sie einer entbundenen Kohlendioxid-Menge von etwa 0,02 Mol pro 100 g Polymerisat entspricht. Demnach sind bei der Herstellung des Polymerisats bereits 0,56 Gewichtsprozent an $F_2$-Fehlerstellen in das Produkt eingeführt worden. Ferner ergibt sich unter Zugrundelegung eines molaren $NH_3/CO_2$-Quotienten von etwa 4, wie er in einem parallelversuch bei der zweistündigen Hydrolyse einer natriumcyanatfreien Azulminsäure bei 90°C gefunden wurde, daß pro 100 g des hergestellten Polymerisats eine Menge von 0,08 Mol Ammoniak entbunden wurde, was einem $F_1$-Fehlerstellengehalt von 4 Gewichtsprozent entspricht.

Somit handelt es sich bei dem nach dem obigen Verfahren hergestellten Polymerisat um eine $F_1$- und $F_2$-Fehlerstellen enthaltende Azulminsäure, also um eine modifizierte Azulminsäure.

b) Bei der Umsetzung von 100 g der nach der unter (a) beschriebenen Methode hergestellten modifizierten Azulminsäure mit 0,2 Mol Formaldehyd unter den in Beispiel 7 b angegebenen Bedingungen entsteht eine Fehlerstellen enthaltende, mit Formaldehyd stabilisierte Azulminsäure, die bei Raumtemperatur keinen Cyanwasserstoff abspaltet. Der mit einem Drägerröhrchen durchgeführte Cyanwasserstoff-Nachweis fällt negativ aus (0 ppm an Cyanwasserstoff).

Beispiel 14

Bei der Umsetzung von 100 g der gemäß Beispiel 13 a hergestellten modifizierten Azulminsäure mit 0,2 Mol Glyoxal unter den in Beispiel 7 b angegebenen Bedingungen entsteht eine Fehlerstellen enthaltende, mit Glyoxal stabilisierte Azulminsäure, die bei Raumtemperatur keinen Cyanwasserstoff abspaltet. ein Cyanwasserstoff-Nachweis, der im Luftvolumen über einer bei Raumtemperatur gelagerten Probe des Verfahrensproduktes mit einem Drägerröhrchen durchgeführt wurde, fällt negativ aus.

Beispiel 15

108 g der gemäß Beispiel 13 a hergestellten modifizierten Azulminsäure werden in 1000 g (=10 Mol) 30%ige wäßrige Formalin-Lösung eingerühut und 8 Stunden bei 100°C gehalten. Danach wird aufgearbeitet, indem man das Reaktionsprodukt abfiltriert, mit Wasser wäscht und anschließend mit Methanol von Feuchtigkeit und Spuren an Formaldehyd befreit. Man erhält 150 g stabilisierte Azulminsäure, die selbst bei 180°C keinen Cyanwasserstoff abspaltet. — Im Falle einer bei 60°C gelagerten Probe wird ein Cyanwasserstoff-Abspaltungswert von 0 ppm gemessen.

Beispiel 16

a) 4 Liter 20%ige wäßrige Blausäure, 200 ml etwa 26%ige wäßrige Ammoniak-Lösung und 40 g Natriumcyanat werden zusammengerührt. Dieses Reaktionsgemisch wird im Verlauf von 2 Stunden auf 90°C aufgeheizt. Danach rührt man unter Ausnutzung des Blausäure-Rückflusses bei Verwendung eines gut wirksamen Rückflußkühlers weitere 30 Minuten bei 90°C, destilliert dann 500 ml Wasser und eine geringe Menge an Blausäure ab und fügt erneut 500 ml Wasser hinzu. Anschließend wird 5 Stunden bei 100°C gerührt. Das dabei anfallende, ausgezeichnet filtrierbare schwarze Verfahrensprodukt wird abgesaugt, nacheinander mit etwa 4 Litern Wasser und mit Methanol gewaschen und unter vermindertem Druck getrocknet.

Ausbeute: 845 g an $F_1$- und $F_2$-Fehlerstellen enthaltender Azulminsäure.

Fehlerstellengehalt: etwa 11 Gewichtsprozent.

Elementaranalyse:
38,2% C; 4,9% H; 38,8% N; 18,9% O

Wie aus diesen Werten zu entnehmen ist, besitzt das Produkt einen höheren Sauerstoffgehalt und einen niedrigeren Stickstoffgehalt als die gemäß Beispiel 1 hergestellte Azulminsäure. dies zeigt an, daß in dem erfindungsgemäßen Produkt ein großer Teil an Fehlerstellen ($F_1$ und $F_2$) enthalten ist.

b) 108 g der nach der unter (a) beschriebenen Methode hergestellten modifizierten Azulminsäure werden in 1000 g (=10 Mol) 30%ige wäßrige Formalin-Lösung eingerührt und 8 Stunden bei 100°C gehalten. Danach wird aufgearbeitet, indem man das Reaktionsprodukt abfiltriert, mit Wasser wäscht und anschließend mit Methanol von Feuchtigkeit und Spuren an Formaldehyd befreit. Man erhält 140 g stabiliserte Azulminsäure, die selbst bei 200°C keinen Cyanwasserstoff abspaltet (Cyanwasserstoff-Prüfung mit einem Drägerröhrchen).

Elementaranalyse:
45,1% C; 5,1% H; 31,3% N; 18,6% O

Beispiel 17

a) Bei der Durchführung der im Beispiel 16 a beschriebenen Blausäurepolymerisation mit Hilfe von wäßriger Ammoniak-Lösung und Natriumcyanat als Katalysator unter den in Beispiel 1 angegebenen Bedinugen bei 40°C wird eine Azulminsäure erhalten, die praktisch frei von Fehlerstellen und daher relativ sauerstoffarm ist.

Elementaranalyse:
41,6% C; 3,9% H; 45,8% N; 7,5% O

b) 108 g der nach der unter (a) beschriebenen Methode hergestellten Azulminsäure werden in 1000 g (=10 Mol) 30%ige wäßrige Formalin-Lösung eingerührt und 8 Stunden bei 100°C gehalten. Danach wird aufgearbeitet, indem man das Reaktionsprodukt abfiltriert, mit Wasser wäscht und anschließend mit Methanol von Feuchtigkeit und Spuren an Formaldehyd befreit. Man erhält 145 g stabilisierte Azulminsäure, die selbst bei 200°C keinen Cyanwasserstoff abspaltet (Cyanwasserstoff-Prüfung mit einem Drägerröhrchen).

Elementaranalyse:
45,9% C; 4,9% H; 32,6% N; 16,8% O

Wie aus diesen Werten hervorgeht, enthält auch diese stabilisierte Azulminsäure Fehlerstellen. Letztere sind also im Verlauf der Umsetzung der als Ausgangsprodukt verwendeten, praktisch fehlerstellenfreien Azulminsäure mit Formaldehyd eingeführt worden.

Beispiel 18

Ein Gemisch aus 108 g der gemäß Beispiel 16 a hergestellten modifizierten Azulminsäure (Fehlerstellengehalt etwa 11 Gewichtsprozent), 0,5 Mol Imidazol und 800 ml Wasser wird 20 Stunden auf 100°C erwärmt. Danach wird aufgearbeitet, indem man das Festprodukt abfiltriert, wäscht und trocknet. Man erhält eine moidifizierte Azulminsäure, die aufgrund der ermittelten Ammoniak-Kohlendioxid-Abspaltungs-Bilanz etwa 30 Gewichtsprozent an $F_1$-Fehlerstellen aufweist.

Bei der Umsetzung dieser stark Fehlerstellen enthaltenden Azulminsäure mit Formaldehyd unter den im Beispiel 4 angegebenen Bedingungen wird eine stabilisierte Azulminsäure erhalten, die auch bei längerer Lagerung bei 50°C keinen Cyanwasserstoff abspaltet.

Beispiel 19

a) Ein Gemisch aus 200 g der gemäß Beispiel 13 a hergestellten, relativ fehlerstellenermen Azulminsäure (Zusammensetzung 40,6% C; 4,1% H; 42,4% N; 12,8% O) und 800 g einer 25%igen wäßrigen Ammoniak-Lösung wird 8 Stunden bei 25—31°C gerührt. Anschließend wird das schwarze Pulver abgesaugt, mit 5 Litern Wasser gewaschen und bei Raumtemperatur im Vakuum-Trockenschrank getrocknet.

Ausbeute: 215 g einer modifizierten Azulminsäure, die etwa 6—7 Gewichtsprozent an $F_1$-Fehlerstellen gebundenes Ammoniak enthält. Derartige abgewandelte $F_1$-Fehlerstellen lassen sich formelmäßig wie folgt veranschaulichen:

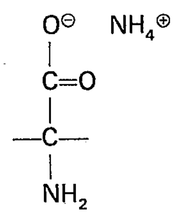

Elementaranalyse:
37,6% C; 4,8% H; 38,5% N; 19,4% O

Trocknet man das Verfahrensprodukt nicht bei Raumtemperatur, sondern bei höheren Temperaturen, so wird leicht Ammoniak abgespalten.

b) Durch Umsetzung von 100 g der nach der unter (a) beschriebenen Methode hergestellten, ammoniakhaltigen modifizierten Azulminsäure mit 0,2 Mol Formaldehyd bei 50°C in wäßriger Lösung wird ein Produkt erhalten, das bei Temperaturen bis zu 30°C nicht zur Cyanwasserstoff-Abspaltung neigt.

Über einen Teil dieses Verfahrensproduktes wird bei 50°C vier Stunden lang ein Stickstoffstrom mit einer Strömungsgeschwindigkeit von 100 ml Stickstoff pro Minute gleitet. In dem aufgefangenen Gas läßt sich analytisch kein Cyanwasserstoff nachweisen (Cyanwasserstoff-Konzentration=0 ppm).

Das Verfahrensprodukt spaltet sowohl hydrolytisch als auch thermisch leicht Ammoniak ab. So wird bei 50°C in einer Stunde bereits ein Anteil von 1,43 Gewichtsprozent an Ammoniak in Freiheit gesetzt.

Begast man das Verfahrensprodukt, das schwach nach Ammoniak riecht, in feuchtem Zustand mit Kohlendioxid, so erhält man ein praktisch geruchloses Pulver.

c) Ein Teil des gemäß (b) hergestellten Verfahrenproduktes wird gut mit Wasser gewaschen und zur erneuten Fehlerstellenerzeugung noch einmal mit 25%iger wäßriger Ammoniak-Lösung behandelt.

Das dabei entstehende Produkt zeigt selbst bei 50°C keine Tendenz zur Cyanwasserstoff-Abspaltung.

Beispiel 20

a) Ein Gemisch aus 200 g der gemäß Beispiel 13 a hergestellten, relativ fehlerstellenarmen Azulminsäure und 800 g einer 25%igen wäßrigen Ammoniak-Lösung wird 3 Stunden in einer geschlossenen Apparatur bei 80°C gerührt. Anschließend wird das schwarze Pulver abgesaugt, mit 5 Litern Wasser gewaschen und bei Raumtemperatur im Vakuumtrockenschrank getrocknet. Man erhält eine modifizierte Azulminsäure, die etwa 13 Gewichtsprozent an $F_1$-Fehlerstellen gebundenes Ammoniak enthält.

b) Durch Umsetzung von 100 g der nach der unter (a) beschriebenen Methode hergestellten, ammoniakhaltigen modifizierten Azulminsäure mit 0,2 Mol Formaldehyd bei 50°C in wäßriger Lösung wird ein Produkt erhalten, das bei Temperaturen bis zu 60°C nicht zur Cyanwasserstoff-Abspaltung neigt.

Das Verfahrensprodukt spaltet sowohl hydrolytisch als auch thermisch leicht Ammoniak ab.

c) Ein Teil des gemäß (b) hergestellten Verfahrenproduktes wird gut mit Wasser gewaschen und zur erneuten Fehlerstellenerzeugung noch einmal mit 25%iger wäßriger Ammoniak-Lösung behandelt. Das dabei entstehende Produkt zeigt selbst bei 70°C keine Tendenz zur Cyanwasserstoff-Abspaltung.

Beispiel 21

a) Ein Gemisch aus 108 g der gemäß Beispiel 13 a hergestellten Azulminsäure, 14 g Calciumthiosulfat-Hexahydrat und 800 ml Wasser wird 1,6 Stunden auf 100°C erwärmt. Danach wird aufgearbeitet, indem man das Festprodukt abfiltriert, wäscht und trocknet. Man erhält eine modifizierte Azulminsäure, die aufgrund der entbundenen Mengen an Ammoniak und Kohlendioxid etwa 3,3 Gewichtsprozent an zusätzlich entstandenen $F_1$-Fehlerstellen und etwa 1,5 Gewichtsprozent an zusätzlich entstandenen $F_2$-Fehlerstellen aufweist.

b) Durch Umsetzung von 100 g der gemäß (a) hergestellten modifizierten Azulminsäure mit 0,2 Mol Formaldehyd bei 50°C in wäßriger Lösung wird ein Produkt erhalten, das auch bei einer Lagerung von mehreren Monaten bei 30°C keinen Cyanwasserstoff abspaltet. Im Luftvolumen einer Gefäßes, das zur Hälfte mit dem Verfahrensprodukt gefüllt ist, wird eine Cyanwasserstoff-Konzentration von 0 ppm gemessen.

Beispiel 22

a) Ein Gemisch aus 108 g der gemäß Beispiel 13 a hergestellten modifizierten Azulminsäure, 19 g Calcium-dihydrogensulfid-Hexahydrat und 800 ml Wasser wird 2 Stunden auf 100°C erwärmt. Danach wird aufgearbeitet, indem man das Festprodukt abfiltriert, wäscht und trocknet. Man erhält eine modifizierte Azulminsäure, die etwa 2 Gewichtsprozent an Calcium und, — wie sich aus den entbundenen Mengen an Ammoniak und Kohlendioxid ergibt —, einen Gehalt von etwa 7 Gewichtsprozent an zusätlich entstandenen $F_1$-Fehlerstellen und 0,9 Gewichtsprozent an zusätzlich entstandenen $F_2$-Fehlerstellen aufweist.

b) Durch Umsetzung von 100 g der gemäß (a) hergestellten modifizierten Azulminsäure mit 0,2 Mol Formaldehyd bei 50°C in wäßriger Lösung wird ein Produkt erhalten, das auch bei einer Lagerung von mehreren Monaten bei 30°C keinen Cyanwasserstoff abspaltet. Im Luftvolumen eines Gefäßes, das zur Hälfte mit dem Verfahrensprodukt gefüllt ist, wird eine Cyanwasserstoff-Konzentration von 0 ppm gemessen.

Beispiel 23

a) Ein Gemisch aus 108 g der gemäß Beispiel 13 a hergestellten modifizierten Azulminsäure und 1000 ml einer 1 n wäßrigen Kalilauge wird 44 Stunden auf 100°C erwärmt. Dabei tritt schon wenige Minuten nach Beginn der Umsetzung eine vollständige Lösung der eingesetzten Azulminsäure ein.

Das Fortschreiten der Verseifungsreaktion wird durch Messung der entbundenen Mengen an Ammoniak und Kohlendioxid kontrolliert. Die freigesetzte Menge an Ammoniak beträgt nach 8 Stunden 12,2 g, nach 22 Stunden 15 g, nach 44 Stunden 17 g (=1 Mol).

In einem unter genau gleichen Bedingungen durchgeführten Parallelversuch wird durch Ansäuern des Reaktionsgemisches mit 2 Mol wäßriger Salzsäure ermittelt, daß etwa 21,9 g (=0,5 Mol) Kohlendioxid als Kaliumcarbonat in der Lösung gebunden waren.

Die Aufarbeitung erfolgt dadurch, daß man die braunschwarze wäßrige Reaktionslösung bei 14 Torr einengt, die dabei entstehende braunschwarze Dispersion dreimal mit je 1 Liter Methanol versetzt, jeweils durch Abdestillieren des Methanols sowie noch vorhandenen Wassers einengt, dann das verbleibende Kristallisat noch einmal mit 800 ml Methanol kurz aufkocht und filtriert. Man erhält 113 g eines wasserlöslichen Produktes von humusartiger Farbe.

Elementaranalyse:
31,5% C; 3,9% H; 26,8% N; 21,0% O; 16,1% K

Aus den gemessenen Mengen an freigesetztem Ammoniak und Kohlendioxid ergibt sich ein molarer $NH_3/CO_2$-Quotient von 2.

Die Differenz aus den ermittelten Ammoniak- und Kohlendioxid-Molzahlen beträgt etwa 0,5. Dieser Faktor besagt, daß etwa die Hälfte aller $F_1$-Fehlerstellen in $F_2$-Fehlerstellen übergegangen sind.

Auf Basis dieser Zahlen errechnet sich, daß 100 Gewichtsteile des Verfahrensproduktes etwa 55 Gewichtsprozent an Kaliumsalz-$F_1$-Fehlerstellen der Konstitution

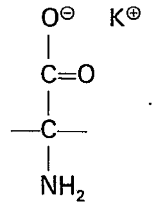

und etwa 14,5 Gewichtsprozent an $F_2$-Fehlerstellen enthalten. Bei dieser Methode der Fehlerstellenerzeugung ist demnach auf 2 cyclische Einheiten der Azulminsäure jeweils eine Kaliumsalz-$F_1$-Fehlerstelle obiger Konstitution entstanden. Ein derartiges Produkt läßt sich in idealisierter Darstellung durch die folgende Formel veranschaulichen:

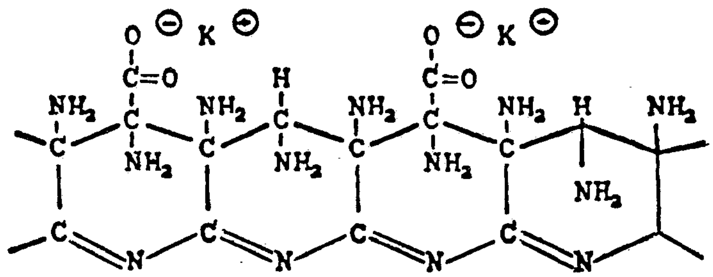

Berücksichtigt man sowohl die Polymolekularität des Verfahrensproduktes als auch die Tatsache, daß im "anionischen" und "kationischen" Endgruppenteil der Azulminsäure Sauerstoffatome in Form von Carbonylgruppen, (die zur Erhöhung des Sauerstoffgehaltes beitragen), vorliegen, so stehen die gefundenen Werte der Elementaranalyse in relativ guter Übereinstimmung mit Produkten, die mittlere Molekulargewichte zwischen 600 und 800 besitzen. Für eine einheitliche Verbindung der Summenformel $C_{21}H_{28}N_{17}O_9K_3$ (Molekulargewicht=789) berechnet sich vergleichsweise folgende elementare Zusammensetzung:

32,4% C; 3,5% H; 30,5% N; 18,5% O; 15,1% K

Das Verfahrensprodukt, das als Polyelektrolyt bezeichnet werden kann, enthält eine niedermolekulare Fraktion, die besonders gut in Wasser löslich ist und aufgrund ihrer elementaren Zusammensetzung in etwa durch die folgende Formel veranschlaulicht werden kann:

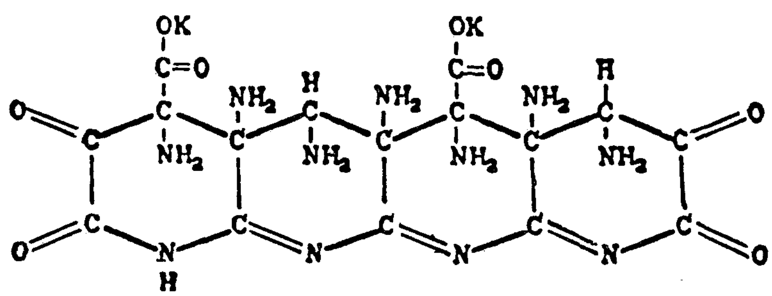

(Molekulargewicht 569)

Elementaranalyse des niedermolekularen Produktes
35,7% C; 2,5% H; 23,5% N; 23,7% O; 14,5% K

b) Durch Umsetzung des nach der unter (a) beschriebenen Methode hergestellten Azullminsäure-Kaliumsalzes mit Formaldehyd in wäßriger Lösung entsteht ein Azulminsäure-Kaliumsalz-Formaldehyd-Kondensationsprodukt das gegenüber Cyanwasserstoff-Abspaltung stabil ist.

Nach der im Beispiel 23 a beschriebenen Methode werden auch die in der nachfolgenden Tabelle 1 aufgeführten Salze modifizierter Azulminsäuren durch Umsetzung von gemäß Beispiel 13 a hergestellter Azulminsäure mit den entsprechenden Basen bzw. basischen Salzen erhalten:

TABELLE 1

| Beispiel–Nr. | Base bzw. Salz | Produkt | Farbe |
|---|---|---|---|
| 24 a | $K_2CO_3$ | Azulminsäure-Kaliumsalz | humusfarben |
| 25 a | $KHCO_3$ | Azulminsäure-Kaliumsalz | ,, |
| 26 a | $Na_2S$ | Azulminsäure-Natriumsalz | ,, |
| 27 a | $K_2S$ | Azulminsäure-Kaliumsalz | ,, |
| 28 a | $Na_2S_2O_3$ | Azulminsäure-Natriumsalz | ,, |
| 29 a | LiOH | Azulminsäure-Lithiumsalz | ,, |

Aus dem gemäß Beispiel 23a hergestellten Azulminsäure-Kaliumsalz werden durch Umsetzung mit Metallhalogeniden, Metallhydroxiden, Nitraten bzw. Metallsulfaten in wäßriger Lösung die in der folgenden Tabelle 2 aufgeführten Verbindungen erhalten.

TABELLE 2

| Beispiel–Nr. | Metallsalz bzw. Base | Produkt |
|---|---|---|
| 30 a | $Ca(OH)_2$ | Azulminsäure-Calciumsalz |
| 31 a | $Ba(OH)_2$ | ,, -Bariumsalz |
| 32 a | $PbCl_4$ | ,, -Bleisalz |
| 33 a | $MgCl_2$ | ,, -Magnesiumsalz |
| 34 a | $SrCl_2$ | ,, -Strontriumsalz |
| 35 a | $FeSO_4$ | ,, -Eisensalz |
| 36 a | $CoSO_4$ | ,, -Cobaltsalz |
| 37 a | $CuSO_4$ | ,, -Kupfersalz |
| 38 a | $MnSO_4$ | ,, -Mangansalz |
| 39 a | $NiCl_2$ | ,, -Nickelsalz |
| 40 a | $ZnSO_4$ | ,, -Zinksalz |
| 41 a | $SnCl_4$ | ,, -Zinnsalz |
| 42 a | $CdSO_4$ | ,, -Cadmiumsalz |
| 43 a | $Bi_2(SO_4)_3$ | ,, -Wismutsalz |
| 44 a | $Al_2(SO_4)_3$ | ,, -Aluminiumsalz |
| 45 a | $AgNO_3$ | ,, -Silbersalz |
| 46 a | $HgCl_2$ | ,, -Quecksilbersalz |
| 47 a | $AuCl_3$ | ,, -Goldsalz |

Nach der im Beispiel (23b) angegebenen Methode lassen sich aus den entsprechenden Azulminsäure-Salzen und Formaldehyd auch die in der nachstehenden Tabelle 3 aufgeführten Kondensationsprodukte erhalten.

TABELLE 3

| Beispiel–Nr. | Formaldehyd-Kondensationsprodukt von: | |
|---|---|---|
| 26 b | Azulminsäure-Natriumsalz | (26 a) |
| 29 b | „ -Lithiumsalz | (29 b) |
| 30 b | „ -Calziumsalz | (30 b) |
| 31 b | „ -Bariumsalz | (31 a) |
| 32 b | „ -Bleisalz | (32 a) |
| 33 b | „ -Magnesiumsalz | (33 a) |
| 34 b | „ -Strontiumsalz | (34 a) |
| 35 b | „ -Eisensalz | (35 a) |
| 36 b | „ -Cobaltsalz | (36 a) |
| 37 b | „ -Kupfersalz | (37 a) |
| 38 b | „ -Mangansalz | (38 a) |
| 39 b | „ -Nickelsalz | (39 a) |
| 40 b | „ -Zinksalz | (40 a) |
| 41 b | „ -Zinnsalz | (41 a) |
| 42 b | „ -Cadmiumsalz | (42 a) |
| 43 b | „ -Wismutsatz | (43 a) |
| 44 b | „ -Aluminiumsalz | (44 a) |
| 45 b | „ -Silbersalz | (45 a) |
| 46 b | „ -Quecksilbersalz | (46 a) |
| 47 b | „ -Goldsalz | (47 a) |

Beispiel 48

Ein Gemisch aus 108 g (2 Grundmol) der gemäß Beispiel 1 hergestellten Azulminsäure, 4 Mol Glyoxal, 1000 g destilliertem Wasser und 100 g Äthanol wird unter intensivem Rühren 16 Stunden auf 100°C erwärmt. Danach arbeitet man auf, indem man das Festprodukt abfiltriert, wäscht und trocknet. Man erhält 140 g Azulminsäure-Glyoxal-Kondensationsprodukt, das auch bei längerer Lagerung bei Temperaturen zwischen 20 und 40°C keinen Cyanwasserstoff abspaltet.

Aus der während der Umsetzung entbundenen Kohlendioxid-Menge sowie unter Zugrundelegung eines molaren $NH_3/CO_2$-Quotienten von 3,2 ergibt sich, daß das Verfahrensprodukt zwischen 4 und 6 Gewichtsprozent an $F_1$- und $F_2$-Fehlerstellen enthält. Demnach verläuft die obige Kondensationsreaktion unter gleichzeitiger Erzeugung von Fehlerstellen.

Nach der im Beispiel 48 beschriebenen Methode werden durch Umsetzung von je 108 g gemäß Beispiel 1 hergestellter Azulminsäure mit 4 Mol der entsprechenden Aldehyde die in der nachstehenden Tabelle 4 aufgeführten Kondensationsprodukte erhalten.

TABELLE 4

| Beispiel–Nr. | Aldehyd | Produkt | Ausbeute (in g) |
|---|---|---|---|
| 49 | Acetaldehyd | Az-Acetaldehyd-kond. | 115 |
| 50 | Propionaldehyd | Az-Propionaldehyd-kond. | 126 |
| 51 | Isobutyraldehyd | Az-Isobutyraldehyd-kond. | 124 |
| 52 | Hydroxypivalinaldehyd | Az-Hydroxypivalinaldehyd-kond. | 125 |
| 53 | Acrolein | Az-Acroleinaldehyd-kond. | 143 |
| 54 | Glucose | Az-Glucose-kond. | 128 |
| 55 | Salicylaldehyd | Az-Salicylaldehyd-kond. | 121 |
| 56 | Furfurol | Az-Furfurol-kond. | 135 |
| 57 | ω-Hydroxymethylfurfurol | Az-ω-Hydroxymethylfurfurol-kond. | 139 |
| 58 | Chloralhydrat | Az-Chloralhydrat-kond. | 149 |

"Az" steht jeweils für "Azulminsäure"

Beispiel 59

Ein Gemisch aus 108 g der gemäß Beispiel (13a) hergestellten Azulminsäure, 0,3 Mol Formaldehyd, 600 g destilliertem Wasser und 100 g feinpulvriger Asche aus Tabakblättern (Zusammensetzung der Asche, berechnet auf Oxide der Elemente: 29,1% $K_2O$; 3,2% $Na_2O$; 36,0% CaO; 7,4% MgO; 1,9% $Fe_2O_3$; 4,7% $P_2O_5$; 3,1% $SO_3$; 5,8% $SiO_2$ und 6,7% $Cl_2$) wird unter intensivem Rühren 6 Stunden auf 100°C erwärmt. Danach arbeitet man auf, indem man das Festprodukt abfiltriert, wäscht und trocknet. Man erhält 195 g Tabakasche enthaltendes Azulminsäure-Formaldehyd-Kondensationsprodukt, das eine ausgezeichnete Stabilität gegenüber einer Blausäureabspaltung aufweist.

Durch Messung der während der Umsetzung entbundenen Mengen an Ammoniak und Kohlendioxid ergibt sich, daß die Kondensationsreaktion unter gleichzeitiger Erzeugung von Fehlerstellen verläuft.

Nach der im Beispiel 59 beschriebenen Methode werden durch Umsetzung von je 108 g gemäß Beispiel (13a) hergestellter Azulminsäure mit 0,3 Mol Formaldehyd in Gegenwart von Zusatzstoffen die in der nachstehenden Tabelle 5 aufgeführten Kondensationsprodukte erhalten.

TABELLE 5

| Beispiel–Nr. | Zusatzstoff | eingesetzte Menge an Zusatzst. [g] | Ausbeute [in g] |
|---|---|---|---|
| 60 | feinpulvrige Asche aus Weidengehölz | 100 | 198 |
| 61 | Ascherückstände von Ginster-, Buchen- und Birkenblattern im Verhältnis 1 : 1 : 1 (Trockengewicht) | 100 | 196 |
| 62 | Fichtenolz-Asche | 100 | 199 |
| 63 | normale Gartenerde mit einem Feuchtigkeitsgehalt von etwa 40 Gew.-% | 424 | 377 |
| 64 | Polymethylenharnstoff der Konstitution $H_2N-\overset{O}{\overset{\|}{C}}-NH-(CH_2-NH-\overset{O}{\overset{\|}{C}}-NH)_{4\ 14}H$ | 100 | 205 |
| 65 | Torf | 100 | 180 |
| 66 | Mischung aus unlöslichem Calziumcyanat und Calziumcyanamid 1 : 1 | 100 | 185 |
| 67 | pulvriges, schwerlösliches Isobutyraldehyd-Harnstoff-Kondensat (Molverhältnis 1 : 1) | 100 | 197 |
| 68 | pulvriges, schwerlösliches Isobutyraldehyd-Harnstoff-Kondensat (Molverhältnis 2 : 1) | 100 | 193 |
| 69 | Isobutyraldehyd-Harnstoff-Kondensat (Molverhältnis 1 : 2,5) | 100 | 190 |
| 70 | pulvriges, schwerlösliches Crotonaldehyd-Harnstoff-Kondensat (Molverhältnis 1 : 2) | 100 | 189 |

TABELLE 5 (Fortsetzung)

| Beispiel–Nr. | Zusatzstoff | eingesetzte Menge an Zusatzst. [g] | Ausbeute [in g] |
|---|---|---|---|
| 71 | pulvriges, schwerlösliches Crotonaldehyd-Harnstoff-Kondensat (Molverhältnis 1 : 1) | 100 | 193 |
| 72 | pulvriges, schwerlösliches Crotonaldehyd-Harnstoff-Kondensat, hergestellt aus 1 Mol Crotonaldehyd und 2 Mol Harnstoff, im wesentlichen bestehend aus 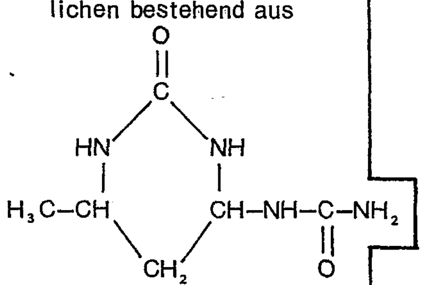 | 100 | 204 |
| 73 | Thomasmehl | 100 | 205 |
| 74 | Phosphorit | 100 | 203 |
| 75 | Rhenaniaphosphat | 100 | 198 |
| 76 | Aktivkohlepulver | 100 | 204 |
| 77 | Tonerdehydrat | 100 | 207 |
| 78 | Siliziumdioxid | 100 | 206 |

Beispiel 79

a) Zu 600 ml 18%iger wäßriger Blausäure und 100 g Polymethylenharnstoff werden unter intensivem Rühren 34 g etwa 25%iger wäßriger Ammoniak-Lösung gegeben, die 6,8 g Natriumcyanat enthält. Nach dem Erwärmen der Mischung auf 40°C steigt die Temperatur durch freiwerdende Polymerisationswärme auf 70°C an. Man erhitzt noch 4 Stunden auf 90°C und arbeitet dann auf, indem man das Polymerisat abfiltriert, nacheinander mit Wasser und Äthanol wäscht und anschließend unter vermindertem Druck trocknet.

Ausbeute: 201 g an modifizierter Azulminsäure, die Polymethylenharnstoff enthält.

Stickstoffgehalt des Verfahrensproduktes: 38,9%.

b) Ein Gemisch aus 200 g der gemäß (a) hergestellten Polymethylenharnstoff enthaltenden modifizierten Azulminsäure, 200 ml einer 30%igen wäßrigen Formalin-Lösung (=2 Mol Formaldehyd) und 1200 ml destilliertem Wasser wird 3 Stunden lang auf 100°C erwärmt. Nach dem Aufarbeiten erhält man ein pulvriges Azulminsäure-Polymethylenharnstoff-Formaldehyd-Kondensationsprodukt, das gegen Cyanwasserstoffabspaltung völlig stabil ist. Bei Langzeitlagerungen wird in Luft enthaltenen Gebinden eine CyanwasserstoffKonzentation von 0 ppm gemessen. Während der Kondensationsreaktion wurden etwa 1,6 Mol an Formaldehyd aufgenommen.

Nach der im Beispiel (79a) beschriebenen Methode werden auch die in der nachstehenden Tabelle 6 aufgeführten Zusatzstoffe enthaltenden modifizierten Azulminsäuren hergestellt. Es wird jeweils 1 Liter 19,2%ige wäßrige Blausäure in Gegenwart von jeweils 180 g Zusatstoff polymerisiert.

TABELLE 6

| Beispiel–Nr. | Zusatzstoff | Ausbeute [in g] | Stickstoffgehalt des Produktes |
|---|---|---|---|
| 80 a | Aktivkohle | 342 | 22,9 % |
| 81 a | Bleicherde | 340 | 22,7 % |
| 82 a | Asbestmehl | 354 | 20,1 % |
| 83 a | Trilon–B | 170 | 41,8 % |
| 84 a | Stärke (unlöslich) | 342 | 22,4 % |
| 85 a | Flugasche "M" | 353 | ca 22 % |
| 86 a | Torf (feucht) | 155 | 31,3 % |

Nach der im Beispiel (79b) beschriebenen Methode werden auch die in der nachstehenden Tabelle 7 aufgeführten Azulminsäure-Zusatzstoff-Formaldehyd-Kondensationsprodukte hergestellt.

TABELLE 7

| Beispiel–Nr. | Kondensationsprodukt aus | |
|---|---|---|
| 80 b | Az-Aktivkohle + Formaldehyd | (80 a) |
| 81 b | Av-Bleicherde + Formaldehyd | (81 a) |
| 82 b | Az-Asbestmehl + Formaldehyd | (82 a) |
| 83 b | Az-Trilon–B + Formaldehyd | (83 a) |
| 84 b | Az-Stärke (unlöslich) + Formaldehyd | (84 a) |
| 85 b | Az-Flugasche "M" + Formaldehyd | (85 a) |
| 86 b | Az-Torf (feucht) + Formaldehyd | (86 a) |

"Az" steht jeweils fur "Azulminsäure"

Beispiel 87

100 g der gemäß Beispiel (13a) hergestellten und durch Kondensation mit wenig Formaldehyd stabilisierten Azulminsäure werden bei Raumtemperatur 10 Minuten lang mit einem Überschuß an wäßriger Salpetersäure gerührt. Danach wird das Festprodukt abfiltriert und mit wenig Wasser gewaschen. Man erhält ein Azulminsäure-Salpetersäure-Addukt, in dem auf 100 Gewichtsteile an stabilisierter Azulminsäure 0,51 Mol Salpetersäure gebunden sind. Im Mittel wird demnach trotz heterogener Reaktion von etwa 4 Aminogruppen, die in etwa 216 Gewichtsteilen der eingesetzten Azulminsäure vorhanden sind, eine Aminogruppe innerhalb des polycyclischen Gerüstes in eine Gruppierung der Konstitution

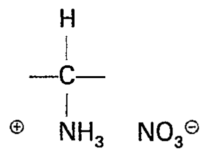

überführt.

Elementaranalyse des isolierten Produktes:
35,2% C; 4,3% H; 38,9% N; 20,9% O

Das Verfahrensprodukt enthält etwa 19,2 Gew.-% Nitrationen.

Da bei der Herstellung derartiger Nitrationen enthalten-der Azulminsäuren beim Auswaschen der Produkte mit viel Wasser die Gefahr besteht, daß die enthaltenen Nitrationen zum Teil abdissoziieren, ist es zweckmäßig, lediglich mit wenig Wasser zu waschen und das feuchte Pulver, das noch Antiele an nicht ionisch gebundener Salpetersäure enthält, mit Ammoniak zu begasen. Durch diese Maßnahme wird nicht ionisch gebundene Salpetersäure in Ammoniumnitrat überführt.

Beispiel 88

100 g der gemäß Beispiel (13a) hergestellten und durch Kondensation mit wenig Formaldehyd stabilisierten Azulminsäure werden bei Raumtemperatur 5 Minuten lang mit einem Überschuß an 2 normaler wäßriger Salpetersäure gerührt. Danach wird das Festprodukt abfiltriert und mit wenig Wasser gewaschen. Man erhält ein Azulminsäure-Salpetersaure-Addukt, in dem auf 100 Gewichtsteile an stabilisierter Azulminsäure 0,64 Mol Salpetersäure gebunden sind. Demnach werden im Mittel auf 4 Aminogruppenäquivalente in 216 Gewichtsteilen an stabislisierter Azulminsäure etwa 1,3 Aminogruppenäquivalente zur Salzbildung mit Salpetersäure herangezogen.

In weiteren Versuchen ergibt sich, daß der aufgenommene Anteil an Salpetersäure umso größer ist, je feinteiliger (z.B. Korngröße <100 $\mu$m) die eingesetzte stabilisierte Aluminsäure ist.

Nach der im Beispiel (87) beschriebenen Methode werden auch die in der nachstehenden Tabelle 8 aufgeführten Addukte erhalten, indem man jeweils 100 Gewichtsteile einer mit wenig Formaldehyd stabilisierten Azulminsäure mit einem Überschuß an der jeweiligen Säure umsetzt.

TABELLE 8

| Beispiel–Nr. | Addukt aus | gebundene Säuremenge pro 100 g Azulminsäure |
|---|---|---|
| 89 | Az + Ölsäure | 0,33 Mol |
| 90 | Az + Ricinolsäure | 0,25 Mol |
| 91 | Az + Dibutylphosphorsäure | 0,25 Mol |
| 92 | Az + 2-Äthylcapronsäure | 0,35 Mol |
| 93 | Az + Acrylsäure | 0,38 Mol |
| 94 | Az + Methacrylsäure | 0,4 Mol |
| 95 | Az + Maleinsäure | 0,4 Mol |
| 96 | Az + Maleinsäure-Oleylalkohol-Halbester | 0,34 Mol |

"Az" steht jeweils für "stabilisierte Azulminsäure"

Die in den Beispiel 89—96 aufgeführten Verbindungen besitzen hydrophoben Charakter.

Beispiel 97

100 g von mit Formaldehyd stabilisierter Azulminsäure mit einem $F_1$-Fehlerstellen-Gehalt von etwa 2,6 Gewichtsprozent und einem $F_2$-Fehlerstellen-Gehalt von 0,6 Gewichtsprozent werden mit 0,5 Mol Cadmium-II-chlorid und 600 ml destilliertem Wasser 6 Stunden bei Raumtemperatur gerührt. Danach wird das Festprodukt abfiltriert, gut mit Wasser gewaschen und bei 100°C getrocknet. Man isoliert ein schwarzes feinpulvriges Produkt mit einem Cadmiumgehalt von 8,1 Gewichtsprozent. Es handelt sich bei dem Verfahrensprodukt um mit Formaldehyd stabilisierte Azulminsäure, die Cadmium-II-chlorid komplex gebunden enthält. — Das Azulminsäure-Komplexsalz ist gegenüber Cyanwasserstoffabspaltung völlig stabil.

Nach der im Beispiel 97 beschriebenen Methode werden auch die in der nachstehenden Tabelle 9 aufgeführten Komplex-Salze erhalten, indem man jeweils 100 g mit Formaldehyd stabilisierter Azulminsäure mit jeweils 0,5 Mol Chlord oder Sulfat des entsprechenden Metalls umsetzt.

TABELLE 9

| Beispiel—Nr. | Metallsalz | Metallgehalt des Azulminsäure-Kompl. |
|---|---|---|
| 98 | $MnSO_4$ | 3,65 Gew.-% |
| 99 | $SnCl_2$ | 23,5 Gew.-% |
| 100 | $CuSO_4$ | 10,4 Gew.-% |
| 101 | $HgCl_2$ | 28,4 Gew.-% |
| 102 | $CoCl_2$ | 5,2 Gew.-% |
| 103 | $ZnCl_2$ | 10,4 Gew.-% |
| 104 | $FeSO_4$ | 6,8 Gew.-% |
| 105 | $PbCl_2$ | 25,8 Gew.-% |
| 106 | $Bi\ (NO_3)_3$ | 21 Gew.-% |
| 107 | $Ag\ NO_3$ | 26,7 Gew.-% |

Beispiel 108

a) Ein Gemisch aus 108 g nahezu fehlerstellenfreier Azulminsäure, 1 Mol des gemäß Beispiel 97 hergestellten Azulminsäure-Cadmiumchlorid-Komplexes und 1000 g destilliertem Wasser wird 8 Stunden bei 70°C gerührt. Anschließend wird das Festprodukt abfiltriert, gewaschen und getrocknet. Man erhält einen Azulminsäure-Cadmiumchlorid-Komplex mit einem relativ hohen $F_1$- und $F_2$-Fehlerstellengehalt. Der Gehalt an $F_1$-Fehlerstellen beträgt etwa 10—12 Gewichtsprozent.

b) 120 g des nach der unter (a) beschriebenen Methode hergestellten fehlerstellenhaltigen Azulminsäure-Cadmiumchlorid-Komplexes werden in wäßrigem Medium 6 Stunden lang bei 50°C mit 1 Mol Formaldehyd behandelt. Danach wird das Festprodukt abfiltriert, gewaschen und getrocknet. Man erhält einen durch Formaldehyd stabilisierten Azulminsäure-Cadmiumchlorid-Komplex, der selbst bei 180°C keinen Cyanwasserstoff abspaltet. Das Produkt weist einen Cadmium-Gehalt von 17,3 Gewichtsprozent auf.

c) 120 g des gemäß (b) hergestellten Produktes werden 2 Stunden lang bei 25°C mit einem Überschuß an 1 n wäßriger Natronlauge gerührt. Danach wird das Festprodukt abfiltriert, gewaschen und getrocknet. Man erhält einen durch Formaldehyd stabilisierten Azulminsäure-Cadmiumhydroxid-Komplex.

In der im Beispiel 108 unter (a) angegebenen Weise werden die in der nachstehenden Tabelle 10 aufgeführten fehlerstellenhaltigen Azulminsäure-Komplex erhalten, indem man relativ fehlerstellenfreie Azulminsäure mit dem entsprechenden Azulminsäure-Metallsalz-Komplex umsetzt.

TABELLE 10

| Beispiel–Nr. | Azulminsäure-Metallsalz-Komplex | Gehalt an $F_1$-Fehlerstellen [%] |
|---|---|---|
| 109 a | Az-$MnSO_4$-Komplex | 9 |
| 110 a | Az-Sn-$Cl_2$-Komplex | 12 |
| 111 a | Az-$CuSO_4$-Komplex | 8 |
| 112 a | Az-$HgCl_2$-Komplex | 7 |
| 113 a | Az-$CoCl_2$-Komplex | 10,5 |
| 114 a | Az-$ZnCl_2$-Komplex | 13 |
| 115 a | Az-$FeSO_4$-Komplex | 8 |
| 116 a | Az-$PbCl_2$-Komplex | 9 |
| 117 a | Az-$Bi(NO_3)_3$-Komplex | 8 |
| 118 a | Az-$AgNO_3$-Komplex | 7 |

"Az" steht jeweils fur "Azulminsäure"

Nach der im Beispiel 108 unter (b) angegebenen Methode werden die in der Tabelle 10 aufgeführten Azulminsäure-Metallsalz-Komplex mit Formaldehyd kondensiert. Man erhält dabei die in der nachstehenden Tabelle 111 aufgeführten, mit Formaldehyd stabilisierten Azulminsäure-Metallsalz-Komplexe.

TABELLE 11

| Beispiel–Nr. | Formaldehyd-Kondensationsprodukt aus: | Metallgehalt |
|---|---|---|
| 109 b | Az-$MnSO_4$-Komplex gemäß Beispiel 109 a | 3,2 % Mn |
| 110 b | Az-$SnCl_2$-Komplex gemäß Beispiel 110 a | 18 % Sn |
| 111 b | Az-$CuSO_4$-Komplex gemäß Beispiel 111 a | 9,6 % Cu |
| 112 b | Az-$HgCl_2$-Komplex gemäß Beispiel 112 a | 26 % Hg |
| 113 b | Az-$CoCl_2$-Komplex gemäß Beispiel 113 a | 5,3 % Co |
| 114 b | Az-$ZnCl_2$-Komplex gemäß Beispiel 114 a | 9,5 % Zn |
| 115 b | Az-$FeSO_4$-Komplex gemäß Beispiel 115 a | 7,2 % Fe |
| 116 b | Az-$PbCl_2$-Komplex gemäß Beispiel 116 a | 23,8 % Fb |

"Az" steht jeweils fur "Azulminsäure"

Bei Verwendung von Silber-, Gold- oder Platinsalz-Komplexen der Azulminsäure lassen sich mit Formaldehyd stabilisierte Produkt mit einem Metallgehalt von über 29 Gewichtsprozent darstellen.

Beispiel 119

Ein Gemisch aus 100 g nahezu fehlerstellenfreier Azulminsäure, 17 g Kupfernitrat-Trihydrat, 300 g Ameisensäure und 80 g Wasser wird unter Durchleiten von 25 Litern Luft pro Stunde 6 Stunden lang bei 60—70°C gerührt. Danach wird das Festprodukt abfiltriert, gewaschen und getrocknet. Man erhält einen Azulminsäure-Kupfernitrat-Komplex mit einem gehalt von etwa 8,9 Gewichtsprozent an $F_1$-Fehlerstellen und einem Gehalt von etwa 2,3 Gewichtsprozent an $F_2$-Fehlerstellen. Ferner isoliert man 0,8 Gewichtsprozent an Oxamid, das aus abgespaltener monomerer Blausäure im Verlaufe der oxydativen Fehlerstellenerzeugung und gleichzeitiger Komplexierung entstanden ist.

Das Produkt läßt sich durch Umstezung mit Formaldehyd stabilisieren.

Beispiel 120

a) Ein Gemisch aus 108 g gemäß Beispiel 13 a hergestellter Azulminsäure, 1 Mol Eisen-II-sulfat und 800 ml destilliertem Wasser wird 10 Stunden lang bei 100°C gerührt. Danach wird das Festprodukt abfiltriert, mit 5%iger wäßriger Ammoniak-Lösung gewaschen und getrocknet. Man erhält eine relativ fehlerstellenreiche (bis zu 20 Gewichtsprozent) Azulminsäure der Zusammensetzung:
30,3% C; 3,6% H; 28,7% N; 26,8% O; 11,5% Fe

120 g des gemäß (a) hergestellten fehlerstellenreichen Azulminsäure-Eisen-Komplexes werden in wäßrigem Medium bei 50°C 5 Stunden lang mit 120 g 30%iger Formaldehyd-Lösung behandelt. Man erhält einen durch Kondensation mit Formaldehyd stabilisierten Azulminsäure-Eisen-Komplex, der selbst bei 180°C keinen Cyanwasserstoff abspaltet.

Nach der im Beispiel (120a) angegebenen Methode werden auch die in der nachfolgenden Tabelle 12 aufgeführten Azulminsaure-Metallsalz-Komplexe hergestellt.

TABELLE 12

| Beispiel-Nr. | verwendete Metallverbindung | Zusammensetsung des Produktes |
|---|---|---|
| 121 a | $CuSO_4$ | 24,5 % C; 2,2 % H; 22,6 % N; 23,8 % O; 3,3 % S; 23,9 % Cu |
| 122 a | $FeCl_2$ | 35,7 % C; 3,1 % H; 33,3 % N; 22,3 % O; 1,7 % Cl; 4,4 % Fe |
| 123 a | $ZnCl_2$ | 23,5 % C; 2,2 % H; 21,6 % N; 19,1 % O; 34,1 % Zn |
| 124 a | $CoCl_2$ | 28,4 % C; 2,7 % H; 27,8 % N; 20,4 % O; 20,2 % Co |
| 125 a | $Cu(OCOCH_3)_2$ | 22,3 % C; 2,6 % H; 22,6 % N; 18,4 % O; 33,9 % Cu |
| 126 a | $SnCl_2$ | 14,7 % C; 2,3 % H; 12,9 % N; 24,8 % N; 44,3 % Sn |
| 127 a | $MnSO_4$ | 28,4 % C; 3,1 % H; 26,6 % N; 24,2 % O; 17,6 % Mn |
| 128 a | $SnCl_2$ (0,4 Mol) | 23,4 % C; 2,7 % H; 21,0 % N; 21,9 % O; 25,9 % Sn |
| 129 a | $ZnCl_2$ (0,5 Mol) | 29,2 % C; 2,6 % H; 29,5 % N; 19,1 % O; 19,8 % Zn |
| 130 a | $PbCl_2$ | 58,3 % Pb |
| 131 a | $Bi(NO_3)_3$ | 59,1 % Bi |
| 132 a | $Tl_2SO_4$ | 57,9 % Ti |
| 133 a | $TiCl_4$ (Xylol) | 25,2 % Ti |
| 134 a | $Zr(SO_4)_2$ | 38,9 % Zr |

TABELLE 12 (Fortsetzung)

| Beispiel–Nr. | verwendete Metallverbindung | Zusammensetzung des Produktes |
|---|---|---|
| 135 a | $H_2WO_4$ | 55,8 % W |
| 136 a | $NiCl_2$ | 29,2 % Ni |
| 137 a | $AgNO_3$ | 43,1 % Ag |
| 138 a | $HgCl_2$ | 53,8 % Hg |
| 139 a | $HAuCl_4$ | 56 % Au |
| 140 a | $H_2PtCl_6$ | 55,5 % Pt |

Nach der im Beispiel (120 b) angegebenen Methode werden die in der Tabelle 12 aufgeführten Azulminsäure-Metallsalz-Komplexe mit Formaldehyd umgesetzt. Man erhält dabei die in der nachfolgenden Tabelle 13 aufgeführten Azulminsäure-Metallsalz-Komplex-Kondensationsprodukte.

TABELLE 13

| Beispiel–Nr. | Formaldehyd-Kondensationsprodukt von: |
|---|---|
| 121 b | Az-Cu-Komplex gemäß Beispiel 121 a |
| 122 b | Az-Fe-Komplex gemäß Beispiel 122 a |
| 123 b | Az-Zn-Komplex gemäß Beispiel 123 a |
| 124 b | Az-Co-Komplex gemäß Beispiel 124 a |
| 125 b | Az-Cu-Komplex gemäß Beispiel 125 a |
| 126 b | Az-Sn-Komplex gemäß Beispiel 126 a |
| 127 b | Az-Mn-Komplex gemäß Beispiel 127 a |
| 128 b | Az-Sn-Komplex gemäß Beispiel 128 a |
| 129 b | Az-Zn-Komplex gemäß Beispiel 129 a |
| 130 b | Az-Pb-Komplex gemäß Beispiel 130 a |
| 131 b | Az-Bi-Komplex gemäß Beispiel 131 a |
| 132 b | Az-Tl-Komplex gemäß Beispiel 132 a |
| 133 b | Az-Ti-Komplex gemäß Beispiel 133 a |
| 134 b | Az-Zr-Komplex gemäß Beispeil 134 a |
| 135 b | Az-W-Komplex gemäß Beispiel 135 a |
| 136 b | Az-Ni-Komplex gemäß Beispiel 136 a |
| 137 b | Az-Ag-Komplex gemäß Beispiel 137 a |
| 138 b | Az-Hg-Komplex gemäß Beispiel 138 a |
| 139 b | Az-Au-Komplex gemäß Beispiel 139 a |
| 140 b | Az-Pt-Komplex gemäß Beispiel 140 a |

"Az" steht jeweils für "Azulminsäure"

Die in den Beispielen (121b)—(140b) aufgeführten Produkt spalten selbst bei 180°C keinen Cyanwasserstoff ab.

Beispiel 141

a) Ein Gemisch aus 100 g nahezu fehlerstellenfreier Azulminsäure, 100 g Gelatine, 100 g Cellulosepulver, 0,8 Mol Phosphorsäure und 1200 ml Wasser wird 2 Stunden lang bei 60°C gerührt. Danach wird das Festprodukt abfiltriert, gewaschen und getrocknet. Man isoliert ein relativ fehlerstellenreiches, phosphorsäurehaltiges Mischprodukt aus Azulminsäure sowie Cellulosepulver und Gelatine und deren Abbauprodukten.

120 g des gemäß (a) hergestellten Produktes werden in 300 g Wasser 5 Stunden lang bei 50°C mit 1 Mol Formaldehyd behandelt. Danach wird das Festprodukt abfiltriert, gewaschen und getrocknet. Man isoliert ein durch Kondensation mit Formaldehyd stabilisiertes, phosphorsäurehaltiges Mischprodukt aus Azulminsäure, Cellulosepulver und Gelatine sowie den Abbauprodukten dieser Naturstoffe.

Beispiel 142

Ein Gemisch aus 108 g Azulminsäure mit einem $F_1$-Fehlerstellengehalt von etwa 2,5 Gew.-%, einem $F_2$-Fehlerstellengehalt von etwa 0,5 Gew.-% und einer Aminogruppen-Gesamtkonzentration von etwa 19 Gew.-% (=1,12 $NH_2$-Äquivalente pro 100 g Azulminsäure) und 0,2 Äquivalenten Formaldehyd (=6 g in 20 Gewichtsteilen Wasser) sowie 500 g destilliertem Wasser wird 4 Stunden bei 100°C gerührt. Das Verfahrensprodukt wird abfiltriert, mit Wasser gewaschen und anschließend eine Stunde lang mit 300 g einer 0,2%igen wäßrigen Ammoniak-Lösung bei Raumtemperatur gerührt, wobei noch enthaltene Spuren an Formaldehyd in wasserlösliches Hexamethylentetramin überführt werden. Das durch Filtration isolierte und nochmals mit Wasser gewaschene Produkt (partiell mit Formaldehyd kondensierte Azulminsäure) wird danach mit 140 g mikrobiell aktiver Gartenerde (Feuchtigkeitsgehalt 40 Gew.-%) in 500 g Wasser unter Überleiten von etwa 50 ml Luft pro Minute 30 Stunden lang bei 35°C gut gerührt. Beim Aufarbeiten erhält man ein ammoniakhaltiges Mischprodukt aus partiell stabilisierter Azulminsäure und mikrobiell aktiver Gartenerde. Im Filtrat des Reaktionsproduktes läßt sich kein Cyanwasserstoff nachweisen.

Während des 30-stündigen Rührens der partiell stabilisierten Azulminsäure mit mikrobiell aktiver Gartenerde werden insgesamt 5,56 g Kohlendioxid entbunden. Von dieser Menge wird der in einem Parallelversuch ermittelte Kohlendioxid-Gehalt von 90 Litern Luft und die durch mikrobielle Aktivität der 140 g Gartenerde erzeugte Kohlendioxidmenge (Summe=2,5 g Kohlendioxid) abgezogen. Somit errechnet sich, daß 3,06 g (0,07 Mol) Kohlendioxid durch Decarboxylierung von $F_1$-Fehlerstellen, — d.h. neu erzeugten $F_1$-Fehlerstellen der Azulminsäure —, entstanden sind. Auf 100 g eingesetzter partiell stabilisierter Azulminsäure haben sich demnach im Verlaufe des Rührens in Gegenwart der mikrobiell aktiven Gartenerde etwa 2 Gewichtsprozent an $F_2$-Fehlerstellen gebildet.

Beispiel 143

a) 108 g der gemäß Beispiel 4 hergestellten stabilisierten und völlig formaldehydfreien Azulminsäure werden in 1000 g entionisiertem Wasser dispergiert, mit 103 g (0,3 Mol) Rohrzucker, 31 g Trockenhefe (=standardisiertes, käufliches Trockenhefepräparat der Fa. Dr. A. Oetker, Bielefeld), 1 g Ammoniumcarbonat sowie 1 g primärem Kaliumphosphat versetzt und bei 35°C gerührt, wobei die nach folgendem Schema ablaufende alkoholische Gärung sofort einsetzt.

$$\text{Rohrzucker} + H_2O \xrightarrow{\text{Hefeenzyme}} 4\ C_2H_5OH + 4\ CO_2$$

Zur Entfernung des dabei gebildeten Kohlendioxids wird ein Stickstoffstrom mit einer Geschwindigkeit von 50 ml pro Minute durch die Apparatur geleitet. Das austretende Gasgemisch wird in einer mit 1 normaler wäßriger Natronlauge beschickten Vorlage vom enthaltenen Kohlendioxid befreit. Die von der Natronlauge in Form von Natriumcarbonat gebundene Menge an Kohlendioxid wird nach 1, 2, 4 und 8 Stunden nach der Bariumcarbonat-Methode titrimetrisch ermittelt. Hierbei zeigt sich in stets reproduzierbarer Weise, daß der Prozeß der alkoholischen Gärung im Vergleich zu einem Kontrollversuch (Hefepräparat, Wasser, Rohrzucker) nur minimal verlangsamt abläuft.

Nach 8 Stunden Versuchsdauer beträgt die entbundene Menge an Kohlendioxid 47 g. Dies entspricht einem Umsatz an Rohrzucker von etwa 89% der Theorie.

b) Führt man den unter (a) beschriebenen Gärungsversuch unter Verwendung der gemäß Beispiel 1 hergestellten, nicht stabilisierten Azulminsäure aus, so wird nach acht-stündigem Rühren ein Rohrzuckerumsatz von 18—20% gemessen. Demnach werden die Hefeenzyme durch die im Reaktionsgemisch enthaltenen Cyanidionen so stark desaktiviert, daß die alkoholische Gärung drastisch gehemmt wird.

Der unter (a) beschriebene Test ermöglicht somit einen qualitativen Cyanidionen-Nachweis.

Beispiel 144

Ein Gemisch aus 108 g (2 Grundmol) der gemäß Beispiel 1 hergestellten schwarzen, unstabilisierten Azulminsäure, 500 g destilliertem Wasser und 20 g einer 30%igen wäßrigen Formalin-Lösung (=0,2 Mol Formaldehyd) wird 4 Stunden lang bei 100°C gerührt. Danach wird das Festprodukt abfiltriert, gewaschen und getrocknet.

Ausbeute: 112 g an Azulminsäure-Kondensationsprodukt, das gegenüber Cyanwasserstoffabspaltung relativ beständig ist. Im Luftraum von Gefäßen, die zur Hälfte mit den Verfahrensprodukten gefüllt sind, wird nach zehntägiger Lagerung bei 50°C eine Cyanwasserstoffkonzentration von 0 ppm gemessen.

Das während der vierstündigen Kondensationsreaktion durch $F_2$-Fehlerstellenerzeugung entstandene Kohlendioxid wird titrimetrisch bestimmt. Es werden insgesamt 0,88 g (0,02 Mol) an Kohlendioxid entbunden, was einem $F_2$-Fehlerstellengehalt von 0,53 Gewichtsprozent entspricht.

In einem unter genau gleichen Bedingungen durchgeführten Parallelversuch wird die nach dem Abfiltrieren des Verfahrensproduktes verbleibende Mutterlauge eingeengt. Aus dem dabei anfallenden gelblich-braunen Rückstand wird das Hexamethylentetramin, das durch Reaktion des bei der $F_1$-

Fehlerstellenerzeugung gebildeten Ammoniaks mit Formaldehyd entstanden ist, durch Extraktion mit Chloroform isoliert.

Ausbeute: 2,8 g Hexamethylentetramin.

Da 140 g Hexamethylentetramin 68 g Ammoniak in gebundener Form enthalten, errechnet sich aus der angegebenen Ausbeute an Hexamethylentetramin, daß im Verlauf der Kondensationsreaktion etwa 0,08 Mol an Ammoniak entstanden sind. Ferner ergibt sich aus der Differenz der Molmengen an Ammoniak und Kohlendioxid, daß 0,06 Mol $F_1$-Fehlerstellen nicht in $F_2$-Fehlerstellen umgewandelt worden sind. Der Gehalt an $F_1$-Fehlerstellen im Verfahrensprodukt beträgt demnach etwa 4 Gewichtsprozent.

Gesamtmenge an Fehlerstellen ($F_1$ und $F_2$): 4,53 Gewichtsprozent.

Hieraus folgt, daß während der Kondensationsreaktion gleichzeitig Fehlerstellen erzeugt wurden.

Beispiel 145

a) In 1800 g destilliertes Wasser werden folgende Stoffe eingerührt:

108 g der gemaß Beispiel 13 a hergestellten modifizierten Azulminsäure,
10 g normaler Torf,
5 g eines handeslüblichen gekalkten Torfes,
5 g Kaliumnitrat,
10 g Calciumcyanamid,
5 g Calciumnitrat,
20 g einer Calciumsulfitablauge, die etwa 40% an Ligninsulfonaten bzw. Ligninkohlehydratverbindungen enthält,
15 g Calciumdihydrogenphosphat,
5 g Torf, die durch Verarbeitung von Torf mit Abfallprodukten tierischer und pflanzlicher Herkunft hergestellt wurden,
10 g Leunasalpeter (Ammoniumsulfat . 2 Ammoniumnitrat),
5 g Kalkammonsalpeter (Ammoniumnitrat+Calciumcarbonat),
5 g eines Torfkalkdüngemittels, das aus kohlensaurem Kalk, Magnesiumcarbonat und etwa 20 Gew.-% Torf besteht,
5 g einer 10%igen kalialkalischen Lösung von Huminsäuren,
50 g eines schwerlöslichen Kondensationsproduktes aus 1 Mol Harnstoff und 1 Mol Isobutyraldehyd,
30 g eines Polymethylenharnstoffes der Konsitution

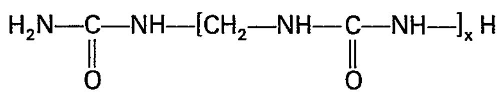

x=4—12,

sowie

0,5 g Eisen-II-sulfat, 0,2 g Kupfersulfat, 0,2 g Mangan-II-sulfat und 0,1 g Zinksulfat. Die gut gerührte Dispersion wird auf 80°C aufgeheizt und 4 Stunden bei dieser Temperatur gehalten.

b) In einem Parallelversuch werden 100 g der gemäß Beispiel 13 a hergestellten modifizierten Azulminsäure unter den unter (a) genannten Bedingungen mit den aufgezählten Spuren-element-Salzen in den angegebenen Mengen, jedoch ohne weitere Zusatzstoffe behandelt. Aus der dabei ermittelten Ammoniak/Kohlendioxid-Bilanz wird festgestellt, daß etwa 0,2 Mol an Ammoniak und etwa 0,05 Mol an Kohlendioxid entbunden werden. Daraus ergibt sich ein molarer $NH_3/CO_2$-Quotient von 4. Die Differenz der Molmengen an Ammoniak und Kohlendioxid (0,1—0,05=0,15) zeigt, daß 0,15 Äquivalente an $F_1$-Fehlerstellen und etwa 0,05 Äquivalente an $F_2$-Fehlerstellen erzeugt wurden. Es sind demnach etwa 10,2 Gew.-% an $F_1$-Fehlerstellen und etwa 1,45 Gew.-% an $F_2$-Fehlerstellen entstanden. Gesamtfehlerstellengehalt ($F_1+F_2$): 11,65 Gew.-%.

Aufgrund der Ergebnisse dieses Vergleichsversuches kann angenommen werden, daß in dem gemäß (a) hergestellten Verfahrensprodukt eine analoge Fehlerstellenkonzentration vorhanden ist.

c) im Anschluß an die unter (a) beschriebene Fehlerstellen-erzeugung wird die gut gerührte Mischung 3 Stunden lang bei 30°C mit 300 g einer 30%igen wäßrigen Formalin-Lösung behandelt. Danach entfernt man das Wasser und nicht umgesetzten Formaldehyd, indem man das Reaktionsgemisch bei 14 Torr bis zur breiigen Konsistenz einengt. Der noch wasserhaltige Brei wird in eine Pfanne gegossen und im Vakuumtrockenschrank bei 60°C getrocknet. Man erhält 333 g einer krümeligen, schwarz-braunen Substanz, die neben den Spurenelementen Eisen, Kupfer, Mangan und Zink auch Kalium, Stickstoff und Phosphor sowie etwa 15 Gewichtsprozent an Wasser enthält. Die Nährstoffionen sind dabei in einer für Pflanzen verfügbaren Form vorhanden.

Im Luftraum von Gefäßen, die zur Hälfte mit den Verfahrensprodukten gefüllt sind, wird nach 50-stündigem Erhitzen auf 50°C eine Cyanwasserstoffkonzentration von 0 ppm gemessen.

**Patentansprüche**

1. Gegebenenfalls Zusatzstoffe enthaltende, durch Kondensation mit Carbonylverbindungen stabilisierte Azulminsäuren mit einem Gehalt von 0,5 bis 55 Gewichtsprozent an ionischen Gruppen der Formel

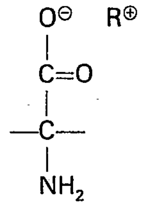

$(F_1)$

in welcher

R für Wasserstoff, Ammonium, ein Äquivalent einer protonisierten oder quaternierten organischen Stickstoffbase, eines Sulfonium-Kations oder für ein Äquivalent eines Metallkations steht, und mit einem Gehalt von 0,5 bis 15 Gewichtsprozent an durch Decarboxylierungsreaktionen entstandenen Gruppen der Formel

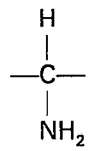

$(F_2)$,

sowie Säureadditions-Salze und Komplex-Verbindungen dieser stabilisierten Azulminsäuren.

2. Verfahren zur Herstellung von Produkten gemäß Anspruch 1, dadurch gekennzeichnet, daß man gegebenenfalls Zusatzstoffe enthaltende modifizierte Azulminsäuren mit einem Gehalt von 0,5 bis 55 Gewichtsprozent an ionischen Gruppen der Formel

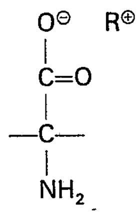

$(F_1)$

in welcher

R die oben angegebene Bedeutung hat, und mit einem Gehalt von 0,5 bis 15 Gewichtsprozent an Gruppen der Formel

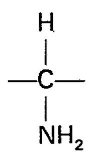

$(F_2)$

in wäßrigem Medium gegebenenfalls in Anwesenheit von Zusatzstoffen mit Carbonylverbindungen kondensiert und die hergestellten Produkte gegebenenfalls anschließend mit Säure oder Base behandelt.

3. Verfahren zur Herstellung von Produkten gemäß Anspruch 1, dadurch gekennzeichnet, daß man gegebenenfalls Zusatzstoffe enthaltende Säureadditions-Salze bzw. Komplex-Verbindungen von modifizierten Azulminsäuren mit einem Gehalt von 0,5 bis 55 Gewichtsprozent an ionischen Gruppen der Formel

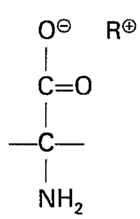

$(F_1)$

in welcher

R die oben angegebene Bedeutung hat, und mit einem Gehalt von 0,5 bis 15 Gewichtsprozent an Gruppen der Formel

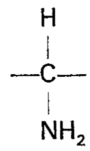

(F$_2$)

in wäßrigem Medium gegebenenfalls in Anwesenheit von Zusatzstoffen mit Carbonylverbindungen kondensiert und die hergestellten Produkte gegebenenfalls anschließend mit Säure oder Base behandelt.

4. Verfahren zur Herstellung von Produkten gemäß Anspruch 1, dadurch gekennzeichnet, daß man nahezu fehler stellen freie Azulminsäuren gegebenenfalls in Gegenwart von Zusatzstoffen mit Carbonylverbindungen im wäßrigen Medium kondensiert und die hergestellten Produkte gegebenenfalls anschließend mit Säure oder Base behandelt.

5. Verfahren zur Herstellung von Produkten gemäß Anspruch 1, dadurch gekennzeichnet, daß man Blausäure mit Hilfe basischer Katalysatoren unter hydrolysierenden Bindungen in wäßrigem Medium gegebenenfalls in Gegenwart von Zusatzstoffen polymerisiert und anschließend ohne vorherige Isolierung der Reaktionsprodukte gegebenenfalls in Gegenwart von Zusatzstoffen mit Carbonylverbindungen in wäßrigem Medium kondensiert und die hergestellten Produkte gegebenenfalls anschließend mit Säure oder Base behandelt.

6. Verfahren zur Herstellung von Produkten gemäß Anspruch 1, dadurch gekennzeichnet, daß man modifizierte Azulminsäuren mit einem Gehalt von 0,5 bis 55 Gewichtsprozent an ionischen Gruppen der Formel

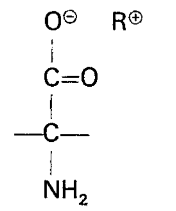

(F$_1$)

in welcher

R die oben angegebene Bedeutung hat, und mit einem Gehalt von 0,5 bis 15 Gewichtsprozent an Gruppen der Formel

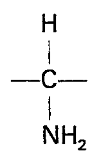

(F$_2$)

in wäßrigem Medium mit Basen umsetzt, gegebenenfalls das Kation durch Behandlung mit Metallsalzen austauscht und anschließend in wäßrigem Medium gegebenenfalls in Gegenwart von Zusatzstoffen mit Carbonylverbindungen kondensiert und die hergestellten Produkte gegebenenfalls anschließend mit Säure oder Base behandelt.

7. Verfahren zur Herstellung von Produkten gemäß Anspruch 1, dadurch gekennzeichnet, daß man modifizierte Azulminsäuren in wäßrigem Medium mit organischen oder anorganischen Säuren behandelt und anschließend gegebenenfalls in Gegenwart von Zusatzstoffen in wäßrigem Medium mit Carbonylverbindungen kondensiert und die hergestellten Produkte gegebenenfalls anschließend mit Säure oder Base behandelt.

8. Verfahren zur Herstellung von Produkten gemäß Anspruch 1, dadurch gekennzeichnet, daß man nahezu fehlerstellenfreie Azulminsäuren in Anwesenheit von hydrolytisch abbaubaren Naturstoffen sowie in Gegenwart von Säure in wäßrigem Medium mit Carbonylverbindungen kondensiert und die hergestellten Produkte gegebenenfalls anschließend mit Säure oder Base behandelt.

9. Verwendung von Stoffen gemäß Anspruch 1 als Katalysatoren in der Isocyanatchemie.

10. Verwendung von Stoffen gemäß Anspruch 1 zur Herstellung von Dispersionen in mit Isocyanaten verschäumbaren Polyhydroxylverbindungen.

11. Verwendung von Stoffen gemäß Anspruch 1 zur Komplexierung von Metallsalzen bzw. Metallverbindungen.

12. Verwendung von Stoffen gemäß Anspruch 1 als Carbodiimidisierungskatalysatoren bei der Heterogenkatalyse von Polyisocyanaten.

13. Verwendung von Stoffen gemäß Anspruch 1 als reaktive Füllstoffe und Flammschutzmittel in Kunststoffen.

14. Verwendung von solchen Stoffen gemäß Anspruch 1, die einen hohen ionischen Anteil aufweisen, als Ionenaustauscher.

15. Verwendung von Stoffen gemäß Anspruch 1 als Alterungsschutzmittel in Kunststoffen.

16. Verwendung von Stoffen gemäß Anspruch 1 als Trägermaterialien für Katalysatoren.

17. Verwendung von solchen Stoffen gemäß Anspruch 1, die Calciumhydroxid, Bleihydroxid, Bleioxide, Aluminium-hydroxide, Magnesiumhydroxid, Zinkhydroxid und/oder Zinnhydroxid enthalten, als Katalysatoren zur Formose-Zuckergemisch-Synthese aus hochprozentigen wäßrigen Formalin-Lösungen.

**Claims**

1. Azulmic acids optionally containing additives, stabilised by condensation with carbonyl compounds and containing from 0.5 to 55 per cent by weight of ionic groups of the formula

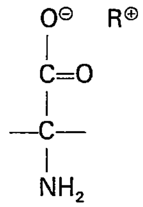

$(F_1)$

in which

R represents hydrogen, ammonium, one equivalent of a protonated or quaternised organic nitrogen base, of a sulphonium cation or one equivalent of a metal cation, and containing from 0.5 to 15 per cent by weight of groups formed by decarboxylation reactions, of the formula

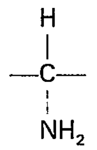

$(F_2)$

and acid addition salts and complex compounds of these stabilised azulmic acids.

2. Process for the preparation of products according to claim 1, characterised in that modified azulmic acids optionally containing additives and containing from 0.5 to 55 per cent by weight of ionic groups of the formula

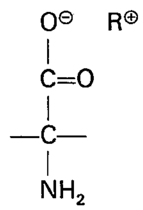

$(F_1)$

in which

R has the meaning indicated above, and containing from 0.5 to 15 per cent by weight of groups of the formula

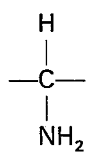

$(F_2)$

are subjected to a condensation reaction with carbonyl compounds in an aqueous medium, optionally in the presence of additives and the products prepared are then optionally treated with an acid or base.

3. Process for the preparation of products according to claim 1, characterised in that acid addition salts or complex compounds, optionally containing additives, of modified azulmic acids containing from 0.5 to 55 per cent by weight of ionic groups of the formula

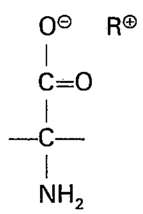

$(F_1)$

in which

R has the meaning indicated above, and containing from 0.5 to 15 per cent by weight of groups of the formula

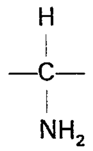

$(F_2)$

are subjected to a condensation reaction with carbonyl compounds in an aqueous medium, optionally in the presence of additives and the products prepared are then optionally treated with an acid or base.

4. Process for the preparation of products according to claim 1, characterised in that azulmic acids which are almost free from structural defects are subjected to a condensation reaction with carbonyl compounds in an aqueous medium, optionally in the presence of additives and the products prepared are then optionally treated with an acid or base.

5. Process for the preparation of products according to claim 1, characterised in that hydrocyanic acid is polymerised under hydrolysing conditions in an aqueous medium with the aid of basic catalysts, optionally in the presence of additives, and the reaction products are then subjected to a condensation reaction with carbonyl compounds, without prior isolation, in an aqueous medium, optionally in the presence of additives and the prepared products are then optionally treated with an acid or base.

6. Process for the preparation of products according to claim 1, characterised in that modified azulmic acids containing from 0.5 to 55 per cent by weight of ionic groups of the formula

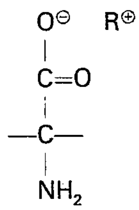

$(F_1)$

in which

R has the meaning indicated above and containing from 0.5 to 15 per cent by weight of groups of the formula

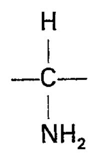

$(F_2)$

are reacted with bases in an aqueous medium, the cation is optionally replaced by treatment with metal salts and the products are then subjected to a condensation reaction with carbonyl compounds in an aqueous medium, optionally in the presence of additives, and the prepared products are then optionally treated with an acid or base.

7. Process for the preparation of products according to claim 1, characterised in that modified azulmic acids are treated with organic or inorganic acids in an aqueous medium and the products are then subjected to a condensation reaction with carbonyl compounds in an aqueous medium, optionally in the presence of additives and the prepared products are then optionally treated with an acid or base.

8. Process for the preparation of products according to claim 1, characterised in that azulmic acids which are almost free from structural defects are subjected to a condensation reaction with carbonyl compounds in an aqueous medium, in the presence of hydrolytically degradable naturally occurring substances and in the presence of an acid, and the products prepared are then optionally treated with an acid or base.

9. Use of substances according to claim 1 as cartalysts in isocyanate chemistry.

10. Use of substances according to claim 1 for the preparation of dispersions in polyhydroxyl compounds which can be foamed with isocyanates.

11. Use of substances according to claim 1 for complexing metal salts or metal compounds.

12. Use of substances according to claim 1 as carbodiimidisation catalysts in the heterogeneous catalysis of polyisocyanates.

13. Use of substances according to claim 1 as reactive fillers and flameproofing agents in plastics.

14. Use of substances according to claim 1 which have a high ionic constituent as ion exchangers.

15. Use of substances according to claim 1 as anti-ageing agents in plastics.

16. Use of substances according to claim 1 as support materials for catalysts.

17. Use of those substances according to claim 1 which contain calcium hydroxide, lead hydroxide, lead oxides, aluminium hydroxides, magnesium hydroxide, zinc hydroxide and/or tin

hydroxide as catalysts for the synthesis of formose/sugar mixtures from high percentage aqueous formalin solutions.

**Revendications**

1. Acides azulmiques stabilisés par condensation avec des composés carbonylés, contenant éventuellement des additifs, ayant une teneur de 0,5 à 55% en poids en groupes ioniques de formule

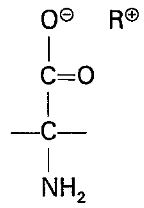

$(F_1)$

dans laquelle R représente l'hydrogène, l'ammonium, un équivalent d'une base azotée organique protonisée ou quaternisée, d'un cation sulfonium ou un équivalent d'un cation métallique, et une teneur de 0,5 à 15% en poids en groupes se formant par des réactions de décarboxylation, de formule

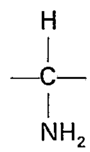

$(F_2)$

ainsi que les sels d'addition d'acides et les composés complexes de ces acides azulmiques stabilisés.

2. Procédé pour la préparation de produits selon la revendication 1, caractérisé en ce que l'on condense avec des composés carbonylés des acides azulmiques modifiés contenant éventuellement des additifs, ayant une teneur de 0,5 à 55% en poids de groupes ioniques de formule

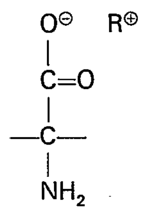

$(F_1)$

dans laquelle R est tel que défini ci-dessus, et une teneur de 0,5 à 15% en poids en groupes de formule

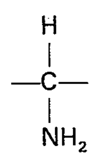

$(F_2)$

en milieu aqueux, éventuellement en présence d'additifs, et on traite éventuellement ensuite les produits préparés par un acide ou une base.

3. Procédé pour la préparation de produits selon la revendication 1, caractérisé en ce que l'on condense avec des composés carbonylés des sels d'addition d'acides ou des composés complexes d'acides azulmiques modifiés contenant éventuellement des additifs, ayant une teneur de 0,5 à 55% en poids en groupes ioniques de formule

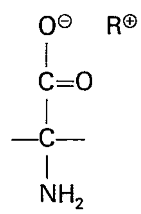

$(F_1)$

dans laquelle R est tel que défini ci-dessus, et une teneur de 0,5 à 15% en poids en groupes de formule

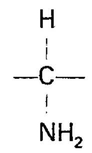

$(F_2)$

en milieu aqueux, éventuellement en présence d'additifs, et on traite éventuellement ensuite les produits préparés par un acide ou une base.

4. Procédé pour la préparation de produits selon la revendication 1, caractérisé en ce que l'on condense des acides azulmiques pratiquement exempts d'emplacements de défauts, éventuellement en présence d'additifs, avec des composés carbonylés en milieu aqueux, et on traite ensuite éventuellement les produits préparés par un acide ou une base.

5. Procédé pour la préparation de produits selon la revendication 1, caractérisé en ce que l'on polymérise l'acide cyanhydrique au moyen de catalyseurs basiques en conditions d'hydrolyse en milieu aqueux, éventuellement en présence d'additifs, et on condense ensuite les produits de réaction sans isolement préalable avec des composés carbonylés en milieu aqueux, éventuellement en présence d'additifs, et on traite ensuite éventuellement les produits préparés par un acide ou une base.

6. Procédé pour la préparation de produits selon la revendication 1, caractérisé en ce que l'on fait réagir des acides azulmiques modifiés ayant une teneur de 0,5 à 55% en poids en groupes ioniques de formule

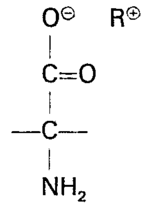

$(F_1)$

dans laquelle R est tel que défini ci-dessus, et une teneur de 0,5 à 15% en poids en groupes de formule

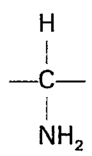

$(F_2)$

avec des bases en milieu aqueux, on remplace éventuellement le cation par traitement avec des sels métalliques et on condense ensuite avec des composés carbonylés en milieu aqueux, éventuellement en présence d'additifs, et on traite éventuellement ensuite les produits préparés par un acide ou une base.

7. Procédé pour la préparation de produits selon la revendication 1, caractérisé en ce que l'on traite des acides azulmiques modifiés par des acides organiques ou inorganiques en milieu aqueux, et ensuite on condense avec des composés carbonylés en milieu aqueux, éventuellement en présence d'additifs, et on traite ensuite éventuellement les produits préparés par un acide ou une base.

8. Procédé pour la préparation de produits selon la revendication 1, caractérisé en ce que l'on condense des acides azulmiques pratiquement exempts d'emplacements de défauts avec des composés carbonylés en milieu aqueux en présence de substances naturelles dégradables par hydrolyse et en présence d'acide et on traite ensuite éventuellement les produits préparés par un acide ou une base.

9. Utilisation de substance selon la revendication 1 comme catalyseurs dans la chimie des isocyanates.

10. Utilisation de substance selon la revendication 1 pour la préparation de dispersions dans des composés polyhydroxylés transformables en mousses par les isocyanates.

11. Utilisation de substance selon la revendication 1 pour complexer les sels métalliques ou les composés métalliques.

12. Utilisation de substance selon la revendication 1 comme catalyseurs de formation de carbodiimides dans la catalyse hétérogène des polyisocyanates.

13. Utilisation de substance selon la revendication 1 comme charges réactives et agents ignifugeants dans les matières plastiques.

14. Utilisation de substance selon la revendication 1 présentant une teneur élevée en composants ioniques comme échangeurs d'ions.

15. Utilisation de substance selon la revendication 1 comme agents de protection des matières plastiques contre le vieillissement.

16. Utilisation de substance selon la revendication 1 comme matériaux de support pour catalyseurs.

17. Utilisation de substance selon la revendication 1 contenant de l'hydroxyde de calcium, de l'hydroxyde de plomb, des oxydes de plomb, des hydroxydes d'aluminium, de l'hydroxyde de magnésium, de l'hydroxyde de zinc et/ou l'hydroxyde d'étain comme catalyseurs pour la synthèse de mélanges formose-sucre à partir de solutions aqueuses de formaldéhyde à fort pourcentage.